(19) Europäisches Patentamt
European Patent Office
Office européen des brevets

(11) EP 4 730 265 A1

(12) EUROPEAN PATENT APPLICATION

(43) Date of publication:
22.04.2026 Bulletin 2026/17

(21) Application number: 25210006.0

(22) Date of filing: 21.10.2025

(51) International Patent Classification (IPC):
G06T 9/00 (2006.01)        G06T 9/40 (2006.01)
H04N 19/597 (2014.01)

(52) Cooperative Patent Classification (CPC):
G06T 9/001; G06T 9/004; G06T 9/40; H04N 19/597

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.10.2024 US 202463709659 P

(71) Applicant: Comcast Cable Communications, LLC
Philadelphia, PA 19103 (US)

(72) Inventors:
• LASSERRE, Sébastien
Philadelphia, 19103 (US)
• TAQUET, Jonathan
Philadelphia, 19103 (US)

(74) Representative: V.O.
P.O. Box 87930
2508 DH Den Haag (NL)

(54) **CODING REGION ADAPTIVE HIERARCHICAL TRANSFORM (RAHT) PREDICTION MODE**

(57) Contextual information, for coding prediction modes, may be determined based on a ratio between a quantity of some neighboring nodes and a total quantity of neighboring nodes. A coder, based on the contextual information, may code the prediction modes for coding attribute information of current nodes.

FIG. 29

**Description**

CROSS-REFERENCE TO RELATED APPLICATIONS

This application claims the benefit of U.S. Provisional Application No. 63/709,659 filed on October 21, 2024. The above referenced application is hereby incorporated by reference in its entirety.

BACKGROUND

An object or scene may be described using volumetric visual data consisting of a series of points. The points may be stored as a point cloud format that includes a collection of points in three-dimensional space. As point clouds can get quite large in data size, transmitting and processing point cloud data may need a data compression scheme that is specifically designed with respect to the unique characteristics of point cloud data.

SUMMARY

The following summary presents a simplified summary of certain features. The summary is not an extensive overview and is not intended to identify key or critical elements. 1

Point cloud frames associated with content may comprise geometry information and attribute information (e.g., color or texture of the geometry). A coder (e.g., encoder and/or decoder) may use prediction modes for coding attribute information of nodes (e.g., RAHT nodes). An index may be determined based on a ratio between a quantity of some neighboring nodes (e.g., already-inter-predicted neighboring nodes) and a total quantity of neighboring nodes (e.g., already-intra-predicted and/or already-inter-predicted neighboring nodes). Contextual information may be selected based on the determined index. The coder may use the contextual information to code the prediction modes in a bitstream. By doing so, an improved coding may be achieved thereby enhancing compression performance.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows an example point cloud coding system.

FIG. 2 shows an example Morton order.

FIG. 3 shows an example scanning order.

FIG. 4 shows an example neighborhood of cuboids for coding the occupancy of a child cuboid.

FIG. 5 shows an example of a dynamic reduction function that may be used in dynamic Optimal Binary Coders with Update on the Fly (OBUF).

FIG. 6 shows an example method for coding occupancy of a cuboid using dynamic OBUF.

FIG. 7 shows an example of an occupied cuboid.

FIG. 8A shows an example cuboid corresponding to a TriSoup node.

FIG. 8B shows an example refinement to the TriSoup model.

FIG. 8C shows an example of coding a centroid residual value.

FIG. 9A shows an example of voxelization.

FIG. 9B shows an example of voxelization.

FIG. 10 shows an example method for encoding a point cloud.

FIG. 11 shows an example method for encoding attributes.

FIG. 12 shows an example method for decoding a point cloud.

FIG. 13A shows an example method for decoding attributes.

FIG. 13B shows an example of an inter-prediction attribute parametric model.

FIG. 13C shows an example of an inter-prediction attribute parametric model.

FIG. 14 shows an example method for determining attribute predictors.

FIG. 15 shows an example method for encoding attributes based on attribute predictors.

FIG. 16 shows an example method for encoding attributes based on attribute predictors.

FIG. 17 shows an example method for decoding attributes based on attribute predictors.

FIG. 18 shows an example method for decoding attributes based on attribute predictors.

FIG. 19 shows an example Region Adaptive Hierarchical Transform (RAHT) transformation.

FIG. 20 shows an example RAHT transformation.

FIG. 21 shows an example method for encoding attribute information for child RAHT nodes.

FIG. 22 shows an example method for decoding attribute information for child RAHT nodes.

FIG. 23 shows an example method for up-sampling the mean sums of attributes values of RAHT nodes.

FIG. 24 shows an example of method for encoding a selected prediction mode.

FIG. 25 shows an example of method for decoding a prediction mode.

FIG. 26 shows an example of method for encoding an indication of a selected prediction mode.

FIG. 27A shows an example of histogram plot of occurrence of intra prediction mode.

FIG. 27B shows an example of histogram plot of occurrence of inter prediction mode.

FIG. 28 shows an example of a probability of selection of intra prediction mode.

FIG. 29 shows an example method for decoding an indication of a selected prediction mode.

FIG. 30 shows an example method for determining at least one symbol representing prediction mode statistics.

FIG. 31 shows an example method for selecting a context.

FIG. 32 shows an example method for entropy encoding AC coefficient of a current RAHT node.

FIG. 33 shows a flowchart of an example method for entropy decoding AC coefficient of a current RAHT node.

FIG. 34 shows a block diagram of an example computer system in which examples of the present disclosure may be implemented.

FIG. 35 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. For assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

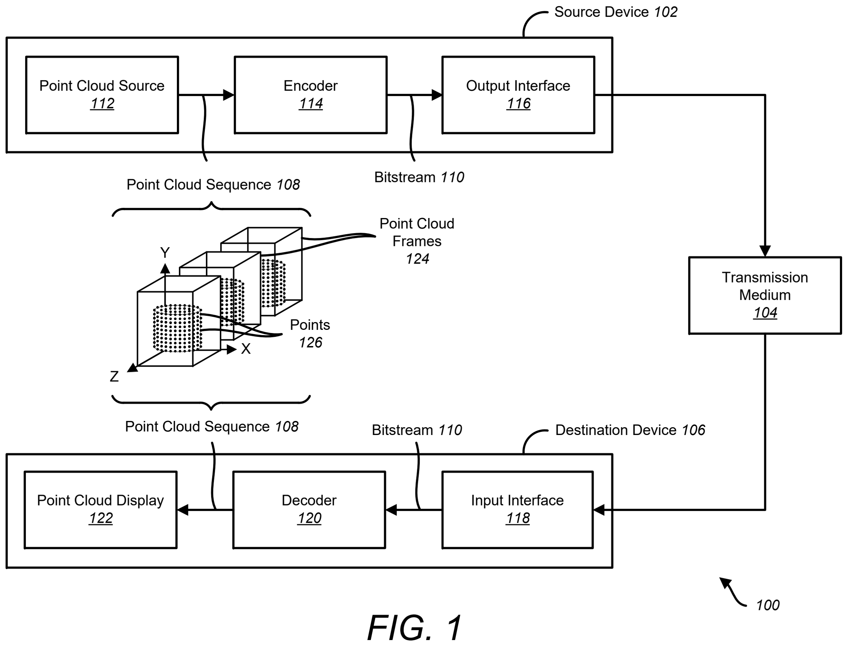

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel may be considered as a 3D extension of pixels corresponding to the 2D image grid coordinates. A voxel may be referred to as a volumetric pixel. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. The sub-grid center coordinates may correspond to voxels. The sub-grid center coordinates may be referred to as a voxelized grid. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating if/when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.62 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number (e.g., quantity) of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating if/when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. In/during standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume, may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, some maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary "1" in the 1-byte occupancy word. Unoccupied sub-cuboids may be each represented or indicated by a binary "0" in the 1-byte occupancy word. Occupied and un-occupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

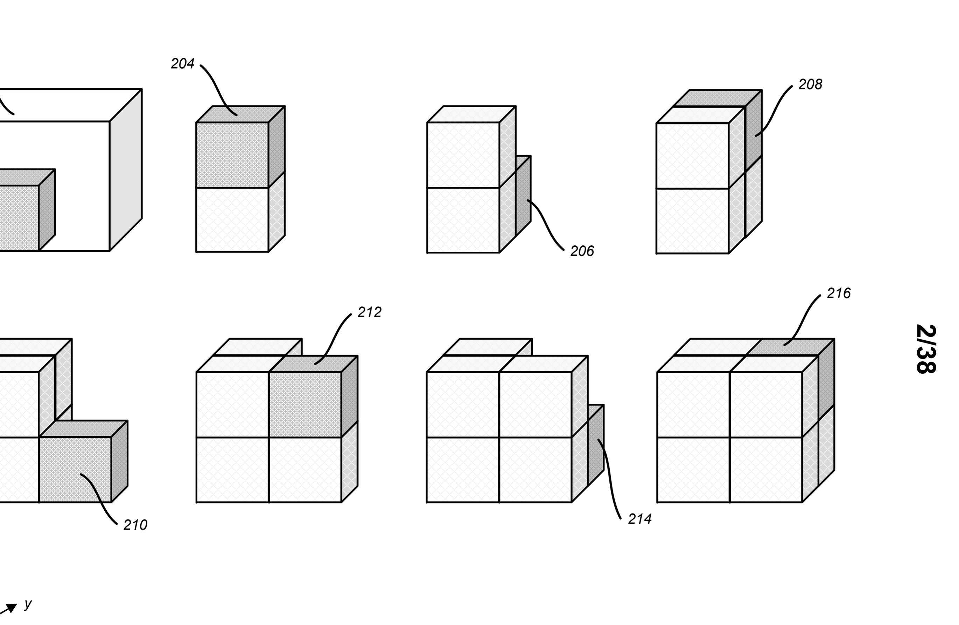

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

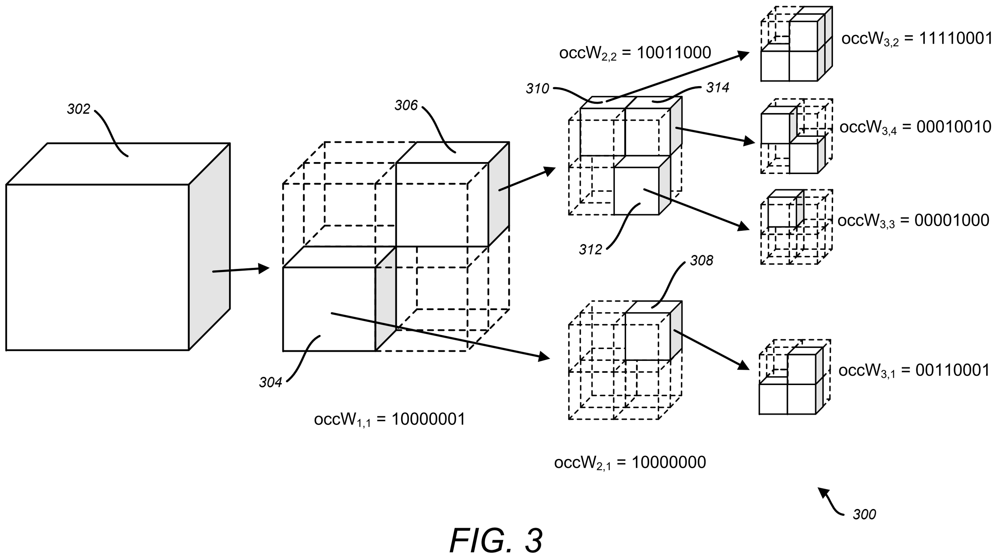

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. A plurality of cuboids (e.g., cubes) may be generated, for example, at each level of the occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order. The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

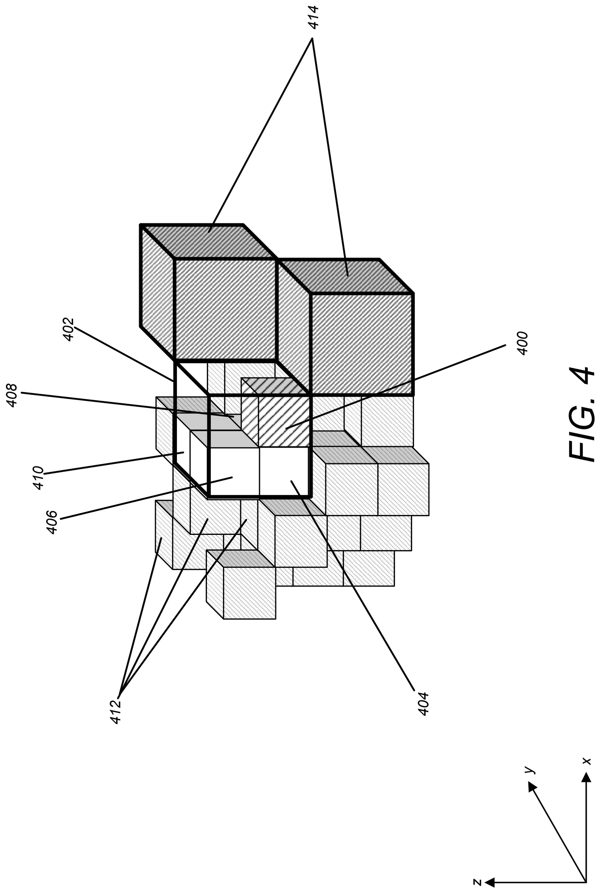

FIG. 4 shows an example neighborhood of cuboids for coding the occupancy of a child cuboid. More specifically, FIG. 4 shows an example neighborhood of cuboids with already-coded (e.g., previously-coded) occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration if/while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

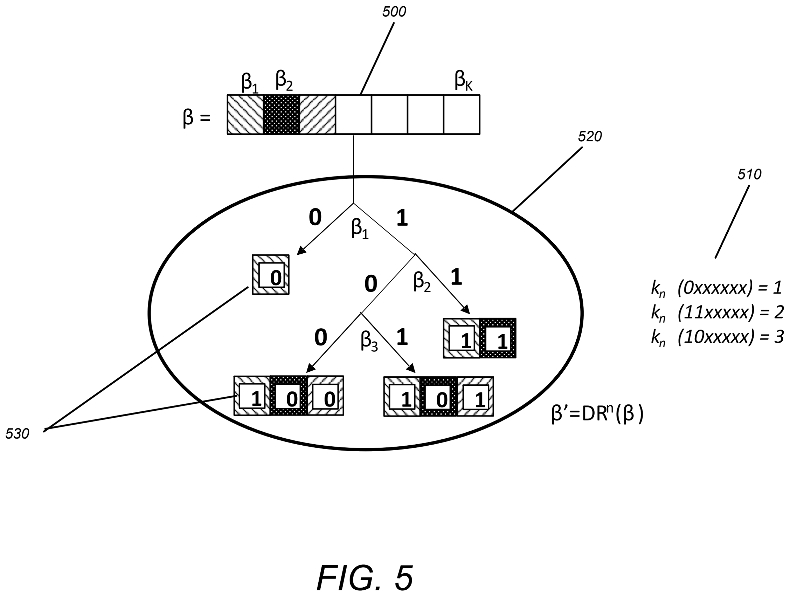

FIG. 5 shows an example of a dynamic reduction function DR that may be used in dynamic OBUF. The dynamic reduction function DR may be obtained by masking bits $\beta_j$ of occupancy configurations 500:

$$\beta = \beta_1 \dots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by:

$$\beta' - DR^n(\beta) - \beta_1 \dots \beta_{kn(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable $NV(\beta')$ for all dynamically reduced occupancy configurations $\beta' = DR^n(\beta)$. The corresponding number (e.g., quantity) of visits $NV(\beta^{V'})$ may be increased by one, for example, after each instance of coding of an occupancy bit based on an occupancy configuration $\beta^V$. If this number (e.g., quantity) of visits $NV(\beta^{V'})$ is greater than a threshold $th_V$,

$$NV(\beta^{V'}) > th_V$$

then the number (e.g., quantity) of unmasked bits $k_n(\beta)$ may be increased by one for all occupancy configurations $\beta$ being dynamically reduced to $\beta^{V'}$. This corresponds to replacing the dynamically reduced occupancy configuration $\beta^{V'}$ by the two new dynamically reduced occupancy configurations $\beta^{0'}$ and $\beta^{1'}$ defined by

$$\beta^{0'} = \beta^{V'}0 = \beta^V_1 \dots \beta^V_{kn(\beta)}0 \text{ and } \beta^{1'} = \beta^{V'}1 = \beta^V_1 \dots \beta^V_{kn(\beta)}1.$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero:

$$NV(\beta^{0'}) = NV(\beta^{1'}) = 0. \qquad (I)$$

At the start of the coding, the initial number (e.g., quantity) of visits for the initial dynamic reduction function $DR^0$ may be set to

$$NV(DR^0(\beta)) = NV(0) = 0,$$

and the evolution of NV on dynamically reduced occupancy configurations may be entirely defined.

The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$. The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$, for example, if a dynamically reduced occupancy configuration $B^{Y'}$ is replaced by the two new dynamically reduced occupancy configurations $\beta^{0'}$ and $\beta^{1'}$

$$\mathrm{LUT}[\beta^{0'}] = \mathrm{LUT}[\beta^{1'}] = \mathrm{LUT}[\beta^{V'}], \qquad \text{(II)}$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR^0(\beta)$. The replacement of the dynamically reduced to $\beta^{V'}$ by $\beta^{0'}$ and $\beta^{1'}$ may correspond to growing the tree $T^n$ from the leaf node associated with $\beta^{V'}$, for example, by attaching to it two new nodes associated with $\beta^{0'}$ and $\beta^{1'}$. The tree $T^{n+1}$ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array $NV[\beta']$ and the $LUT[\beta']$ of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, in/during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_i$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

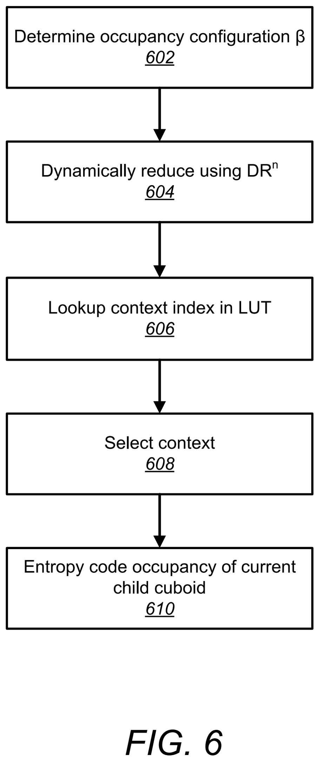

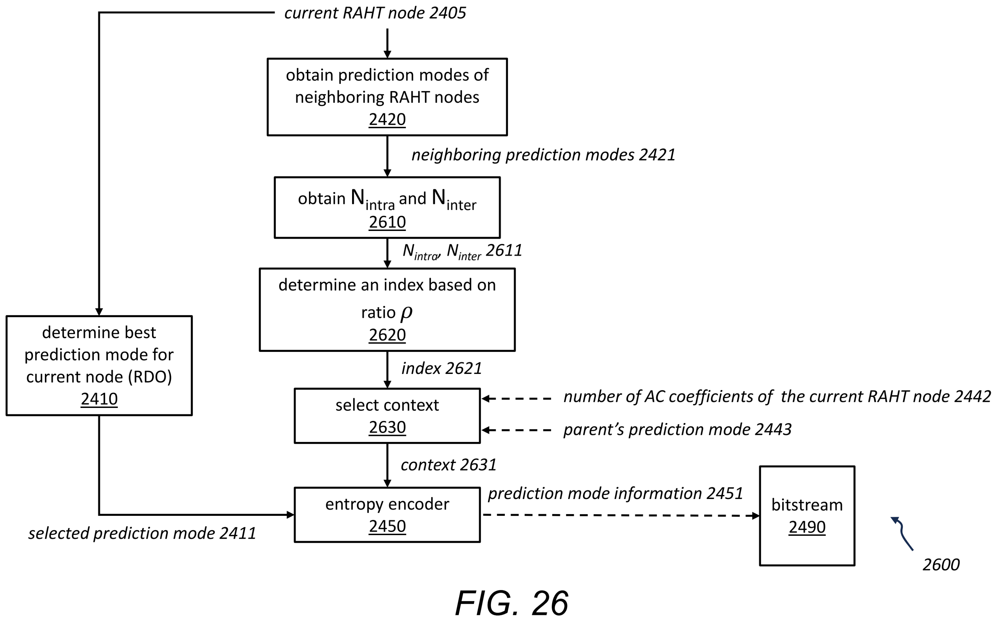

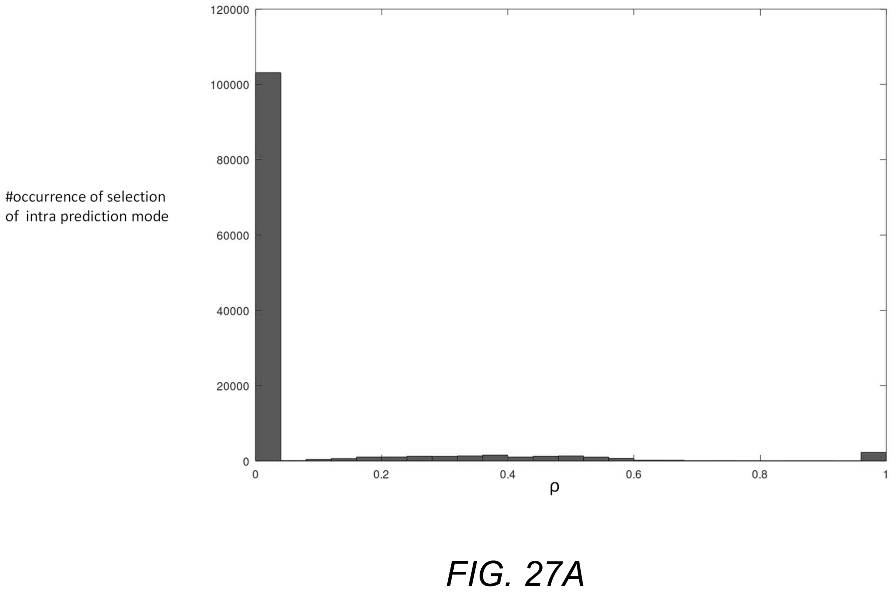

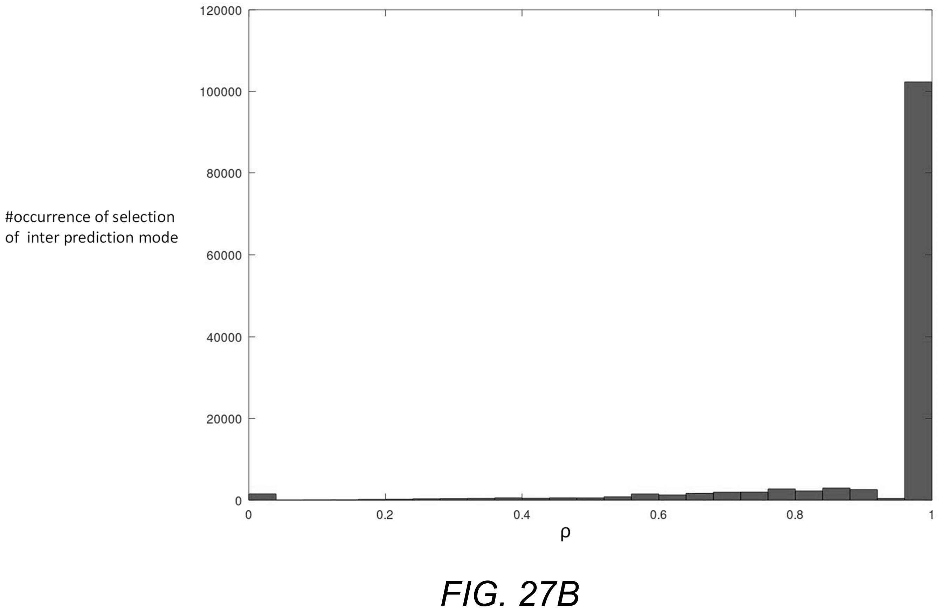

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 2600 in FIG. 26, and/or an example computing device 2730 in FIG. 27.

At step 602, an occupancy configuration (e.g., occupancy configuration $\beta$) of the current child cuboid may be determined. The occupancy configuration (e.g., occupancy configuration $\beta$) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function $DR^n$. For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index $LUT[\beta']$ in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index $LUT[\beta']$, for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

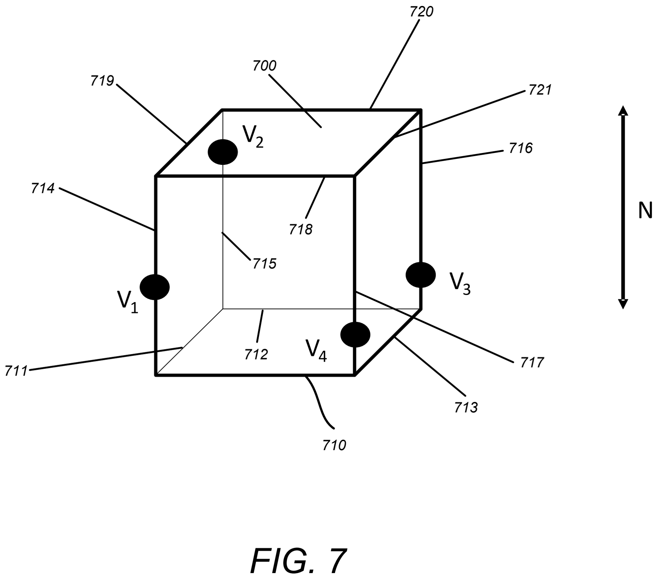

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. A context index LUT[$\beta_{TS}'$] may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position ($p_k$) (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N. The TriSoup edge of length N may be uniformly divided into $2^{N_b}$ quantization intervals. By doing so, the TriSoup vertex position ($p_k$) may be represented by $N_b$ bits ($p_k^j, j=1, ..., N_b$) that may be individually coded by the dynamic OBUF scheme as well as the bit corresponding to the presence flag ($s_k$). The neighborhood configuration $\beta_{TS}$, the OBUF reduction function $DR^n$, and the context index may depend on the nature, characteristic, and/or property of the coded bit (e.g., a presence flag ($s_k$), a highest position bit ($p_{k1}$), a second highest position bit ($p_{k2}$), etc.) of the coded bit (e.g., presence flag ($s_k$), highest position bit ($p_k^1$), second highest

position bit ($p_k^2$), etc.). There may practically be several dynamic OBUF schemes, each dedicated to a specific bit of information (e.g., presence flag ($s_k$) or position bit ($p_k^j$)) of the vertex information.

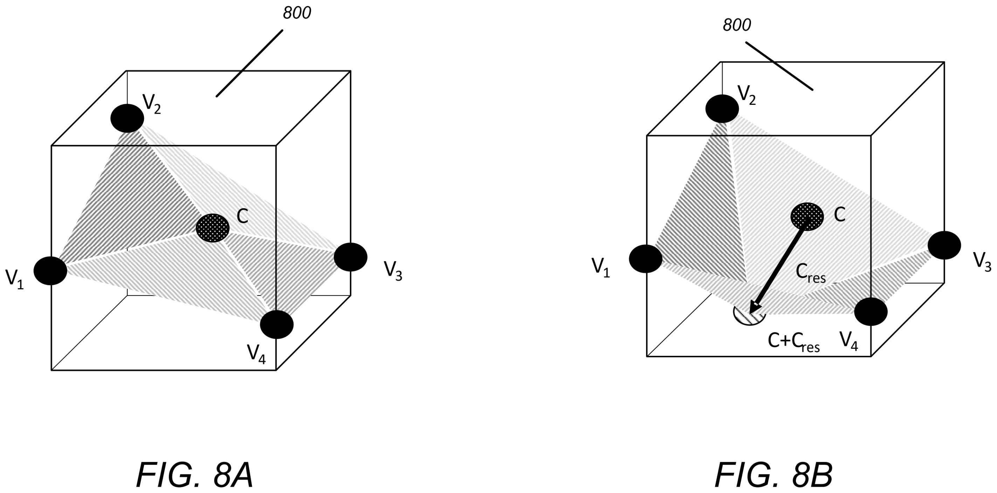

FIG. 8A shows an example cuboid 800 (e.g., a cube) corresponding to a TriSoup node. A cuboid 800 may correspond to a TriSoup node with a number/quantity K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C, V_2V_3C, ..., V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value. A centroid residual value $C_{res}$ may be coded into the bitstream. A centroid residual value $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

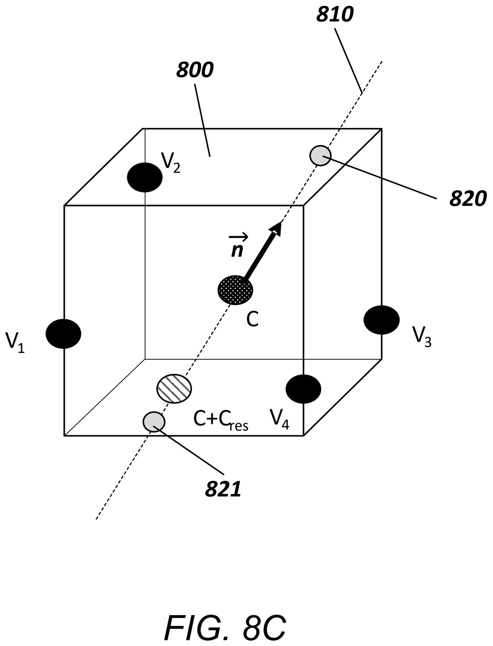

FIG. 8C shows an example of encoding a centroid residual value. An encoder may encode, for example, a centroid residual value $C_{res}$ into a bitstream. An adjusted centroid $C+C_{res}$ may be used instead of the centroid C for generating TriSoup triangles of a cuboid 800 (corresponding to a TriSoup node), for example, corresponding to a portion of a point cloud. The triangles may be generated based on the adjusted centroid $C+C_{res}$ and adjacent pairs of vertices of an ordering of the vertices $V_1$-$V_4$ (e.g., as described in FIG. 8A). The TriSoup triangles of the cuboid 800 may be voxelized (e.g., at the decoder), for example, to generate voxels representing (or modeling) the portion, of the point cloud, corresponding to the cuboid 800. The adjusted centroid $C+C_{res}$ may be used instead of the centroid C, for example, as a pivoting vertex for the triangles. A unitary vector $\vec{n}$ (e.g., also referred to as a unit vector or as a normalized vector) may be determined as a (normalized) mean and/or as a normalization of normal vectors to the triangles ($V_1V_2C, V_2V_3C, ..., V_KV_1C$). The triangles ($V_1V_2C, V_2V_3C, ..., V_KV_1C$) may be constructed by centroid C and pairs of the vertices of the cuboid 800, for example, by pivoting around the centroid C (e.g., as described in FIG. 8A). The unit vector $\vec{n}$ may be the normalized vector of the following mean of cross-products (e.g., representing areas of the triangles): $(\overrightarrow{V_1C} \times \overrightarrow{V_2C} + \overrightarrow{V_2C} \times \overrightarrow{V_3C} + ... + \overrightarrow{V_KC} \times \overrightarrow{V_1C})/K$. The unit vector $\vec{n}$ may be determined by dividing the mean vector (n) by the norm (or length) of the mean vector (i.e., $\vec{n} = n / \|n\|$).

A value resulting from each cross product is equal to an area of a parallelogram formed by the two vectors in the cross product. Therefore, the value may be representative of an area of a triangle formed by the two vectors because the area of the triangle is equal to half of the value. The unit vector $\vec{n}$ may be indicative of the direction normal to a local surface that is represented by the point cloud, for example, since the unit vector $\vec{n}$ indicates a direction of the triangles (e.g., TriSoup triangles) representing (e.g., modeling) the portion of the point cloud. A one-component residual $\alpha_{res}$ along the line (C, $\vec{n}$) 810 may be coded (e.g., encoded) instead of a 3D centroid residual value $C_{res}$, for example, to increase (e.g., maximize) the effect of the centroid residual value $C_{res}$ and/or to decrease (e.g., minimize) its coding cost. The 3D centroid residual value $C_{res}$ may be, for example, the one-component residual $\alpha_{res}$ multiplied by the unitary vector $\vec{n}$ (e.g., $C_{res} = \alpha_{res}\vec{n}$).

The encoder may determine the residual value $\alpha_{res}$. The encoder may determine the residual value of $\alpha_{res}$, for example, as the intersection between the current point cloud and the line (C, $\vec{n}$), which is along the same direction of the normalized vector $\vec{n}$. A set of points, of the portion of the point cloud, closest (e.g., within a threshold distance and/or a threshold number of/quantity of points) to the line may be determined. The set of points may be projected on the line and the residual value $\alpha_{res}$ may be the mean component along the line of the projected points. The mean may be a weighted mean, for example, whose weights may depend on a distance of the set of points from the line. A point from the set closer to the line may, for example, have a higher weight than another point from the set farther from the line.

The residual value $\alpha_{res}$ may be quantized. The residual value $\alpha_{res}$ may be quantized, for example, by a uniform quantization function that may have a quantization step similar to the quantization precision of the TriSoup vertices $V_k$. The quantization error may be uniform over all vertices $V_k$ and/or $C+C_{res}$ such that the local surface may be uniformly approximated.

The residual value $\alpha_{res}$ may be binarized and/or coded (e.g., entropy coded) into the bitstream. The residual value $\alpha_{res}$ may be binarized and/or coded (e.g., entropy coded) into the bitstream, for example, by using a typical unary-based (coding) scheme. The residual value $\alpha_{res}$ may be coded, for example, using a set of flags. A flag $f_0$ may be coded, for example, to indicate if the residual value $\alpha_{res}$ is equal to zero. If the flag $f_0$ indicates the residual value $\alpha_{res}$ is zero, no further syntax elements may be needed. If $\alpha_{res}$ is not equal to zero, a sign bit may be coded and/or the residual magnitude $|\alpha_{res}|$-1 may be coded using an entropy code. The residual magnitude may be coded, for example, using a unary scheme that may

code successive flags $f_i$ ($i \geq 1$) indicating if the residual value magnitude $|\alpha_{res}|$ is equal to 'i'. A binary entropy coder may binarize the residual value $\alpha_{res}$ into the flags $f_i$ ($i \geq 0$). A binary entropy coder may entropy code the binarized residual value and/or the sign bit.

Compression of the residual value $\alpha_{res}$ may be improved. Compression of the residual value $\alpha_{res}$ may be improved, for example, by determining bounds as shown in FIG. 8C. The line (C, $\vec{n}$) 810 may intersect the current cuboid 800 (corresponding to a TriSoup node) at two bounding points 820 and 821. The encoder may ensure that the point $C+C_{res}$ (e.g., the adjusted centroid vertex) is located between the two bounding points 820 and 821. By ensuring that the point $C+C_{res}$ is located between the two bounding points 820 and 821, this implies bounds on the (quantized) residual value $\alpha_{res}$ such that the (quantized) residual value $\alpha_{res}$ may belong to an integral interval *[m, M]*, where $m \leq 0 \leq M$. Some bits of the binarized residual value $\alpha_{res}$ may be inferred. $A_{res}$ may be necessarily equal to zero, for example, if *m=M=0*. The sign bit may be necessarily positive, for example, if *m=0<M*. The magnitude of the residual value $|\alpha_{res}|$ may be bounded by either |*m*| or *M* such that the magnitude may be coded by a truncated unary (coding) scheme that may infer the value of the last of successive flags $f_i$ ($i \geq 1$), for example, if the residual value $\alpha_{res}$ is not equal to zero and its sign is known.

The coder (e.g., the binary entropy coder) used to code the binarized residual value $\alpha_{res}$ may be a context-adaptive binary arithmetic coder (CABAC). The probability model (or context or entropy coder) used to code at least one bit ($f_i$ or sign bit) of the binarized residual value $\alpha_{res}$ may be updated, for example, depending on the value of the at least one bit ($f_i$ or sign bit) of the binarized residual value $\alpha_{res}$. The probability model of the coder (e.g., the binary entropy coder) may be determined, for example, based on contextual information. The contextual information may comprise the values of the bounds m and M, the location of vertices $V_k$, and/or the size of the TriSoup node (e.g., the cuboid 800). The selection of the coder (or the selection of the probability model of the coder) may be performed by a dynamic OBUF scheme that may use the contextual information described herein as entry (e.g., inputs).

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

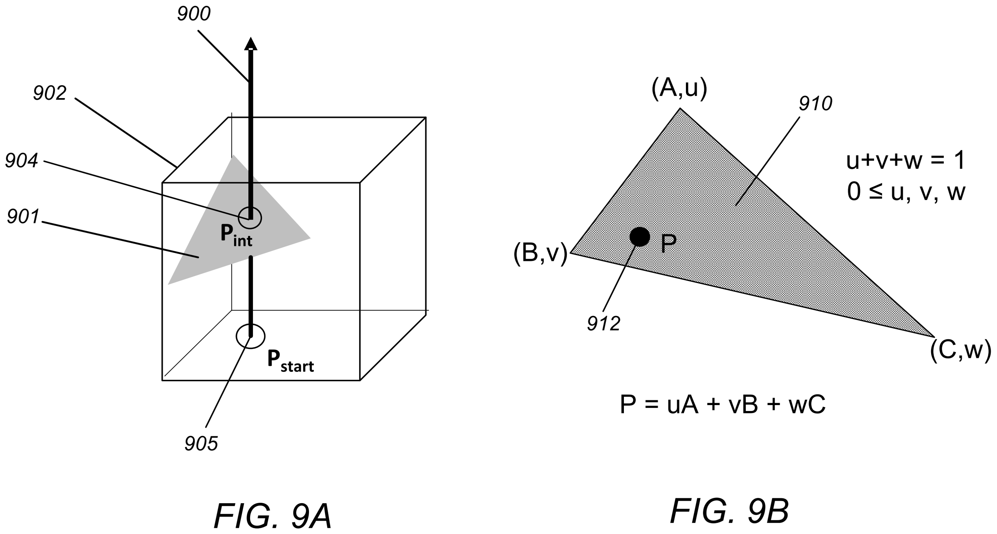

FIG. 9A shows an example of voxelization using ray tracing. Ray-triangle intersection algorithms, such as the Möller-Trumbore algorithm, may take advantage of launching rays, for example, to determine whether rays intersect with TriSoup triangles and if so, at what points of the TriSoup triangles. Rays may be launched from integral coordinates that correspond to the centers of voxels. As shown in FIG. 9A, rays, for example, ray 900 may be launched substantially parallel to one of the three coordinate axes of the 3D space, starting from integral coordinates (sometimes referred to as integer coordinates) such as an origin point 905 (shown as origin or starting point $P_{start}$ in FIG. 9A).

An intersection point 904 (shown as $P_{int}$ in FIG. 9A), if any, between ray 900 and a TriSoup triangle 901 belonging to a cube 902, corresponding to a TriSoup node, may be rounded (or, e.g., quantized) to obtain a decoded point corresponding to a voxel. A ray, for example, launched substantially parallel to a coordinate axis in 3D space, may intersect a TriSoup triangle. The ray may intersect the TriSoup triangle, for example, if and only if the projection, along the ray direction, of the center of a voxel belongs to the TriSoup triangle. In other words, the ray may be determined to intersect the TriSoup triangle if the point of intersection corresponds to the center of the voxel. This intersection may be determined, for example, by using a ray-triangle intersection algorithm (e.g., tracing or ray casting technique) such as the Möller-Trumbore algorithm to generate voxels representing the triangle.

Ray tracing techniques such as the Möller-Trumbore algorithm is based on generating, with respect to a triangle, barycentric coordinates of points of intersection between rays and a plane of the triangle. Then, points of the triangle may be determined from the barycentric coordinates.

FIG. 9B shows an example of voxelization using barycentric coordinates. More particularly, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). The ray may be launched, for example, substantially parallel to one of the three coordinate axes in 3D space. In some examples, this intersection point 912 may be uniquely represented as a sum of the three vertices of TriSoup triangle 910:

$$P = uA + vB + wC$$

under the condition u + v + w = 1. Therefore, any point P of the plane (containing TriSoup triangle 910) has unique coordinates (u,v,w) in the barycentric coordinate system. A point with barycentric coordinates (u,v,w) may include an ordered triple of numbers/quantities u, v, and w. A point with barycentric coordinates (u,v,w) that sum to 1 (e.g., u + v + w = 1) may be referred to as homogeneous barycentric coordinates and/or normalized barycentric coordinates. The barycentric coordinates of the intersection point with respect to TriSoup triangle 910 may be determined using algorithms, for example, the Möller-Trumbore algorithm.

By converting points with Cartesian coordinates in 3D space to homogeneous barycentric coordinates, the three vertices A, B, C of TriSoup triangle 910 may comprise respective barycentric coordinates A(1,0,0), B(0,1,0) and C(0,0,1).

The convex hull (e.g., the TriSoup triangle 910) of the three vertices A, B, and C may be equal to the set of all points such that the barycentric coordinates u, v, and w is each greater than or equal to zero:

$$\leq u, v, w$$

Therefore, the intersection point may be determined to belong to TriSoup triangle 910, for example, based on the intersection point having barycentric coordinates with an ordered triple of values that are each greater than or equal to zero. Relatedly, if at least one of barycentric coordinates (i.e., one of u, v, or w) is negative or less than 0, then the intersection point may be determined to not belong to TriSoup triangle because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

Attribute coding may comprise a process to code attributes of a current point cloud. The attributes may comprise, for example, attributes associated with the geometry of the current point cloud. Attribute coding may be performed (e.g., globally) on the decoded (e.g., reconstructed) geometry of a current point cloud. Global coding may induce high memory traffic and/or footprint as well as high computation complexity. A two-pass encoding/decoding process may be required in at least some applications. In the two-pass encoding/decoding process, encoding/decoding may be performed on the attributes, for example, after completion of geometry encoding/decoding. Such two-pass encoding/decoding may induce even higher memory traffic and/or footprint as well as overall latency, for example, before outputting geometry and attributes of a first point of the decoded point cloud.

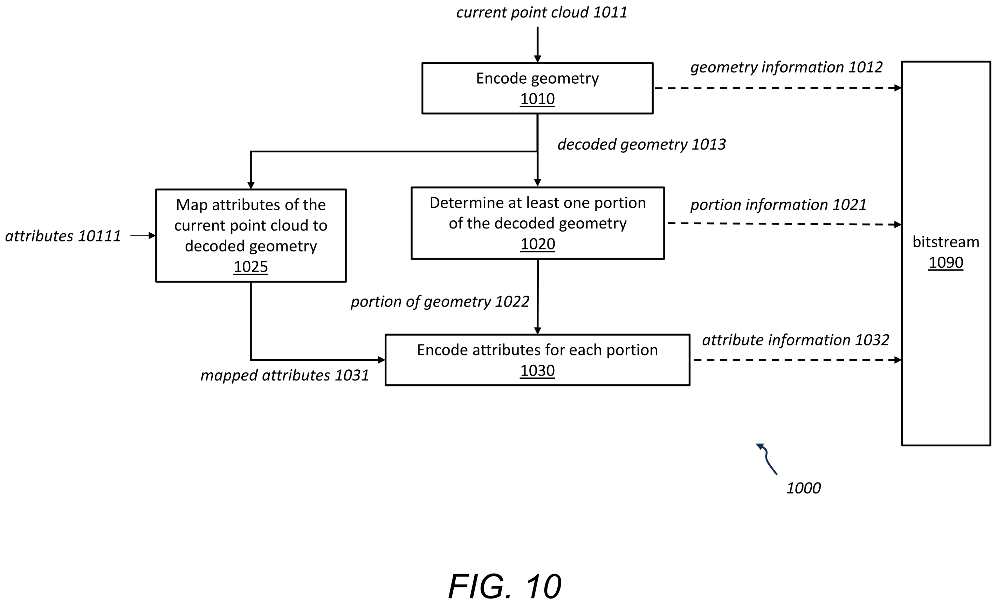

Local coding of attributes may be enabled. For example, Attribute Coding Units (ACU) has been introduced to enable local coding of attributes. ACU may be determined by dividing (e.g., segmenting) an overall decoded geometry (e.g., decoded geometry 1013 of FIG. 10) of a current point cloud (e.g., current point cloud 1011 of FIG. 10) into a set of ACUs. Each ACU may comprise (e.g., contain) a portion of geometry of the decoded geometry. The portion of geometry may indicate 3D positions in the 3D space of a subset of points of the decoded geometry (e.g., as decoded by a decoder or encoded and then decoded by an encoder). Points of the decoded geometry may refer to voxels, as described herein.

The attribute coding (e.g., encoding/decoding) may be localized to portions of the overall decoded geometry, and the attribute coding of each ACU (associated with each portion of geometry of the current point cloud) may be processed locally. Local attribute coding may bring advantages such as reduced memory traffic and footprint as well as computation complexity, for example, compared to global attribute coding.

Local attribute coding may be realized in various ways. For example, the geometry of the current point cloud may be restricted to a subset of nodes of the occupancy tree, and the restricted geometry and the associated attributes may be encoded/decoded locally by segmenting the restricted geometry into ACUs. For example, the 3D space encompassing a point cloud may be split into regions defined by subsets of nodes of the occupancy tree. The geometry of a (e.g., each) region of the 3D space may be encoded to obtain a part of the decoded geometry of the current point cloud, and this part may be segmented into a set of ACUs that are attribute encoded. For example, the geometry of a first region of the 3D space may be encoded to obtain a first part of the decoded geometry of the current point cloud. The first part may be segmented into a first set of ACUs that are attribute encoded. The geometry of a second region of the 3D space may be encoded to obtain a second part of the decoded geometry of the current point cloud. The second part may be segmented into a second set of ACUs that are attribute encoded. The memory footprint and traffic may be limited within a few regions, for example, due to neighborhood prediction between regions. The latency of point cloud codec may be reduced to the time needed for encoding geometry and attributes of a few regions. Smaller regions may lead to smaller memory footprint and traffic as well as shorter latency. The regions may be slices (also referred to as bricks) of a volume encompassing/containing the point cloud.

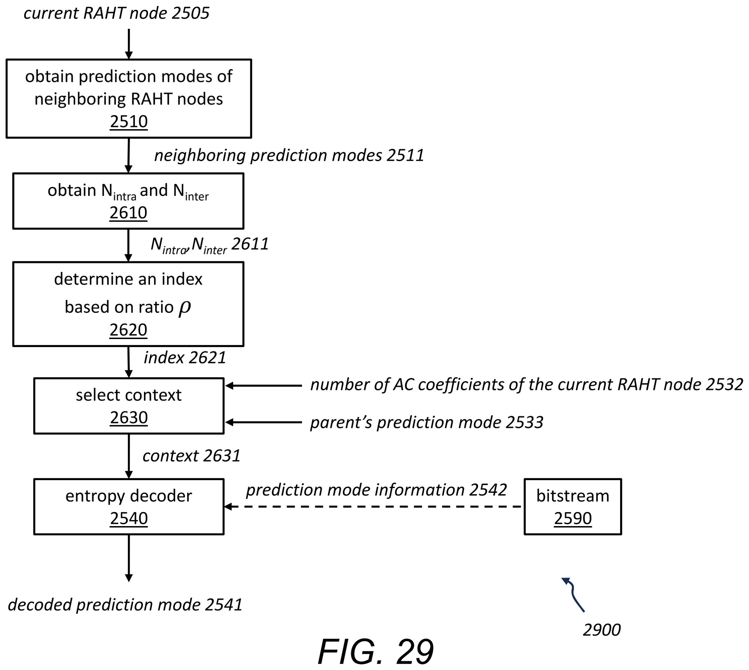

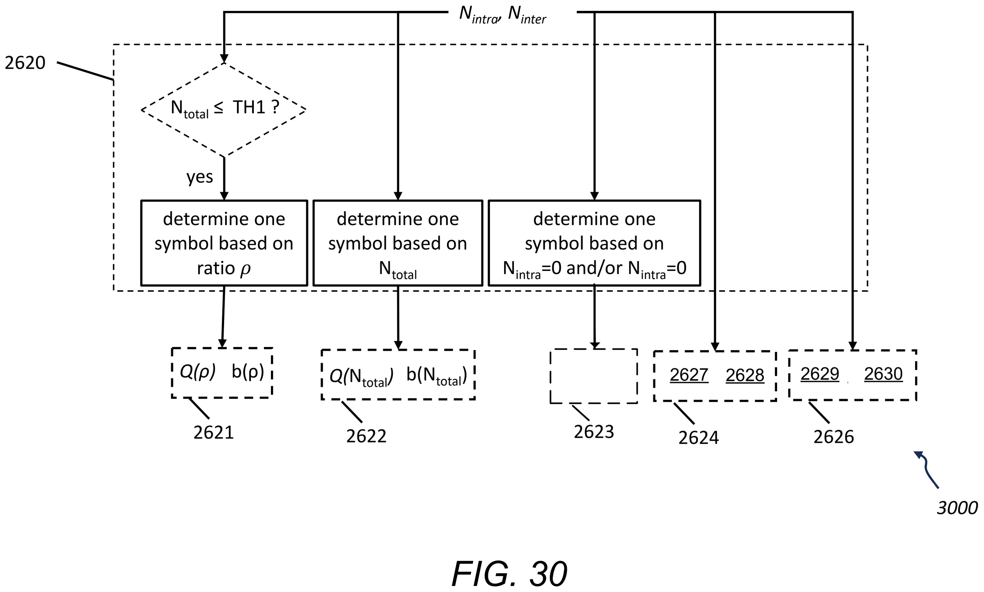

FIG. 10 shows an example method for encoding a point cloud. More specifically, FIG. 10 shows an example process 1000 of a method for encoding geometry and attributes of a current point cloud 1011. One or more steps of the example process 1000 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1010-1030 may represent components within the encoder. The current point cloud 1011 may be a point cloud frame of a sequence of point cloud frames of a dynamic point cloud.

At step 1010, an encoder may encode geometry. The encoder may encode geometry of the current point cloud. The encoder may encode geometry information 1012 representative of the geometry of the current point cloud 1011. The encoder may encode geometry information 1012 representative of the geometry of the current point cloud 1011, for example, into a bitstream 1090. The encoder may obtain a decoded (e.g., reconstructed) geometry 1013 of the point cloud 1011 as discussed herein.

At step 1020, the encoder may determine at least one portion (e.g., portion of geometry 1022) of the decoded geometry 1013. Each portion of geometry 1022 may comprise a subset of points of the decoded geometry 1013. For example, each portion of geometry 1022 may comprise positions (e.g., 3D positions) in the 3D space of the subset of points. In some examples, the decoded geometry 1013 may be divided (e.g., segmented) into a set of ACUs, and each ACU of the set of ACUs may comprise a respective portion of geometry 1022 of the decoded geometry 1013.

The encoder may encode portion information 1021. The encoder may encode portion information 1021, for example, in the bitstream 1090. The portion information 1021 may be part of the attribute information 1032. The portion information 1021 may indicate segmentation selections of the decoded geometry 1013 into the set of ACUs. For example, the portion information 1021 may indicate how the decoded geometry 1013 is segmented into the set of ACUs.

Attributes of the current point cloud 1011 (e.g., attributes associated with the points of the current point cloud) may be coded. Attributes of the current point cloud 1011 may be coded, for example, after the coding (e.g., encoding and/or decoding) of the geometry (e.g., underlying geometry) has been performed. The encoder may have direct access to the attribute values associated with the decoded geometry. The encoder may have direct access to the attribute values associated with the decoded geometry, for example, if the geometry coding is a lossless coding. A lossless coding may be performed, for example, by using an octree scheme. The attributes associated with each point of the current point cloud may be the attributes associated with the corresponding point of the decoded geometry 1013.

The decoded geometry 1013 may differ from the geometry of the current point cloud. The decoded geometry 1013 may differ from the geometry of the current point cloud, for example, if the geometry coding is a lossy coding. A lossy coding may be performed, for example, by using a TriSoup scheme. The attributes 10111 of the current point cloud 1011 may be mapped, by the encoder and from the geometry of the current point cloud 1011, to the decoded geometry 1013. The attributes 10111 of the current point cloud 1011 may be mapped to the decoded geometry 1013, for example, to determine mapped attributes 1031 associated with the decoded geometry 1013. For example, the mapped attributes 1031 may be assigned to each point of the decoded geometry 1013.

At step 1025, the encoder may map attributes of the current point cloud to decoded geometry. The encoder may determine mapped attributes 1031 of the decoded geometry 1013, for example, by mapping the attributes 10111 of the current point cloud 1011 to the decoded geometry 1013.

As discussed herein, attributes may indicate a property of a point's visual appearance such as texture, color, material, transparency, reflectance, time stamp, velocity, etc. For attributes that are colors, this attribute mapping performed by the encoder may be known as a recoloring process. The attribute mapping for attributes that are colors may be known as a recoloring process, for example, because the colors of the original geometry are used to color (e.g., recolor) the decoded geometry.

Mapped attributes may be determined based on various methods. In some examples, attributes may comprise colors and the mapped attributes may be determined based on recoloring the attributes. In some examples, mapped attributes may be determined based on a k nearest neighbor (KNN) search algorithm. The KNN search algorithm may use, for example, a space partitioning algorithm such as a k-dimensional (KD, or k-d) Tree search, a Ball/metric Tree search, brute force search, etc. The KNN search algorithm may be used, for example, to determine nearest points from the geometry of the current point cloud 1011 to the decoded geometry 1013. For example, a mapped attribute of a point of the decoded geometry 1013 may be the average attribute values associated with the nearest points of the current point cloud 1011 relative to the point of the decoded geometry 1013. In some examples, the decoded geometry 1013 may be the same as the geometry of the current point cloud 1011. The decoded geometry 1013 may be the same as the geometry of the current point cloud 1011, for example, if/when the geometry compression is lossless. In these examples, the attribute mapping may associate attributes of each point of the current point cloud 1011 to the same point of the decoded geometry 1013.

At step 1030, the encoder may encode attributes for each portion of geometry 1022. The encoder may encode the mapped attributes 1031 associated with each portion of geometry 1022, for example, in the bitstream 1090. The attributes of points associated with a portion of geometry 1022 may be encoded. The attributes of points associated with a portion of geometry 1022 may be encoded, for example, before encoding the attributes of points belonging to another portion of the decoded geometry 1013. Attribute encoding may be performed locally. The encoder may encode attribute information 1032 representing the encoded attributes.

Attributes associated with portions of the decoded geometry 1013 may be encoded based on a selected order. For example, attributes associated with portions of the decoded geometry 1013 may be encoded based on a scanning order. The encoder may distinguish between already encoded/decoded portions of the decoded geometry 1013 (e.g., portions of the decoded geometry 1013 whose attributes have been encoded/decoded) and other portions of the decoded geometry 1013 (e.g., portions of the decoded geometry 1013 whose attributes have not been encoded/decoded).

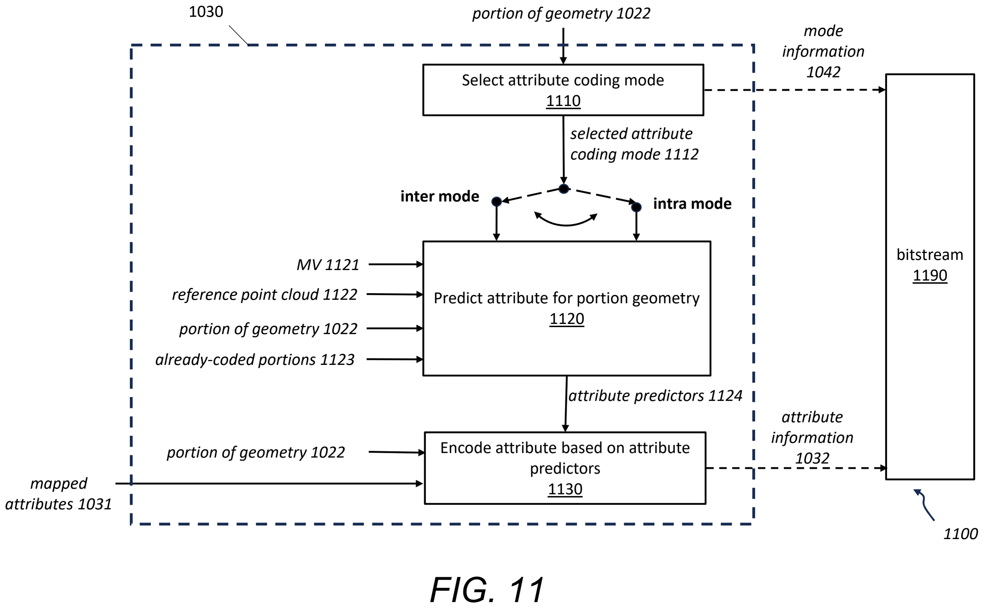

FIG. 11 shows an example method for encoding attributes. More specifically, FIG. 11 shows an example process 1100 of a method for encoding attributes associated with a portion of geometry 1022 of the decoded geometry 1013. One or more steps of the example process 1100 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1110-1130 may represent components within the encoder.

Process 1100 may comprise operations of step 1030 that may encode mapped attributes 1031 associated with the portion of geometry 1022 as attribute information 1032. The step 1030 may encode mapped attributes 1031 associated with the portion of geometry 1022 as attribute information 1032, for example, in a bitstream 1190.

At step 1110, an encoder may select an attribute coding mode. An encoder may select an attribute coding mode 1112 for encoding the attributes of the portion of geometry 1022. The encoder may encode mode information 1042 that indicates the selected attribute coding mode 1112. The encoder may encode mode information 1042 that indicates the selected attribute coding mode 1112, for example, in the bitstream 1190. For example, the attribute information 1032 encoded in the bitstream 1190 may comprise the mode information 1042.

The selection step 1110 of the attribute coding mode 1112 may be performed in implementations of point cloud coding. In some implementations of point cloud coding, the selection step 1110 of the attribute coding mode 1112 by the process 1100 may be performed by a Rate-Distortion Optimization (RDO). In the RDO, the attribute coding mode 1112 may be selected as being a candidate attribute coding mode with a smallest cost (e.g., $C_{mode}$) from a list of candidate attribute coding modes. The cost (e.g., $C_{mode}$) of a candidate attribute coding mode may be determined (e.g., computed) as a Lagrange cost. The Lagrange cost may be a combination of a bitrate (e.g., $R_{mode}$) and a distortion (e.g., $D_{mode}$). The Lagrange cost may be determined, for example, based on $C_{mode} = D_{mode} + \lambda^*R_{mode}$, where $\lambda>0$ and is a fixed Lagrange parameter. The bitrate (e.g., $R_{mode}$) may be obtained for a candidate attribute coding mode as being a sum of bitrates caused by coding both the mode information 1042 and the attribute information 1032 in the bitstream 1190. The distortion (e.g., $D_{mode}$) may be obtained for the candidate attribute coding mode by comparing the attributes associated with portion of geometry 1022 with decoded attributes associated with the decoded portion of geometry 1222. The distortion (e.g., $D_{mode}$) may be obtained based on the candidate attribute coding mode.

RDO may put a plurality of (e.g., many) candidate attribute coding modes in competition. The plurality of candidate attribute coding modes may (e.g., usually) include at least one inter-prediction-based attribute coding mode and at least one intra-prediction-based attribute coding mode. An inter-prediction-based attribute coding mode may be an attribute coding mode using attribute predictors obtained based on an inter-prediction mode. An intra-prediction-based attribute coding mode may be an attribute coding mode using attribute predictors obtained based on an intra-prediction mode.

At step 1120, the encoder may determine (e.g., predict) attribute(s) for portion of geometry. The encoder may determine attribute predictors 1124 of attributes associated with the portion of geometry 1022. For example, for each point of the portion of geometry 1022, one respective attribute predictor may be determined for predicting the attribute associated with that point.

At step 1120, the encoder may determine attribute predictors 1124 based on a selected attribute coding mode. For example, if/when an inter-prediction-based attribute coding mode is selected, the encoder may determine/obtain attribute predictors 1124 from an inter-prediction attribute parametric model. The inter-prediction attribute parametric model may be based on a Motion Vector (MV) field 1121, reference point cloud (e.g., for attributes, i.e., reference point cloud for attributes) 1122, and the portion of geometry 1022. Parameters of the inter-prediction attribute parametric model may be determined/set based on (e.g., by) the selected attribute coding mode 1112. For example, if/when an intra-prediction-based attribute coding mode is selected, the encoder may determine attribute predictors 1124 from an intra-prediction attribute parametric model. The intra-prediction attribute parametric model may be based on at least one already-coded (e.g., already-decoded) portion 1123 of the decoded geometry 1013. Parameters of the intra-prediction attribute parametric model may be determined/set based on (e.g., by) the selected attribute coding mode 1112.

At step 1130, the encoder may encode attribute(s) based on attribute predictors. The encoder may encode the mapped attributes 1031 associated with the portion of geometry 1022 based on the attribute predictors 1124. The encoder may encode the mapped attributes 1031 associated with the portion of geometry 1022 as attribute information 1032, for example, in the bitstream 1190.

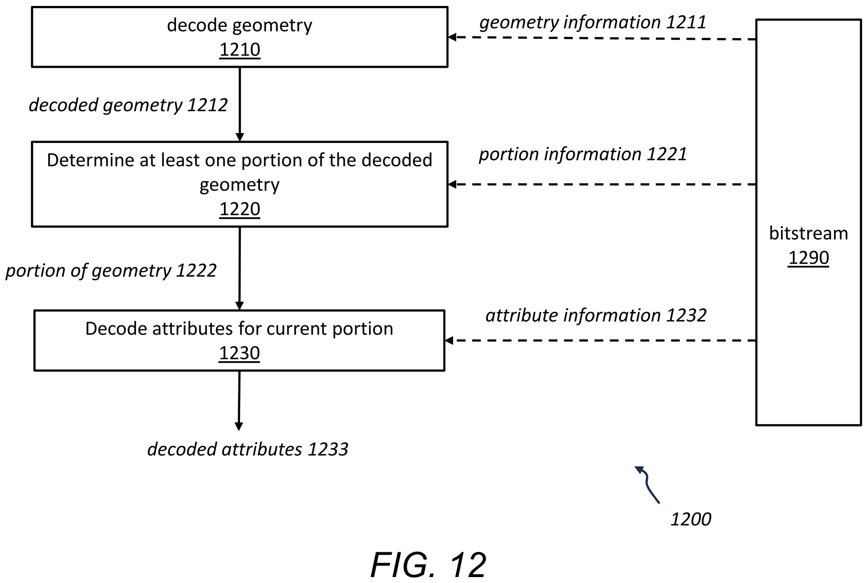

FIG. 12 shows an example method for decoding a point cloud. More specifically, FIG. 12 shows an example process 1200 of a method for decoding geometry and attributes of a current point cloud. One or more steps of the example process 1200 may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1210-1230 may represent components within the decoder.

The decoded point cloud may be a point cloud frame of a sequence of point cloud frames of a dynamic point cloud. The decoded point cloud may comprise decoded geometry 1212 and decoded attributes 1233. Each decoded attribute 1233 may be associated with one point of the decoded geometry 1212.

At step 1210, a decoder may decode geometry. A decoder may obtain a decoded geometry 1212 by decoding geometry information 1211 from a bitstream 1290, as discussed herein. For example, the bitstream 1290 may be generated by the encoding method of FIG. 10.

At step 1220, the decoder may determine at least one portion of the decoded geometry 1212. For example, the decoded geometry 1212 may be divided (e.g., segmented) into a set of ACUs. Each ACU of the set of ACUs may comprise a respective portion of geometry 1222 of the decoded geometry 1212. For example, the portion of geometry 1222 may comprise positions in the 3D space of a subset of points of the decoded geometry 1212. The decoder may decode portion information 1221 from the bitstream 1290. The decoder may decode portion information 1221, for example, from (e.g., part of) attribute information 1232. The portion information 1221 may indicate segmentation selections of the decoded geometry 1212 into the set of ACUs. For example, the portion information 1221 may indicate how the decoded geometry 1212 is segmented into the set of ACUs.

At step 1230, the decoder may decode attributes for the current portion of geometry. The decoder may obtain decoded attributes 1233 associated with a (e.g., each) portion of geometry 1212. The decoder may obtain decoded attributes 1233 associated with a (e.g., each) portion of geometry 1212, for example, by decoding attribute information 1232. The attributes of points associated with a portion of geometry 1222 may be decoded. The attributes of points associated with a portion of geometry 1222 may be decoded, for example, before decoding the attributes of points belonging to another portion of the decoded geometry 1212.

Attributes associated with portions of the decoded geometry 1212 may be decoded based on a selected order. For example, attributes associated with portions of the decoded geometry 1212 may be decoded based on (or according to) a scanning order. The decoder may distinguish between already coded/decoded portions of the decoded geometry 1212 (e.g., portions of the decoded geometry 1212 whose attributes have been decoded) and other portions of the decoded geometry 1212 (e.g., portions of the decoded geometry 1212 whose attributes have not been decoded).

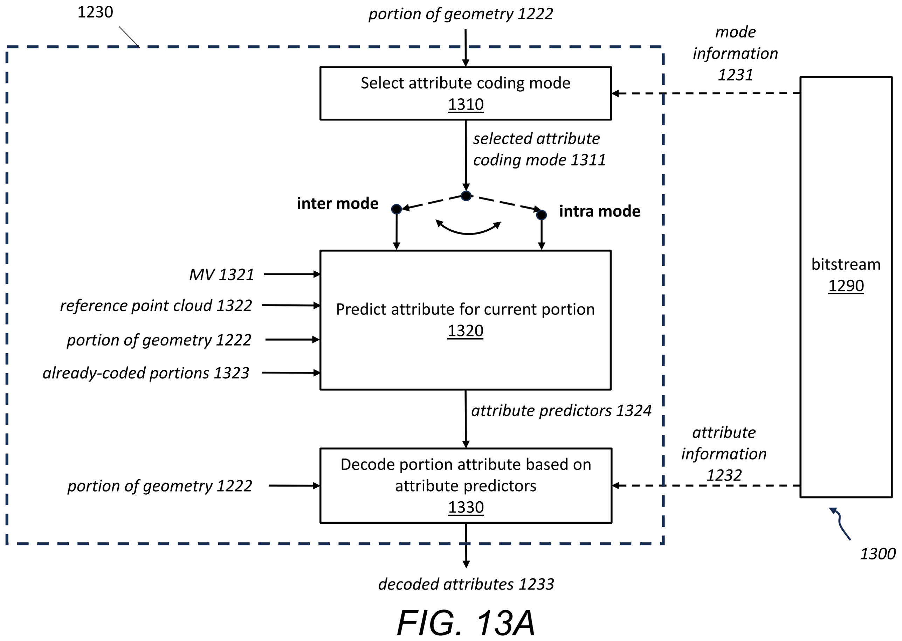

FIG. 13A shows an example method for decoding attributes. More specifically, FIG. 13A shows an example process 1300 of a method for decoding attributes associated with a portion of geometry 1222 of the decoded geometry 1212. One or more steps of the example process 1300 may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1310-1330 may represent components within the decoder.

Process 1300 may comprise operations of step 1230 that may obtain decoded attributes 1233 associated with portion of geometry 1222. The step 1230 may obtain decoded attributes 1233 associated with portion of geometry 1222, for example, by decoding attribute information 1232 from the bitstream 1290.

At step 1310, a decoder may select an attribute coding mode. A decoder may select an attribute coding mode 1311 for decoding the attributes of the portion of geometry 1222. The decoder may decode mode information 1231 that indicates the selected attribute coding mode 1311. The decoder may decode mode information 1231 that indicates the selected attribute coding mode 1311, for example, from the bitstream 1290. For example, the mode information 1231 may indicate either intra-prediction attribute coding mode or inter-prediction attribute coding mode.

At step 1320, the decoder may determine (e.g., predict) attribute(s) for current portion of geometry. The decoder may determine attribute predictors 1324 of attributes associated with the portion of geometry 1222. For example, for each point of the portion of geometry 1222, one respective attribute predictor is determined for predicting the attribute associated with that point.

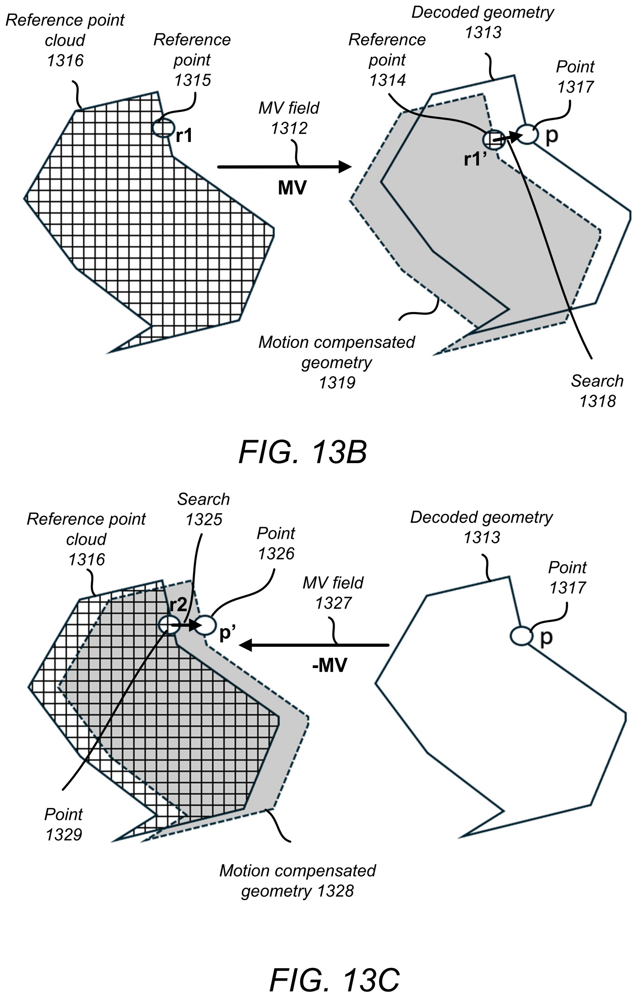

At step 1320, the decoder may determine attribute predictors 1324 based on a selected attribute coding mode. For example, if/when an inter-prediction attribute coding mode is selected, the decoder may determine/obtain attribute predictors 1324 from an inter-prediction attribute parametric model. The inter-prediction attribute parametric model may be based on a Motion Vector (MV) field 1321, reference point cloud (e.g., for attributes) 1322, and the portion of geometry 1222. Parameters of the inter-prediction attribute parametric model may be determined/set based on (e.g., by) the selected attribute coding mode 1311. For example, FIGS. 13B and 13C described below show two examples of the inter-prediction attribute parametric model. The inter-prediction attribute parametric model may be applied to project (used for projecting) attributes of the reference point cloud (e.g., for attributes) 1322 onto the portion of geometry 1222 to determine attribute predictors 1324 for attributes of points/vertices of the portion of geometry 1222.

FIG. 13B shows an example of an inter-prediction attribute parametric model. More specifically, FIG. 13B shows an example of point-to-point projection distance between a point of the portion of (decoded) geometry 1313 and its nearest neighbor point of a motion compensated geometry 1319.

The motion compensated geometry 1319 may be obtained by motion compensation of the reference point cloud (e.g., for attributes) 1316. The motion compensated geometry 1319 may be obtained by motion compensation of the reference point cloud (e.g., for attributes) 1316, for example, based on MV field 1312. The reference point cloud (e.g., for attributes) 1316 may be the reference point cloud (e.g., for attributes) 1122, 1322. The portion of the geometry 1313 may be the portion of geometry 1022, 1222.

The MV field 1312 may comprise a set of motion vectors including a motion vector MV. The MV may be used to move (e.g., translate) reference point 1315 (rl) of the reference point cloud (e.g., for attributes) 1316 to a reference point 1314 (rl') of the motion compensated geometry 1319. The nearest point of the motion compensated geometry 1319, in a neighborhood of the point 1317 of the portion of geometry 1313, may comprise reference point 1314. The nearest point (e.g., reference point 1314) may be selected in a search 1318. The nearest point (e.g., reference point 1314) may be selected in a search 1318, for example, by minimizing a point-to-point projection distance between each candidate point of the motion compensated geometry 1319 in the neighborhood of the point 1317, and the point 1317. Discontinuities of the motion compensated geometry 1319 may be introduced. Discontinuities of the motion compensated geometry 1319 may be introduced, for example, due to MV field 1312 which may not provide a granular translation of points. For example, MV field 1312 may include one MV applied to (e.g., used for) reference point cloud (e.g., for attribute) 1316. MV field 1312 may include an MV determined for a set of cuboids or per cuboid of reference point cloud (e.g., for attributes) 1316. The MV may not be determined per point of reference point cloud (e.g., for attributes) 1316 due to high complexity. As search 1318 may be performed on points of the motion compensated geometry 1319, the entirety of the motion compensated geometry 1319 may need to be generated and maintained, so that search 1318 for each point of the portion of geometry 1313 may be performed. For example, the entirety of the motion compensated geometry 1319 may need to be generated and maintained before search 1318 for each point of the portion of geometry 1313 may be performed.

A point-to-point projection distance may be determined (e.g., calculated) between a point of the portion of geometry 1313 and its nearest neighbor point of a motion compensated geometry 1319. A (e.g., each) point-to-point projection distance may be a difference between a point of the reference point cloud (e.g., for attributes) 1316 and its nearest neighbor point of a motion compensated geometry 1319. The motion compensated geometry 1319 may be obtained by performing motion compensation of the portion of the geometry 1313. The motion compensated geometry 1319 may be obtained by motion compensation of the decoded geometry of the current point cloud based on MV field.

FIG. 13C shows an example of an inter-prediction attribute parametric model. More specifically, FIG. 13C shows an example of point-to-point projection distance between a point 1329 of the reference point cloud (e.g., for attributes) 1316 and its nearest neighbor point of a motion compensated geometry 1328.

The motion compensated geometry 1328 may be obtained by motion compensation of the portion of geometry 1313. The motion compensated geometry 1328 may be obtained by motion compensation of the portion of geometry 1313, for example, based on MV field 1327. The MV field 1327 may comprise a motion vector -MV that is the inverse (e.g., having an opposite sign) of the MV field 1312. For example, point 1317 of the portion of geometry 1313 may be moved (e.g., translated) by a motion vector -MV of MV field 1327 to determine a motion-compensated position for point 1317. The motion-compensated position for point 1317 may be shown as point 1326 (p') of the motion compensated geometry 1328. The nearest point of the motion compensated geometry 1328, in a neighborhood of the point 1329 of the reference point cloud (e.g., for attributes) 1316, may comprise point 1326. The nearest point (e.g., point 1326) may be selected in a search 1325. The nearest point (e.g., point 1326) may be selected in a search 1325, for example, by minimizing a point-to-point projection distance between each candidate point of the motion compensated geometry 1328 in the neighborhood of the point 1329, and the point 1329 of the reference point cloud (e.g., for) attributes 1316.

The attribute projection quality may be determined. The attribute projection quality may be determined, for example, based on a comparison of the mapped attributes and the corresponding projected attributes. The attribute projection quality determining may be performed by the comparison of attributes expressed on a same geometry (e.g., the portion of the (decoded) geometry 1313), for example, to avoid any geometry discrepancy. The attribute projection quality may be based on differences between compared attributes. An attribute may be represented as a vector. An attribute difference may be determined (e.g., computed) as an attribute distance between vectors representing attributes that are compared. Attribute distance and attribute difference may be used interchangeably herein.

The attribute projection quality may be based on point-to-point attribute distances calculated for the set of points of the portion of geometry. The attribute projection quality may be an average or a maximum of the point-to-point attributes distances. A point-to-point attribute distance may be a difference between attributes associated with a point of the set of points of the portion of geometry and corresponding projected attributes associated with this point.

Returning to FIG. 13A, at step 1320, if/when an intra-prediction attribute mode is selected, the decoder may determine attribute predictors 1324 from an intra-prediction attribute parametric model. The intra-prediction attribute parametric model may be based on at least one already-coded (e.g., already-decoded) portion 1323 of the geometry 1222. Parameters of the intra-prediction attribute parametric model may be determined/set based on (e.g., by) the selected attribute coding mode 1311.

At step 1330, the decoder may decode portion attribute(s) based on attribute predictors. The decoder may decode attribute information 1232 from the bitstream 1290. The decoder may obtain the decoded attributes 1233 associated with the portion of geometry 1222. The decoder may obtain the decoded attributes 1233 associated with the portion of geometry 1222, for example, based on the decoded attribute information and the attributes predictors 1324.

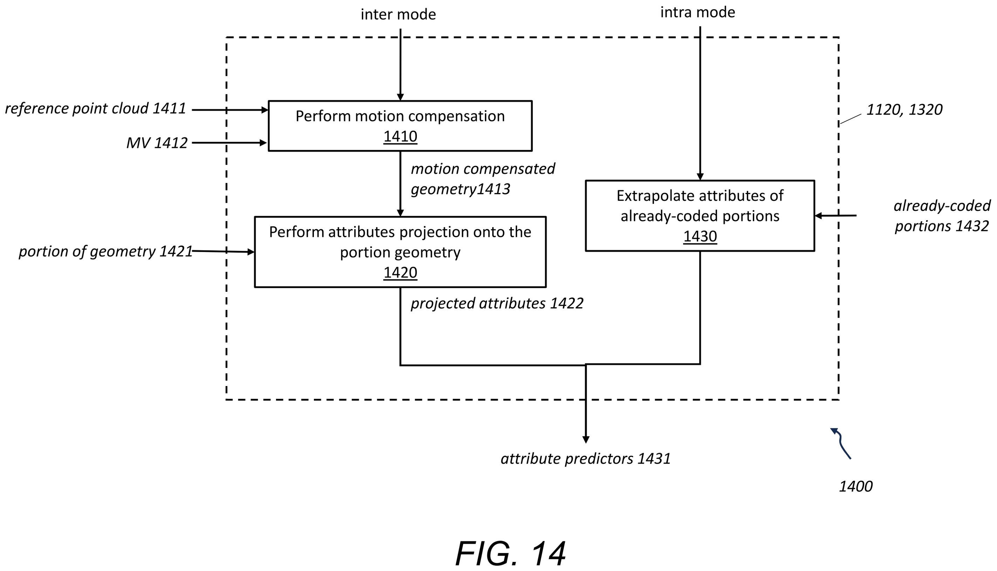

FIG. 14 shows an example method for determining attribute predictors. More specifically, FIG. 14 shows an example process 1400 of a method for determining attribute predictors 1431 of attributes associated with a portion of geometry 1421. One or more steps of the example process 1400 may be performed and/or implemented by a coder such as an encoder (e.g., encoder 114 of FIG. 1) or a decoder (e.g., decoder 120 of FIG. 1), an example computer system 2900 as described herein with respect to FIG. 29, and/or an example computing device 3030 as described herein with respect to FIG. 30. In some examples, steps 1410-1430 may represent components within the coder.

The process 1400 may be performed (e.g., identically) at both the encoder and the decoder. The process 1400 may be performed (e.g., identically) at both the encoder and the decoder, for example, to determine same attribute predictors 1431. The operations of FIG. 14 may be performed separately by the encoder and/or the decoder.

Steps 1410-1420 may relate to a process for determining inter-prediction-based attribute predictors. Step 1430 may relate to a process for determining intra-prediction-based attribute predictors.

The process for determining inter-prediction-based attribute predictors may correspond to step 1120 of FIG. 11 if/when the selected attribute coding mode 1112 may indicate an inter-prediction attribute mode (inter mode). The process for determining inter-prediction-based attribute predictors may correspond to step 1320 of FIG. 13A if/when the selected attribute coding mode 1112 may indicate an inter-prediction attribute mode (inter mode). The process for determining intra-prediction-based attribute predictors may correspond to step 1120 of FIG. 11 if/when the selected attribute coding mode 1112 may indicate an intra-prediction attribute mode (intra mode). The process for determining intra-prediction-based attribute predictors may correspond to step 1320 of FIG. 13A if/when the selected attribute coding mode 1112 may indicate an intra-prediction attribute mode (intra mode).

The portion of geometry 1421 may be the portion of geometry 1022 as described with respect to FIG. 10. The portion of geometry 1022 may be, for example, the portion of the decoded geometry 1013 as described with respect to FIG. 10. The attribute predictors 1431 may be the attribute predictors 1124 as described with respect to FIG. 11. The portion of geometry 1421 may be the portion of geometry 1222 of the decoded geometry 1212 as described with respect to FIG. 12. The attribute predictors 1431 may be the attribute predictors 1324 as described with respect to FIG. 13A. Reference point cloud (e.g., for attributes) 1411 may correspond to the reference point cloud (e.g., for attributes) 1122 as described with respect to FIG. 11 and the reference point cloud (e.g., for attributes) 1322 as described with respect to FIG. 13A.

Steps 1410-1420 may show operations of the process for determining inter-prediction-based attribute predictors. The process may obtain projected attributes 1422 (e.g., of the decoded geometry 1013, 1212). Part of projected attributes 1422 may be used as attribute predictors 1431 for attributes associated with points of portion of geometry 1421.

As explained herein with respect to FIG. 13B and FIG. 13C, the process for determining inter-prediction-based attribute predictors may include motion compensation of the geometry of the reference point cloud (e.g., for attributes) 1411 to generate a motion compensated geometry 1413. Reference point cloud for (e.g., attributes) 1411 may correspond to reference point cloud (e.g., for attributes) 1122 of FIG. 11 and/or to reference point cloud (e.g., for attributes) 1322 of FIG. 13A.

At step 1410, the coder (e.g., encoder/decoder) may perform motion compensation. The coder (e.g., encoder/decoder) may obtain the motion compensated geometry 1413 by performing motion compensation of the geometry of the reference point cloud (e.g., reference point cloud for attributes) 1411 based on MV field 1412. The MV field 1412 may correspond to MV field 1121 of FIG. 11 and MV field 1321 of FIG. 13A.

The encoder may obtain the MV field 1121. An encoder may obtain the MV field 1121, for example, by performing a motion search. An encoder may obtain the MV field 1121, for example, by performing a motion search such that the MV field 1121 may approximate the 3D motion field of attributes from the reference point cloud (e.g., for attributes) 1411 to the attributes of the current point cloud 1011. The motion search may (e.g., typically) be an iterative method that may test (or evaluate, assess, check, examine, inspect, analyze, etc.) (e.g., locally) multiple candidate motion vectors, and may select a candidate motion vector among the multiple candidate motion vectors. The selected candidate motion vector may minimize a distortion (e.g., cost) between the attributes of the current point cloud 1011 and attributes of the motion compensated geometry 1413 using the candidate motion vector.

The distortion, used by the motion search, for a point of the current point cloud 1011 may be determined. The distortion, used by the motion search, for a point of the current point cloud 1011 may be determined, for example, by comparing the attribute of this point and the attribute of (e.g., one of) its closest neighbor in the motion compensated geometry.

The encoder may encode information that indicates the reference point cloud (e.g., for attributes) 1411 among multiple candidate reference point clouds (e.g., for attributes). The encoder may encode the MV field 1121 as geometry information 1012. The decoder may obtain the reference point cloud (e.g., for attributes) 1411 and MV field 1321 by decoding geometry information 1211 and attribute information 1232 from the bitstream 1290.

At step 1420, the coder (e.g., encoder/decoder) may perform attribute(s) projection onto the portion geometry. The coder may determine projected attributes 1422. For example, the coder may determine projected attributes 1422 associated with the decoded geometry 1013, 1212 based on attributes of the reference point cloud (e.g., for attributes) 1411.

Projected attributes 1422 and attributes of the decoded geometry 1013, 1212 may belong to the same geometry. The prediction of the attributes of the portion of geometry 1022, 1222 based on the projected attributes may be much more efficient because the geometry discrepancy has been removed.

The encoder/decoder may generate (e.g., build or configure) an attribute projection model from a motion compensated geometry 1413. The attribute projection model may be used to perform attribute projection associated with the motion compensated geometry 1413. For example, the motion compensated geometry 1413 may be obtained by performing motion compensation of the geometry of the reference point cloud (e.g., for attributes) 1411. The attribute projection may determine a projection of the motion compensated geometry 1413 onto the decoded geometry 1421. For example, the motion compensated geometry 1413 may be obtained by performing motion compensation of the decoded geometry 1421. The attribute projection may determine a projection of the motion compensated geometry 1413 onto the geometry of the reference point cloud (e.g., for attributes) 1411.

Since points of motion compensated geometry 1413 may represent motion compensated points of reference point cloud (e.g., for attributes) 1411 (or decoded geometry 1421), points of motion compensated geometry 1413 may correspond respectively to points of decoded geometry 1421 (or reference point cloud (e.g., for attributes) 1411, respectively). The result of the attribute projection process at step 1420 may be a form of projection of attributes of reference point cloud (e.g., for attributes) 1411 (e.g., after using/applying MV field 1412) onto decoded geometry 1013, 1212.

The attribute projection model may be a data structure used to (e.g., efficiently) perform attribute projection onto a specific position of a point. For example, the data structure may be a spatial-partitioning data structure such as a tree data structure (e.g., a KD tree or an octree). The data structure may be used to search for a set of one or more points (e.g., $N_{pts}$) belonging to the motion compensated geometry 1413. The set of one or more points (e.g., $N_{pts}$) may be with positions in the neighborhood of a particular point (e.g., point p) from the decoded geometry 1421. The set of one or more points (e.g., $N_{pts}$) may be with positions in the neighborhood of a particular point (e.g., point p) from reference point cloud (e.g., for attributes) 1411. The set of one or more points (e.g., $N_{pts}$) may be determined to be within the neighborhood for a particular point (e.g., point p) based on distances of the set of one or more points (e.g., $N_{pts}$) from the point (e.g., point p) being within or less than a threshold value. The threshold value may be a predetermined value. The threshold value may be determined (e.g., computed) by the encoder and/or signaled to the decoder in the bitstream. The set of one or more points (e.g., $N_{pts}$) may be determined as a number (or quantity) of points with positions that are closest to the point (e.g., point p). The number may be a predetermined quantity. The number (e.g., quantity) may be determined (e.g., computed) by the encoder and/or signaled to the decoder in the bitstream. The distance may be a distance such as a Manhattan distance (i.e., L1 norm), an Euclidean distance (i.e., L2 norm), Chebyshev distance (i.e., L-infinity or $L_\infty$ norm), or a Minkowski distance.

The attributes values associated with each point within the set of one or more points (e.g., $N_{pts}$) may be used at step 1420 for determining projected attributes values for the point (e.g., point p). For example, the projected attributes values may be attribute predictors of attributes for the point (e.g., point p). A value of each attribute of the point (e.g., point p) may be predicted or projected based on values of corresponding attributes (with the same type as the each attribute) of the set of one or more points (e.g., $N_{pts}$).

A projected attribute (e.g., attribute predictor) for the point (e.g., point p) may be determined. A projected attribute (e.g., attribute predictor) for the point (e.g., point p) may be determined, for example, as an average of the attribute values, of the set of one or more points (e.g., $N_{pts}$), weighted by respective distance between the one or more points (e.g., $N_{pts}$) and the point (e.g., point p). The distance may be a distance such as a Manhattan distance (i.e., L1 norm), an Euclidean distance (i.e., L2 norm), Chebyshev distance (i.e., L-infinity or $L_\infty$ norm), or a Minkowski distance.

The projected attributes representing the attribute predictors for the point (e.g., point p) may be determined to be the corresponding values of the attributes of a point from the motion compensated geometry 1413 closest to the point (e.g., point p). This may enable faster projection because only one point is searched and selected from motion compensated geometry 1413 to determine an attributes predictor for the point (e.g., point p) from decoded geometry 1013, 1212.

At step 1430, the coder (e.g., encoder/decoder) may extrapolate attributes of already-coded portions. The coder may determine attribute predictors 1431 for the portion of geometry 1022, 1222. The coder may determine attribute predictors 1431 for the portion of geometry 1022, 1222, for example, based on intra-prediction attribute mode using at least one already-coded portion 1432. The already-coded portions 1432 may be the already-coded portions 1123 of FIG. 11 or the already-coded portions 1323 of FIG. 13A.

The coder (e.g., encoder/decoder) may generate (e.g., determine) the intra-prediction attribute mode based on the intra prediction mode (e.g., selected attribute coding mode 1112, 1311). For example, the attribute predictors 1431 may be obtained by extrapolating at least one attribute associated with at least one already-coded portions 1432. For example, the intra prediction mode (e.g., selected attribute coding mode 1112, 1311) may indicate that the at least one already-coded portion 1432 may comprise at least one spatial neighbor portion of the portion of geometry 1421. In some examples, the portion of geometry 1421 may be encompassed by a current ACU. The spatial neighbor portion of the portion of geometry 1421 may comprise points encompassed by an ACU having a part of its boundary overlapping with at least a portion of a boundary of the current ACU. Boundary may be defined as faces, edges and vertices of a cuboid, for example, if/when ACUs are cuboids in shape. Sharing a part of the boundary may be defined as having a common face, a common edge, or a common vertex (e.g., corner).

The intra prediction mode (e.g., selected attribute coding mode 1112, 1311) may indicate that the attribute predictors 1431 may be obtained based on extrapolation of at least one attribute associated with the at least one spatial neighbor portion of the portion of geometry 1421. Extrapolation of at least one attribute associated with the at least one spatial neighbor portion of the portion of geometry 1421 may be determined. Extrapolation of at least one attribute associated with the at least one spatial neighbor portion of the portion of geometry 1421 may be determined, for example, by fitting a 3D attribute model for the at least one attribute associated with the at least one spatial neighbor portion of the portion of geometry 1421, and by extending (e.g., extrapolating) the fitted 3D attribute model to the portion of geometry 1421. A 3D attribute model may take spatial coordinates as input and provide modeled attributes as output. Model parameters may be fit (e.g., learned) on at least one attribute associated with the at least one spatial neighbor portion of the portion of geometry 1421.

The intra prediction mode (e.g., selected attribute coding mode 1112, 1311) may have various indications. In some examples, the intra prediction mode (e.g., selected attribute coding mode 1112, 1311) may indicate that attribute predictors 1431 may be determined based on averages of attributes associated with the spatial neighbor portion of the portion of geometry 1421. In some examples, the intra prediction mode (e.g., selected attribute coding mode 1112, 1311) may indicate that attribute predictors 1431 may be determined based on a maximum of attributes associated with the spatial neighbor portion of the portion of geometry 1421. In some examples, the intra prediction mode (e.g., selected attribute coding mode 1112, 1311) may indicate a spatial direction. The spatial neighbor portion of the portion of geometry 1421 may be selected along the spatial direction. In some examples, the intra prediction mode (e.g., selected attribute coding mode 1112, 1311) may indicate that a maximum number/quantity of spatial neighbor portions of the portion of geometry 1421 may be selected. In some examples, the intra prediction mode (e.g., selected attribute coding mode 1112, 1311) may indicate a maximum distance between the spatial neighbor portion of the portion of geometry 1421 and the portion of geometry 1421. For example, the maximum distance may be between any point of the geometry 1421 and any other point of the portion of geometry 1421. For example, the maximum distance may be between centers (or opposite corners) of the spatial neighbor portion of the portion of geometry 1421 and the portion of geometry 1421. In some examples, the intra prediction mode (e.g., selected attribute coding mode 1112, 1311) may indicate an index of/to a list of indices, each index indicating one of the intra-prediction attribute modes or one of their combinations as described herein.

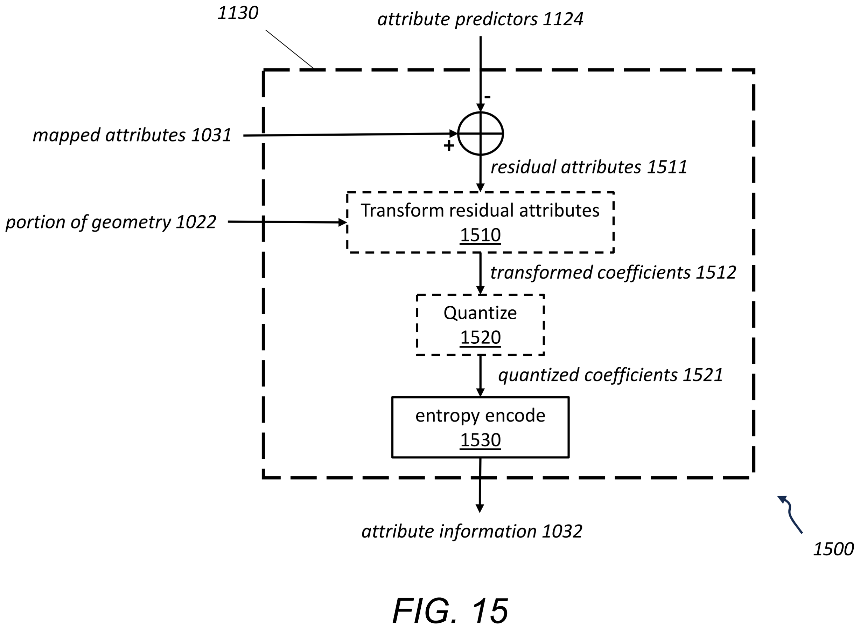

FIG. 15 shows an example method for encoding attributes based on attribute predictors. More specifically, FIG. 15 shows an example process 1500 of a method for encoding attributes based on attribute predictors 1124 associated with portion of geometry 1022. One or more steps of the example process 1500 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1510-1530 may represent components within the encoder.

The encoder may determine residual attributes 1511. The encoder may determine residual attributes 1511, for example, by subtracting the attribute predictors 1124 from the mapped attributes 1031 associated with portion of geometry 1022.

At step 1510, the encoder may transform residual attributes. The encoder may determine transformed coefficients 1512. The encoder may determine transformed coefficients 1512, for example, by using/applying a 3D transform for/to the residual attributes 1511 based on portion of geometry 1022.

At step 1520, the encoder may perform quantizing. The encoder may determine quantized residual attributes or quantized coefficients 1521. The encoder may determine quantized residual attributes or quantized coefficients 1521, for example, by quantizing the residual attributes 1511 or the transformed coefficients 1512, respectively.

At step 1530, the encoder may perform entropy encoding. The encoder may entropy encode the residual attributes 1511 or the transformed coefficients 1512 or the quantized residual attributes or the quantized coefficients 1521 as attribute information 1032.

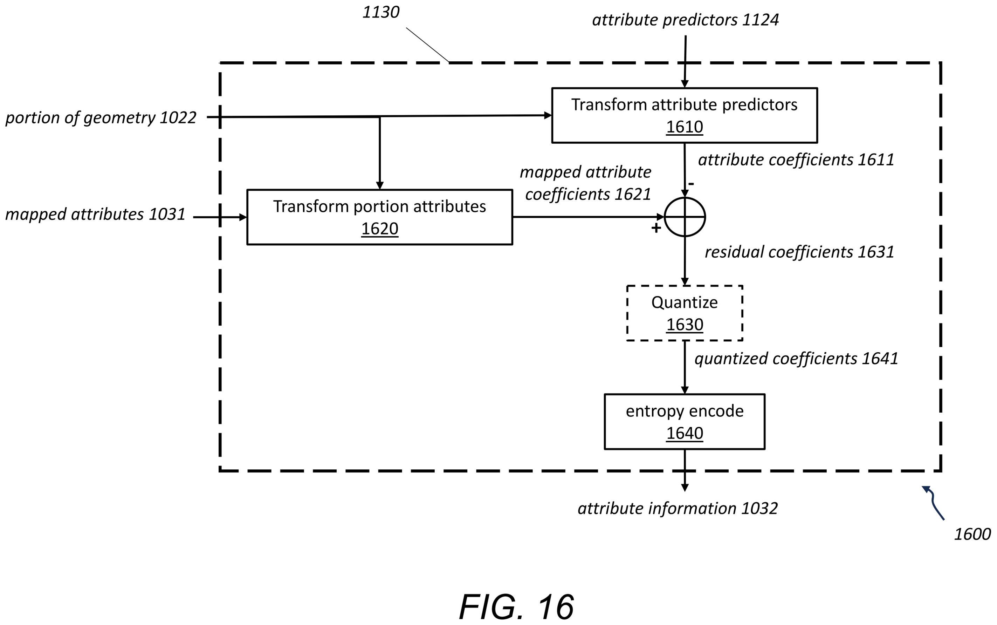

FIG. 16 shows an example method for encoding attributes based on attribute predictors. More specifically, FIG. 16 shows another example process 1600 of a method for encoding attributes based on attribute predictors 1124 associated with portion of geometry 1022. One or more steps of the example process 1600 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1610-1640 may represent components within the encoder.

At step 1610, the encoder may transform attribute predictors. The encoder may determine attribute coefficients 1611. The encoder may determine attribute coefficients 1611, for example, by applying/using a 3D transform to/for the attribute predictors 1124 based on portion of geometry 1022.

At step 1620, the encoder may transform portion attributes. The encoder may determine mapped attribute coefficients 1621. The encoder may determine mapped attribute coefficients 1621, for example, by applying/using 3D transform to/for the mapped attributes 1031 based on portion of geometry 1022.

The encoder may determine residual coefficients 1631. The encoder may determine residual coefficients 1631, for example, by subtracting the attribute coefficients 1611 from the mapped attribute coefficients 1621.

At step 1630, the encoder may perform quantizing. The encoder may determine quantized coefficients 1641. The encoder may determine quantized coefficients 1641, for example, by quantizing the residual coefficients 1631.

At step 1640, the encoder may perform entropy encoding. The encoder may entropy encode the residual coefficients 1631 or the quantized coefficients 1641 as attribute information 1032.

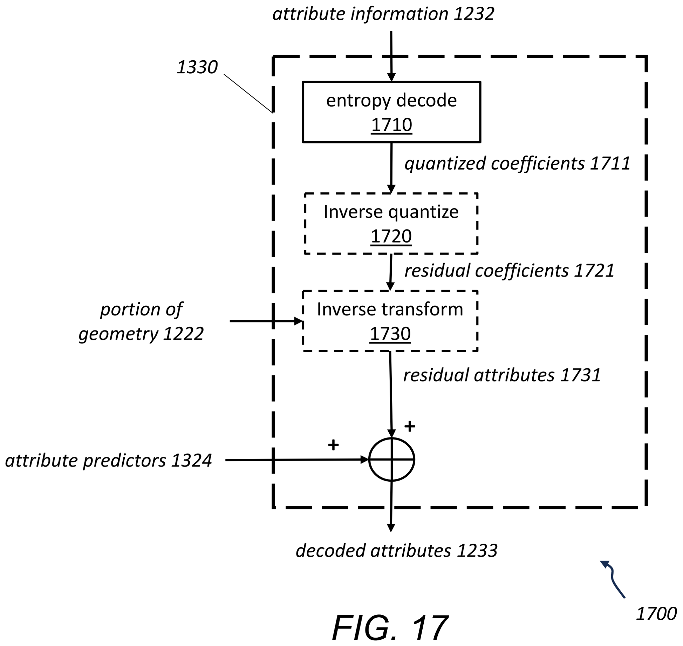

FIG. 17 shows an example method for decoding attributes based on attribute predictors. More specifically, FIG. 17 shows an example process 1700 of a method for decoding attributes based on attribute predictors 1324 associated with portion of geometry 1222. One or more steps of the example process 1700 (e.g., corresponding to step 1330 of FIG. 13A) may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1710-1730 may represent components within the decoder.

At step 1710, the decoder may perform entropy decoding. The decoder may entropy decode quantized coefficients 1711 from attribute information 1232. The decoder may entropy decode quantized coefficients 1711, for example, from the bitstream 1290.

At step 1720, the decoder may perform inverse quantizing. The decoder may determine residual coefficients 1721. The decoder may determine residual coefficients 1721, for example, by inverse quantizing the quantized coefficients 1711. In some examples, the decoder may entropy decode residual coefficients 1721 from the bitstream 1290.

At step 1730, the decoder may perform inverse transforming. The decoder may determine residual attributes 1731. The decoder may determine residual attributes 1731, for example, by applying/using inverse 3D transform to/for the residual coefficients 1721 based on portion of geometry 1222.

The decoder may determine decoded attributes 1233. The decoder may determine decoded attributes 1233, for example, by adding the residual attributes 1731 with the attribute predictors 1324.

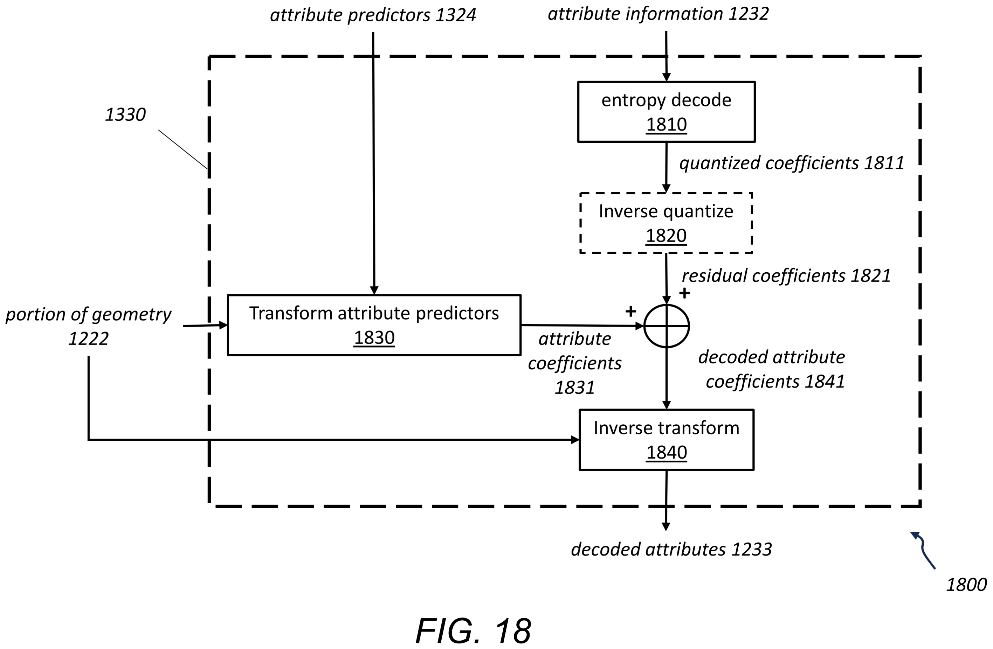

FIG. 18 shows an example method for decoding attributes based on attribute predictors. More specifically, FIG. 18 shows another example process 1800 of a method for decoding attributes based on attribute predictors 1324 associated with portion of geometry 1222. One or more steps of the example process 1800 (e.g., corresponding to step 1330 of FIG. 13A) may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1810-1840 may represent components within the decoder.

At step 1810, the decoder may perform entropy decoding. The decoder may entropy decode quantized coefficients 1811 from attribute information 1232. The decoder may entropy decode quantized coefficients 1811 from attribute information 1232, for example, from the bitstream 1290.

At step 1820, the decoder may perform inverse quantizing. The decoder may determine residual coefficients 1821. The decoder may determine residual coefficients 1821, for example, by inverse quantizing the quantized coefficients 1811. In some examples, the decoder may entropy decode, from the bitstream 1290, residual coefficients 1821.

At step 1830, the decoder may transform attribute predictors. The decoder may determine attribute coefficients 1831. The decoder may determine attribute coefficients 1831, for example, by applying/using 3D transform to/for the attribute predictors 1324 based on the portion of geometry 1222.

The decoder may determine decoded attribute coefficients 1841. The decoder may determine decoded attribute coefficients 1841, for example, by adding the residual coefficients 1821 with the attribute coefficients 1831.

At step 1840, the decoder may perform inverse transforming. The decoder may determine decoded attributes 1233. The decoder may determine decoded attributes 1233, for example, by applying/using an inverse 3D transform to/for the decoded attribute coefficients 1841 based on portion of geometry 1222.

3D transform may be used/selected for transforming residual attributes 1511 of FIG. 15, mapped attributes 1031 and attribute predictors 1124 of FIG. 16, and/or attribute predictors 1324 of FIG. 18. The 3D transform may be the region-adaptive hierarchical transform (RAHT) scheme, for example, in G-PCC. Inverse 3D transform of this 3D transform may be used/selected for inverse transforming residual coefficients 1721 of FIG. 17 and/or decoded attribute coefficients 1841 of FIG. 18.

The RAHT scheme may be based on the iterative use of a two-point transform. In the framework of point cloud attribute coding, a two-point RAHT transform may be applied to (e.g., used for) two sets (e.g., $A_1$ and $A_2$) of attributes. The two sets (e.g., $A_1$ and $A_2$) of attributes may comprise respective number/quantity (e.g., $w_1$ and $w_2$) of attributes and respective associated coefficients (e.g., $c_{A1}$ and $c_{A2}$). The associated coefficients (e.g., $c_{A1}$ and $c_{A2}$) may be representative of the sum of attribute values over their respective set divided by the square root of the number/quantity of attributes.

$$c_{Ai} = \frac{1}{\sqrt{w_i}} \sum_{a \in A_i} a. \qquad (w_i = \#A_i) \qquad\qquad (*)$$

The two-point RAHT transform may depend on the weights $w_1$ and $w_2$ and may be defined by a 2x2 matrix as follows:

$$\mathrm{RAHT}(w_1, w_2) = \frac{1}{\sqrt{w_1 + w_2}} \begin{bmatrix} \sqrt{w_1} & \sqrt{w_2} \\ -\sqrt{w_2} & \sqrt{w_1} \end{bmatrix}.$$

Two new coefficients DC and AC may be determined, for example, if/when applied to (e.g., used for) the two coefficients $c_{A1}$ and $c_{A2}$:

$$\begin{bmatrix} DC \\ AC \end{bmatrix} = \text{RAHT}(w_1, w_2) \begin{bmatrix} c_{A1} \\ c_{A2} \end{bmatrix} \quad \text{(Equation 1)}$$

As shown below, the above property (*) on coefficients still holds for the DC coefficient:

$$DC = \frac{1}{\sqrt{w_1 + w_2}} \left( \sqrt{w_1} c_{A1} + \sqrt{w_2} c_{A2} \right) = \frac{1}{\sqrt{w_1 + w_2}} \left( \sum_{a \in A_1} a + \sum_{a \in A_2} a \right) = \frac{1}{\sqrt{w_1 + w_2}} \sum_{a \in A_1 \cup A_2} a = c_{A1 \cup A2}$$

The two-point RAHT transform may be applied/used iteratively to/for DC coefficients. This may be referred to as the RAHT iterative method. If (e.g., once) alternating current (AC) coefficients are determined, AC coefficients do not undergo any further transformation. A direct current (DC) coefficient is the coefficient with zero frequency (e.g., zero frequency in both x and y spatial dimension) and AC coefficients are the remaining coefficients with non-zero frequencies. At the start of the RAHT iterative method, there may be initial sets of attributes. The quantity of the initial sets of attributes may be the same as the quantity of the points in the coded geometry. For example, there may be as many initial sets $A_i$ of attributes as there are points in the coded geometry S. Each initial set (e.g., $A_i$) of attributes may contain one attribute (e.g., $w_i = 1$) and the coefficient $c_{Ai}$ may be equal to the value of this one attribute, thus fulfilling the property (*). By induction, the property (*) may hold for all subsequent DC coefficients, for example, all subsequent DC coefficients determined after iterative application of the two-point RAHT transform. In some examples, the points of the coded geometry (e.g., S) may refer to voxels generated/determined to represent points of the coded geometry (e.g., S).

Determined coefficients may be the union of a set of DC coefficients fulfilling the property (*) and a set of AC coefficients. Determined coefficients may be the union of a set of DC coefficients fulfilling the property (*) and a set of AC coefficients, for example, at any stage of the RAHT iterative method. The RAHT iterative method may continue until DC coefficients are depleted and only one DC coefficient is left. This one DC coefficient may be equal to $C_A$ where A is the set of all attributes to be transformed. The RAHT iterative method may (e.g., a priori) follow any order among pairs of DC coefficients.

The attributes to be transformed may be residual attributes 1511, attribute predictors 1124, mapped attributes 1031, and/or attribute predictors 1324. The one obtained DC coefficient $C_A$ may be transformed coefficients 1512, attributes coefficients 1611, mapped attributes coefficients 1621, and/or attributes coefficients 1831.

The two-point inverse RAHT transform may be defined by a 2x2 matrix as follows:

$$\text{iRAHT}(w_1, w_2) = \frac{1}{\sqrt{w_1 + w_2}} \begin{bmatrix} \sqrt{w_1} & -\sqrt{w_2} \\ \sqrt{w_2} & \sqrt{w_1} \end{bmatrix}$$

The two-point inverse RAHT may be applied to (e.g., used for) DC and AC coefficients to obtain (e.g., recover or reconstruct) the two coefficients $c_{A1}$ and $c_{A2}$:

$$\begin{bmatrix} c_{A1} \\ c_{A2} \end{bmatrix} = \text{iRAHT}(w_1, w_2) \begin{bmatrix} DC \\ AC \end{bmatrix}$$

The inverse iterative RAHT method/scheme may apply/use the inverse two-point RAHT to/for DC and AC coefficients in a reverse order relative to obtaining DC and AC coefficients by the iterative RAHT scheme. At the end of the inverse iterative RAHT scheme, coefficients (e.g., $c_{Ai}$) associated with the initial sets (e.g., $A_i$) of attributes may be obtained. These coefficients (e.g., $c_{Ai}$) may be equal to the values of the one attributes associated with the initial sets (e.g., $A_i$). For example, attributes associated with the initial sets (e.g., $A_i$) may be the residual attributes 1731 or decoded attributes 1233.

The RAHT iterative scheme may follow an octree in a specific iterative order. The RAHT iterative scheme may follow an octree in a specific iterative order, for example, in G-PCC. DC coefficients associated with occupied child nodes of a parent node in the octree may undergo a cascade of two-point RAHT transformations until one DC coefficient remains, together with AC coefficients. For example, up to eight DC coefficients associated with up to eight occupied child nodes of a parent node in the octree may undergo a cascade of two-point RAHT transformations until one DC coefficient remains, together with up to seven AC coefficients. This one DC coefficient may be pushed at the parent node level and the scheme may be repeated at upper octree depth (e.g., at lower depth indexes) until the root node is reached.

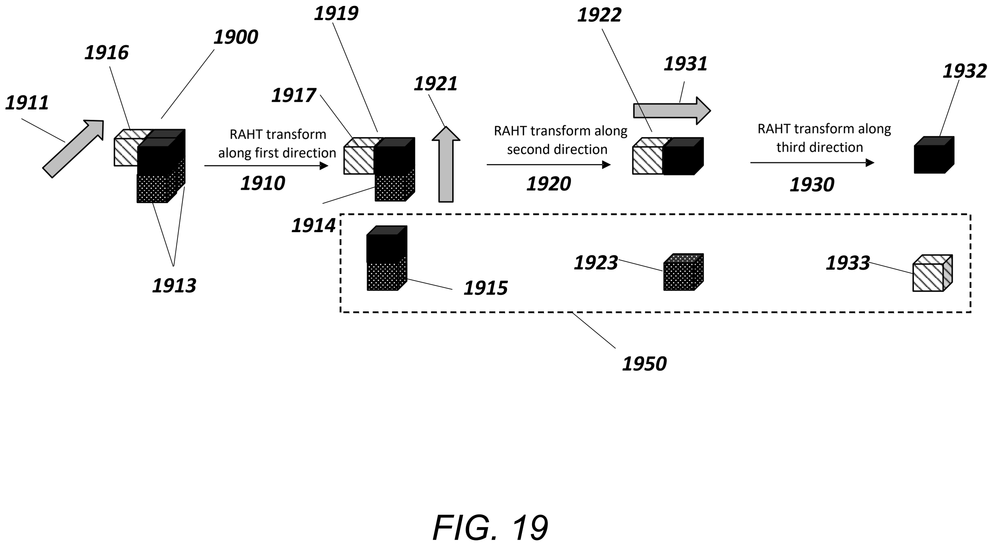

FIG. 19 shows an example RAHT transformation. More specifically, FIG. 19 shows an example RAHT transformation, of a RAHT scheme, based on (e.g., applied to) an octree. The RAHT transformation may be based on (e.g., applied to) child nodes of an octree parent node along three successive directions.

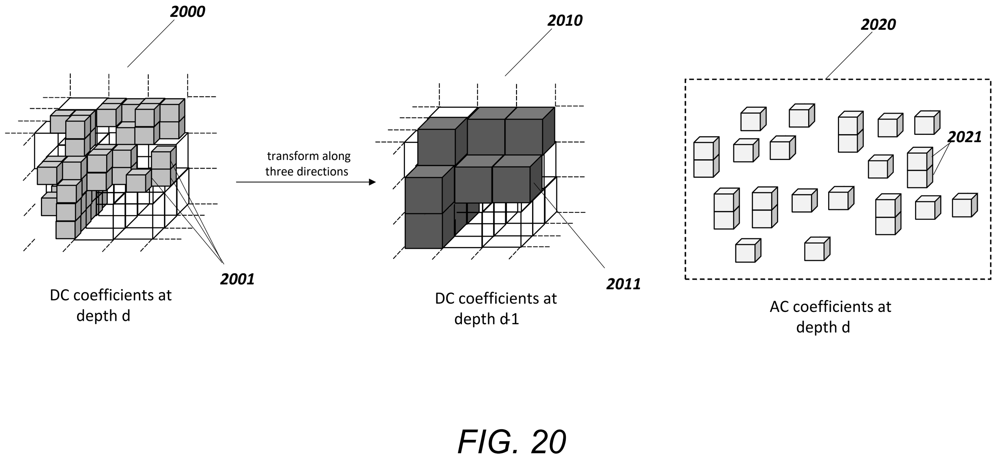

The parent node 1900 may have multiple (e.g., five) occupied child nodes each having a respective associated

coefficients (e.g., $c_i$) and weights (e.g., $w_i$). A first RAHT transformation 1910 may be performed along a first direction 1911. If there are two adjacent occupied child nodes 1913 along the first direction, the two adjacent occupied child nodes 1913 may undergo a two-point RAHT transform. The two adjacent occupied child nodes 1913 may undergo a two-point RAHT transform, for example, to determine a new DC coefficient 1914 and an AC coefficient 1915. The AC coefficient 1915 may be pushed to a set 1950 of AC coefficients. The node may be left as is and its DC coefficient 1917 may be kept, for example, if there is only one occupied child node 1916 along the first direction. In this example, the child nodes may be collapsed along the first direction to determine a new set 1919 of nodes (e.g., a set of three nodes), with associated new DC coefficients. A second RAHT transformation 1920 may be performed, for example, after the first RAHT transformation. The second RAHT transformation 1920 may be performed, for example, along a second direction 1921. The second RAHT transformation 1920 may be performed, for example, in a similar way as the first RAHT transformation 1910. The second RAHT transformation 1920 may be performed, for example, to determine child nodes 1922. The child nodes 1922 may have been collapsed along the first two directions 1911 and 1921. AC coefficients 1923 may be pushed to the set 1950 of AC coefficients, for example, together with the collapse. A third RAHT transformation 1930 may be performed, for example, after the second RAHT transformation. The third RAHT transformation 1930 may be performed, for example, along a third direction 1931. The RAHT transformation 1930 may be performed, for example, in a similar way as the first and/or second RAHT transformation. RAHT transformation 1930 may be performed, for example, to determine a (e.g., unique) child node 1932. The child node 1932 may result from the collapse along all three directions. AC coefficients 1933 may be pushed to the set 1950 of AC coefficients, for example, together with the collapse. The child node 1932 may have an associated DC coefficient that is pushed to the parent node (e.g., as shown in FIG. 20).

FIG. 20 shows an example RAHT transformation. More specifically, FIG. 20 shows an example RAHT transformation based on (e.g., applied to) octree nodes (e.g., all octree nodes). The RAHT transformation may be based on (e.g., applied to) octree nodes (e.g., all octree nodes), for example, at depth 'd', to determine DC coefficients (e.g., at depth d-1) and AC coefficients. FIG. 20 shows an example of occupied nodes 2000 of an octree at depth 'd'. Occupied nodes 2000 may undergo a RAHT transformation along the three directions. Occupied nodes 2000 may undergo a RAHT transformation along the three directions, for example, to push DC coefficients up to their occupied parent nodes 2010 that belong to the octree (e.g., at depth d-1). For example, DC coefficients for each node may be pushed up to a corresponding occupied parent node. For example, the three DC coefficients of the child nodes 2001 may undergo a RAHT transformation along the three directions. The three DC coefficients of the child nodes 2001 may undergo a RAHT transformation along the three directions, for example, to determine a (e.g., unique) DC coefficient associated with their parent node 2011 and two AC coefficients 2021. The two AC coefficients 2021 may be pushed to a set 2020 of AC coefficients. By performing this method for (e.g., all) occupied nodes 2000 of the octree (e.g., at depth 'd'), the DC coefficients associated with occupied nodes of the octree (e.g., at depth 'd') may be transformed into DC coefficients associated with occupied parent nodes 2010 of the octree (e.g., at depth d-1) and a set 2020 of AC coefficients.

The RAHT transformation method may be a bottom-up method. This bottom-up method may be repeated based on depth (e.g., depth per depth). This bottom-up method may be repeated based on depth (e.g., depth per depth), for example, until reaching the minimum depth (the root node). The result of the RAHT transformation over the complete octree may comprise a set of coefficients comprising a (e.g., unique) DC coefficient and a set of (e.g., many) AC coefficients.

The RAHT transformation method may (e.g., typically) start from the highest/deepest depth. The highest/deepest depth may be, for example, farthest from the root node with a low depth index. At the highest/deepest depth, occupied child nodes may correspond to a (e.g., unique) point (e.g., voxel) of the coded geometry S. The (e.g., unique) point (e.g., voxel) may be associated with a/an (e.g., unique) attribute among the set (e.g., 'a') of attributes. The DC coefficient at the highest/deepest depth may be set as the value of the (e.g., unique) attribute associated with each occupied node, and the weights (e.g., 'w') may be set to 1.

The inverse RAHT method (e.g., on an octree) may be a top-down method. This top-down method may be used from the root node down to the last depth. The root node may comprise the lowest depth index or the most shallow depth. The last depth may comprise the highest depth index or the deepest depth. The last depth may be made of leaf nodes that each may contain only one point (e.g., voxel) of the point cloud. Each leaf node at the last depth may comprise only one attribute associated with the one point (e.g., voxel). The DC coefficients of occupied nodes 2010 of the octree at a lower depth (e.g., depth d-1) may be inverse transformed into DC coefficients of occupied nodes 2000 of the octree at a higher depth (e.g., depth d). The DC coefficients of occupied nodes 2010 of the octree at a lower depth (e.g., depth d-1) may be inverse transformed into DC coefficients of occupied nodes 2000 of the octree at a higher depth (e.g., depth d), for example, by applying/using the inverse two-point RAHT transform to/for the DC coefficient of each of the occupied node of the octree at the lower depth (e.g., depth d-1) and to/for the related AC coefficients from set 2020 of AC coefficients. The inverse two-point RAHT transform may be applied/used along the three directions, in a reverse order, such as to invert the node transformation process of FIG. 19. By doing so, DC coefficients of the leaf nodes may be obtained, and the values of these DC coefficients may correspond to the attributes associated with the (e.g., unique) point of each of the leaf nodes.

Like geometry coding of a point cloud, coding of attributes associated with the points of a current point cloud may benefit from inter-frame prediction using a motion compensated point cloud. The motion compensated point cloud may obtain (e.g., inherit) attributes from a reference point cloud that has been motion compensated. Points may keep their associated attributes. Points may keep their associated attributes, for example, in/during motion. Motion compensated attributes may be, for example, the attributes associated with the points of the motion compensated point cloud. The motion compensated attributes may be used to (e.g., better) compress the attributes of the coded geometry of the current point cloud.

Inter RAHT scheme may be used at steps 1610, 1620, 1730, 1830, and 1840 as described herein. Inter RAHT scheme may define an inter prediction mode that may use inter prediction for predicting the values of the DC and AC coefficients (i.e., DC coefficients and AC coefficients) determined by the RAHT iterative method or the inverse RAHT iterative method. In some examples, because the generation of DC and AC coefficients may follow an octree, it may be beneficial to maintain a common attribute octree structure for both the portion of geometry (e.g., portion of geometry 1022, 1222) and a motion compensated portion of geometry. A common bounding box encompassing both portion of geometries (i.e., both the portion of geometry and the motion compensated portion of geometry) may be determined. An octree partitioning may be performed, from a root node associated with the common bounding box, for both portion of geometries. This may lead to two octree partitioning. The two octree partitioning may be different. The two octree partitioning may be different, for example, if/when the portion of geometries are not equal. It may be likely that the portion of geometries are not equal. The two octrees may have a common subtree starting from the root node. On this subtree, occupied node topology may be the same, and a common set of DC and AC coefficients may be determined for both portion of geometries. The subset (e.g., the common set) of DC and AC coefficients associated with nodes of the common subtree may be predicted from DC and AC coefficients. The subset (e.g., the common set) of DC and AC coefficients may be determined from the attributes of the portion of geometry (e.g., portion of geometry 1022, 1222). The DC and AC coefficients may be determined from the attributes of the motion compensated portion of geometry. The encoder and/or decoder may determine coefficient residual values. The encoder and/or decoder may determine coefficient residual values, for example, by subtracting the DC and AC coefficients determined from the attributes of the motion compensated portion of geometry from the DC and AC coefficients associated with nodes of the common subtree and determined from the attributes of the portion of geometry (e.g., portion of geometry 1022, 1222).

The DC and AC coefficients that are not associated with nodes of the common subtree may not be predicted. The DC and AC coefficients that are not associated with nodes of the common subtree may be transformed (e.g., directly) in a similar way as performed for the case without inter prediction.

Predicted DC coefficients of the portion of geometry (e.g., portion of geometry 1022, 1222) may be determined instead of predicting AC coefficients. Predicted DC coefficients of the portion of geometry (e.g., portion of geometry 1022, 1222) may be determined at a (e.g., some) depth, for example, if (e.g., assuming) both the octree of the portion of geometry (e.g., portion of geometry 1022, 1222) and the octree of the motion compensated portion of geometry may have a same occupancy of a node at this depth. The predicted DC coefficients may be determined based on (e.g., from) their co-located DC coefficients of the motion compensated portion of geometry. DC residual values may be determined. DC residual values may be determined, for example, by subtracting the predicted DC coefficients from the DC coefficients of the portion of geometry (e.g., portion of geometry 1022, 1222). The RAHT transformation may go up in the octree starting from DC residual values replacing the DC coefficients of the portion of geometry (e.g., portion of geometry 1022, 1222).

A RAHT scheme process that does not use information from a reference point cloud different from the current point cloud may be called an intra RAHT scheme. Intra RAHT scheme may define an intra prediction mode for predicting the values of the DC and the AC coefficients determined by the RAHT iterative method or the inverse RAHT iterative method.

Intra prediction may be performed between DC and AC coefficients of an intra RAHT scheme and may be referred to as inter-depth prediction. In some implementations of point cloud coding, this inter-depth prediction within portion of geometry (e.g., portion of geometry 1022, 1222) may be integrated into the RAHT scheme as being an intra prediction mode.

The inter-depth prediction mode may predict the DC coefficients associated with a current RAHT node of a RAHT tree at a depth (e.g., depth d). The inter-depth prediction mode may predict the DC coefficients associated with a current RAHT node of a RAHT tree at a depth (e.g., depth 'd'), for example, by using interpolation of DC coefficients associated with nodes of the octree at a lower depth (e.g., depth d-1). A lower depth may comprise a lower depth index corresponding to shallower depth of the RAHT tree. A lower depth may indicate a depth level closer to root node of RAHT tree. A higher depth may indicate a depth level closer to leaf nodes of RAHT tree (i.e., farther from root node). The inter-depth prediction mode may (e.g., also) predict AC coefficients of a current RAHT node. The inter-depth prediction mode may predict AC coefficients of a current RAHT node, for example, by using attribute information from a parent node and attribute information from already-coded neighboring RAHT nodes of the parent node of the current RAHT node.

A RAHT tree may comprise RAHT nodes that are linked together according to a parent-child relationships defined as an occupancy tree over the decoded geometry. A RAHT node of the RAHT tree may be a node of the occupancy tree that is associated with a DC coefficient. The node of the occupancy tree may be (e.g., also) associated with one or more AC coefficients. The DC coefficients and the one or more AC coefficients may be obtained, for example, by applying/using the iterative RAHT (e.g., by an encoder) or inverse iterative RAHT method (e.g., by a decoder) to/for the points belonging to the sub-volumes associated with the occupied nodes of the occupancy tree.

Already-coded neighboring RAHT nodes of the parent node of the current RAHT node may include nodes that have connections to the parent node. For example, already-coded neighboring RAHT nodes of the parent node of the current RAHT node may include nodes that are siblings to the parent node. The siblings may comprise the seven siblings in an octree structure. In some examples, already-coded neighboring RAHT nodes may include nodes that may share a face, an edge, or a vertex (e.g., corner) with the parent node.

The inter-depth prediction as discussed herein may be implemented in a bounded domain. For example, the inter-depth prediction may be implemented in a mean attribute domain which is naturally bounded by the attribute value range. The bounded property of the mean attribute domain may be advantageous. For example, the bounded property of the mean attribute domain may correlate to a more physical meaning and/or may provide better numerical stability of the inter-depth prediction. This may lead to a more efficient prediction.

Mean sums of attributes values (e.g., $a_{i,d}$) determined (e.g., calculated) for RAHT nodes at a parent RAHT node (e.g., at depth d) may be used to predict a mean sum of attribute values (e.g., $a_{i,c}$) associated with each child RAHT node (e.g., at depth d+1) of the parent RAHT node. The mean sums of attributes values (e.g., $a_{i,d}$) determined (e.g., calculated) for RAHT nodes at a parent node (e.g., at depth d) may comprise a mean sum of attributes values (e.g., $a_{i,d}$) determined (e.g., calculated) for the parent RAHT node and (e.g., possibly) a mean sum of attributes values (e.g., $a_i$) determined (e.g., calculated) from one or more already-coded neighboring RAHT nodes of the RAHT parent node.

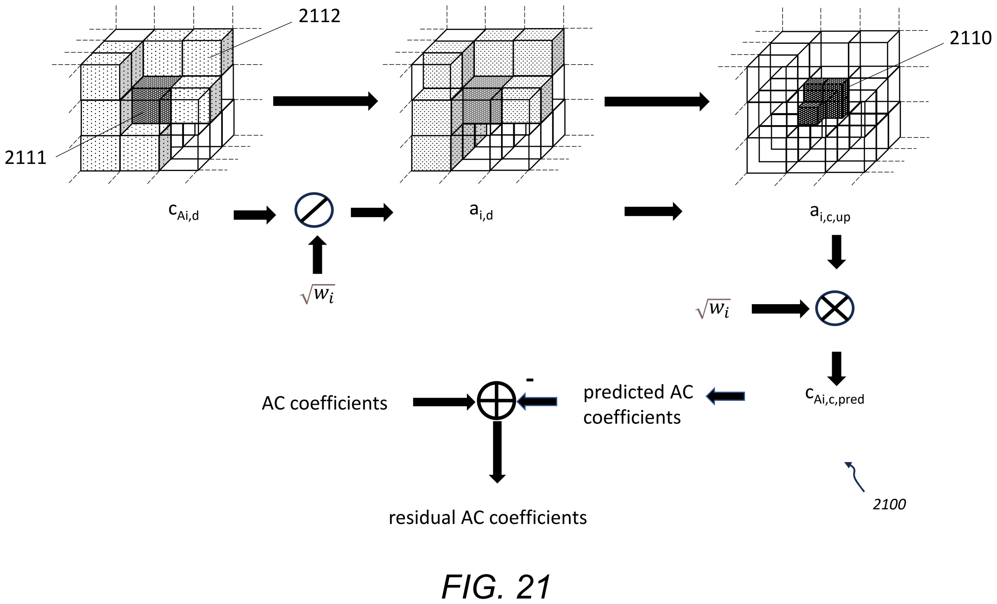

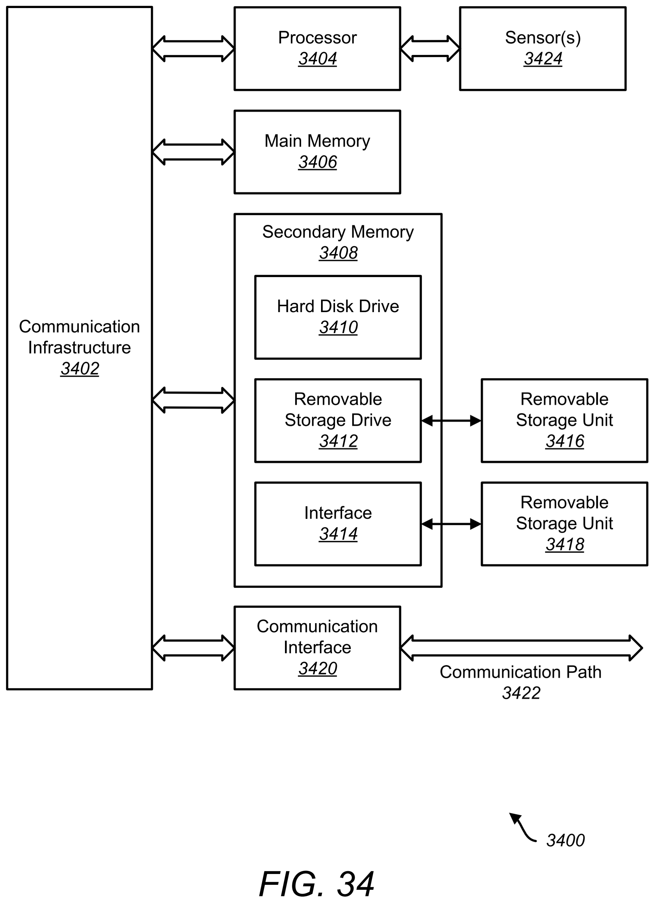

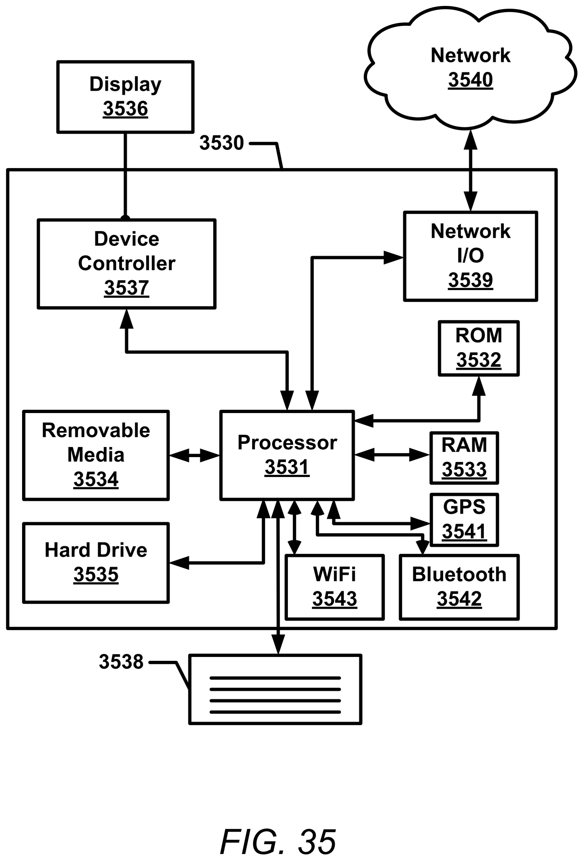

FIG. 21 shows an example process for encoding attribute information for child RAHT node(s). More specifically, FIG. 21 shows an example process 2100 of a method for encoding attribute information for child RAHT node(s) 2110 (e.g., at depth d) of a parent RAHT node 2111 (e.g., at depth d-1) using top-down coding and inter-depth prediction. One or more steps of example process 2100 may be performed and/or implemented by an encoder (e.g., encoder 114 as described herein with respect to FIG. 1), an example computer system 3400 as described herein with respect to FIG. 34, and/or an example computing device 3530 as described herein with respect to FIG. 35. A set of already-coded neighboring RAHT nodes 2112 of the parent RAHT node 2111 may include RAHT nodes of the RAHT tree at the parent node depth (e.g., depth d-)1 that share at least a vertex with the parent RAHT node 2111.

The encoder may determine the DC coefficients $c_{Ai,d}$ for the parent RAHT node 2111 and each of the already-coded neighboring RAHT nodes 2112. The encoder may determine (e.g., calculate) a mean sum of the attributes value (e.g., $a_{i,d}$) for the parent RAHT node 2111 and a mean sum of attributes value (e.g., $a_{i,d}$) for each of the already-coded neighboring RAHT nodes 2112. The encoder may determine (e.g., calculate) a mean sum of the attributes value (e.g., $a_{i,d}$) for the parent RAHT node 2111 and a mean sum of attributes value (e.g., $a_{i,d}$) for each of the already-coded neighboring RAHT nodes 2112, for example, by dividing the coefficients ($c_{Ai,d}$) of each of those RAHT nodes by the square root of its corresponding quantity (e.g., number) of attributes $\sqrt{w_i}$. A mean sum of attributes $a_{i,d}$ may be obtained as

$$a_{i,d} = \frac{c_{Ai,d}}{\sqrt{w_i}} = \frac{\sum_{a \in A_i} a}{w_i}.$$

The encoder may obtain a predicted mean sum of attributes (e.g., $a_{i,c,up}$) for each child RAHT node 2110. The encoder may obtain a predicted mean sum of attributes (e.g., $a_{i,c,up}$) for each child RAHT node 2110, for example, by up-sampling the mean sums of attributes values (e.g., $a_{i,d}$) determined (e.g., calculated) for the RAHT nodes at the parent node depth (e.g., depth 'd'-1). The encoder may determine a predicted DC coefficient (e.g., $c_{Ai,c,pred}$) for each child RAHT node 2110. The encoder may determine a predicted DC coefficient (e.g., $c_{Ai,c,pred}$) for each child RAHT node 2110, for example, by multiplying the predicted mean sum of attributes (e.g., $a_{i,c,up}$) determined (e.g., calculated) for each child RAHT node 2110 by the square root of its corresponding quantity (e.g., number) of attributes $\sqrt{w_i}$.

The encoder may determine predicted AC coefficients from predicted DC coefficient (e.g., $c_{Ai,c,pred}$). The encoder may determine, based on Equation 1, predicted AC coefficients from predicted DC coefficient. The encoder may determine residual AC coefficients. The encoder may determine residual AC coefficients, for example, by subtracting the predicted AC coefficients from original AC coefficients associated with each child RAHT node 2110. Original AC coefficients associated with a child RAHT node 2110 may be determined by the usual RAHT transform from original attributes to be coded. The residual AC coefficients may be encoded in a bitstream. The residual AC coefficients may be encoded in a bitstream, for example through quantization (e.g., steps 1520, 1630) and entropy coding (steps 1530, 1640).

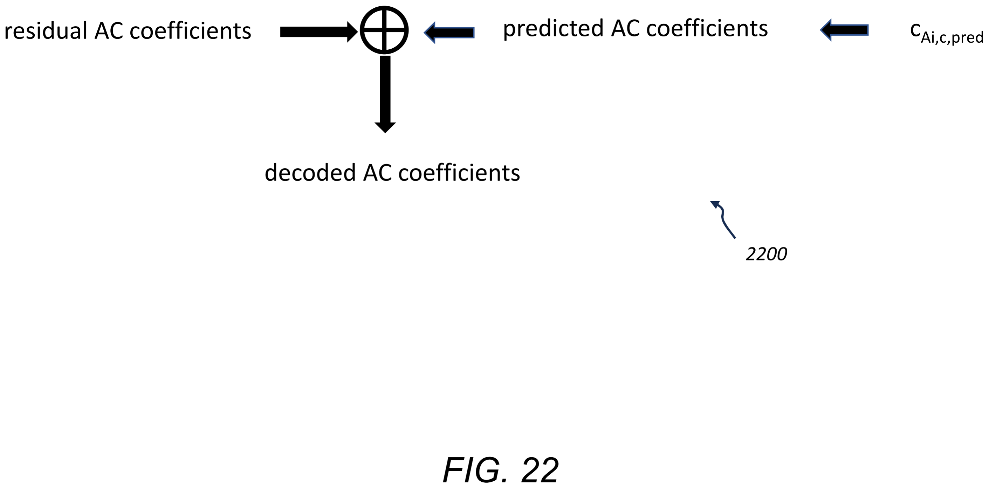

FIG. 22 shows an example process for decoding attribute information for child RAHT nodes. More specifically, FIG. 22 shows an example process 2200 of a method for decoding attribute information for child RAHT nodes (e.g., at depth d) of a parent RAHT node (e.g., at depth d-1) using top-down decoding and inter-depth prediction. The decoder may perform top-down decoding because the inter-depth prediction goes from depth 'd-1' to depth d. The decoder may perform top-down decoding, for example, if inter-depth prediction is used in the RAHT transform and coding.

One or more steps of process 2200 may be performed and/or implemented by a decoder (e.g., decoder 120 as described herein with respect to FIG. 1), an example computer system 3400 as described herein with respect to FIG. 34, and/or an example computing device 3530 as described herein with respect to FIG. 35. The decoder may generate the predicted AC coefficients. The decoder may employ/use the same inter-depth prediction process to generate the predicted mean sum of attributes values (e.g., $c_{Ai,c,pred}$) for each child node 2110 and the predicted AC coefficients. The decoder may reconstruct the residual AC coefficients from a bitstream. The decoder may reconstruct the residual AC coefficients from a bitstream, for example through entropy decoding (e.g., steps 1710, 1810) and inverse quantization (e.g., steps 1720, 1820). The decoder may determine decoded AC coefficients. The decoder may determine decoded AC coefficients, for example, by adding the predicted AC coefficients to the reconstructed residual AC coefficients.

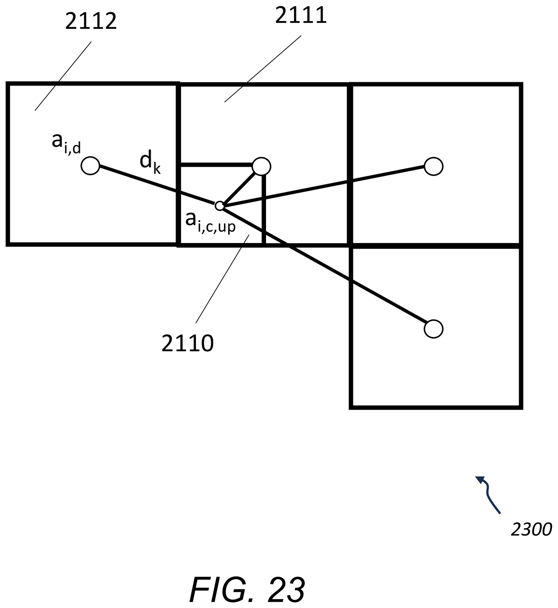

FIG. 23 shows an example method for up-sampling the mean sums of attributes values of RAHT nodes. More specifically, FIG. 23 shows an example process 2300 of a method for up-sampling the mean sums of attributes values of RAHT nodes (e.g., at depth 'd-1'). The RAHT nodes may include, for example, the parent RAHT node 2111 and the already-coded neighboring RAHT nodes 2112. This example shown in Fig. 23 may be illustrated in two dimensions. Extension to three dimensions may be understood in light of the description herein.

The up-sampling operation may consider (e.g., use) a distance metric $d_k$ relating the child RAHT node 2110 to a RAHT node k at depth 'd-1'. The RAHT node k at depth 'd-1' may, for example, be either the parent RAHT node 2111 or each of the three (in this example shown in Fig. 23) already-coded neighboring RAHT nodes 2112. This distance metric $d_k$ may represent a geometric distance between a center point of the sub-volume corresponding to the child RAHT node 2110 and a center point of the sub-volume corresponding to the RAHT node k 2111, 2112. The inverse $d_k^{-1}$ of the distance metric $d_k$ may represent the relative weight of correlation between attribute information from the child RAHT node 2110 and the RAHT node k. Other weighting factors, or additional weighting factors, may be used in other implementations of the up-sampling operation. The predicted mean sum of attributes $a_{i,c,up}$ for the child RAHT node 2110 may be given by the weighted sum:

$$a_{i,c,up} = \sum_k d_k^{-1} a_k / \sum_k d_k^{-1}$$

where $a_k$ may indicate the mean sum of attributes determined (e.g., calculated) for the RAHT node **k.**

AC coefficients may be directly coded, for example, if neither intra (e.g., inter-depth prediction) nor inter prediction are used. The direct coding of AC coefficients may be equivalent to coding residual AC coefficients relative to a null predictor. The direct coding of AC coefficients may be referred to as a null prediction mode for coding the current RAHT node. Prediction modes used for coding attribute information of RAHT nodes may be entropy coded in the bitstream, for example, to obtain improved compression performance.

A prediction mode (e.g., null, intra, inter), for each RAHT node of the RAHT tree, may be encoded as an indication comprising one or more symbols. For example, at most two binary symbols (e.g., flags) may be used to represent one of the three prediction modes. The first binary symbol may signal/indicate if the prediction mode is the null prediction mode. The second binary symbol may signal/indicate whether the prediction mode is either intra or inter prediction mode, for example, if the prediction mode is signaled to not be the null prediction mode.

Each of the one or more symbols may be entropy coded, in the bitstream, by an entropy coder that may code binary symbols. The entropy coder may code binary symbols, for example, based on selecting a context (e.g., a probability model or a context model), indicating probability of values of the binary symbols, based on contextual information. A context may, for example, indicate a probability of a value of the symbol being zero (or one). The contextual information may be used to derive/determine an index to a set of contexts. The derived index may be used to obtain the context from the set of contexts. The index, for example, may point to the context in a list or table containing the set of contexts.

An already-predicted neighboring RAHT node may be an already-coded neighboring RAHT node using a prediction mode for coding its AC coefficients. Contextual information may be obtained. Contextual information may be obtained, for example, based on determining a most common/used prediction mode (e.g., referred to as majority voting) among the already-predicted neighboring RAHT nodes 2112 of the parent RAHT node 2111. The most used prediction mode may be determined among the prediction modes (e.g., one of null, intra, or inter) used for coding the AC coefficients of already-predicted neighboring RAHT nodes 2112. The determining of the most used prediction mode may, for example, lead to a ternary contextual information (e.g., most common prediction mode being one of null, intra, inter) used to code the prediction mode of a current RAHT node 2110. Contextual information may be further obtained, for example, based on prediction mode (e.g., null, intra, inter) of a parent RAHT node and on the quantity (e.g., number) $N_{AC}$ of AC coefficients of the current RAHT node. The quantity/number $N_{AC}$ of AC coefficients of the current RAHT node may, for example, be the quantity (e.g., number) of child nodes of the current RAHT node minus one.

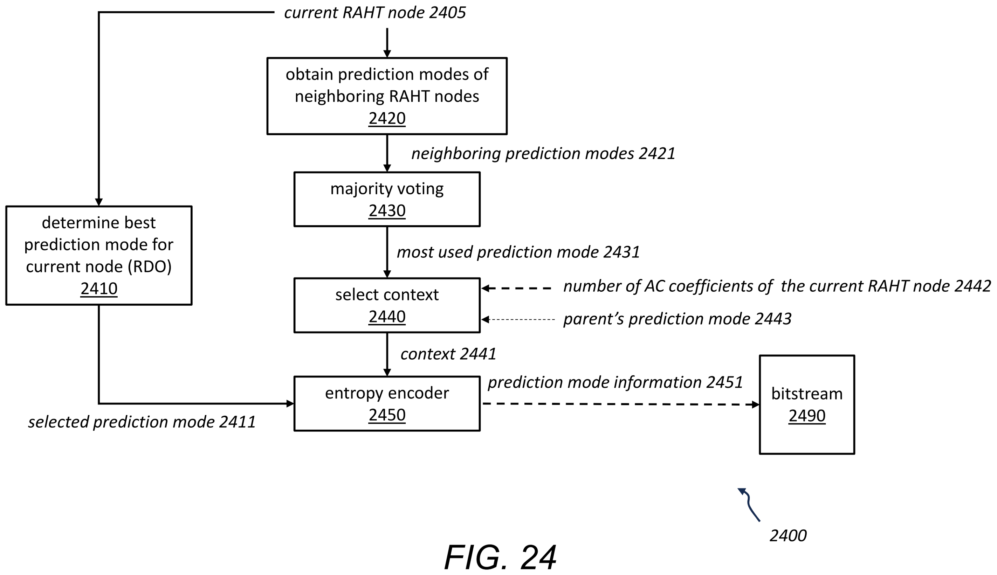

FIG. 24 shows an example method for encoding a selected prediction mode. More specifically, FIG. 24 shows an example process 2400 of a method for encoding, in a bitstream, a selected prediction mode used for encoding AC coefficients of a current RAHT node 2405.

One or more steps of example process 2400 may be performed and/or implemented by an encoder (e.g., encoder 114 as described herein with respect to FIG. 1), an example computer system 3400 as described herein with respect to FIG. 34, and/or an example computing device 3530 as described herein with respect to FIG. 35. Steps 2410-2450 may represent components within the encoder.

At step 2410, the encoder may determine a selected prediction mode 2411. The encoder may determine a selected prediction mode, for example, by an RDO process that tests possible prediction modes, and may select the one with the least rate-distortion cost. For example, the prediction mode 2411 may be a null, intra, or inter prediction mode. At step 2450, the encoder may entropy encode, as prediction mode information 2451, an indication of the selected prediction mode 2411 based on a context 2441. The encoder may entropy encode, in a bitstream 2490, the indication of the selected prediction mode 2411.

At step 2420, the encoder may obtain prediction modes 2421 of the already-predicted neighboring RAHT nodes 2112. At step 2430, the encoder may obtain a most used prediction mode 2431. The encoder may obtain a most used prediction mode 2431, for example, by performing a majority voting comparison among the already-predicted neighboring RAHT nodes 2112.

At step 2440, the encoder may select, for example, among a set of contexts, the context 2441. The encoder may select the context 2441, for example, based on the most used prediction mode 2431. The determined (e.g., obtained) most-used prediction mode 2431 may be used to derive an index that points to the context from the set of contexts. The context selection may be further performed, for example, based on the quantity (e.g., number) of AC coefficients of the current RAHT node 2442 in the current RAHT node 2405. Additionally or alternatively, the context selection may be performed, for example, based on the prediction mode 2443 of the parent RAHT node of the current RAHT node 2405.

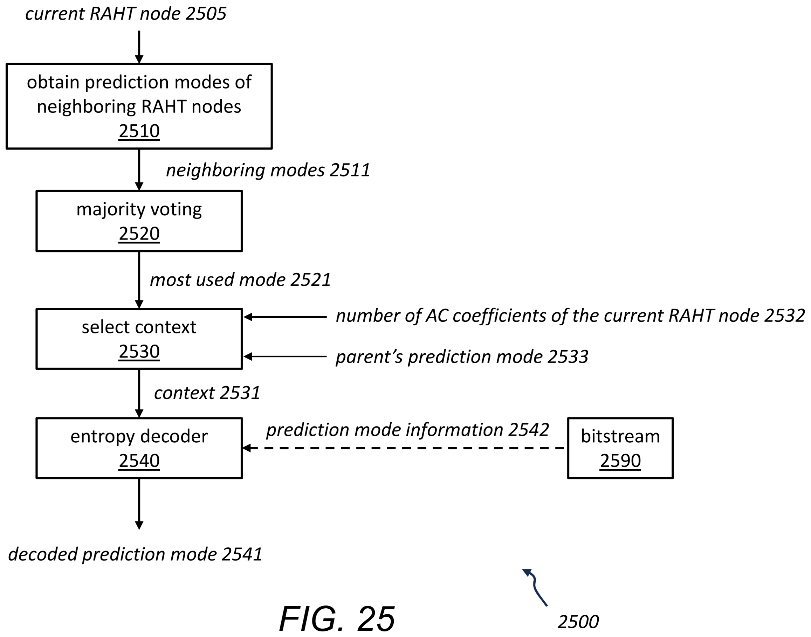

FIG. 25 shows an example method for decoding a prediction mode. More specifically, FIG. 25 shows an example process 2500 of a method for decoding, from a bitstream 2590, a prediction mode used for encoding AC coefficients of a current RAHT node 2505.

One or more steps of process 2500 may be performed and/or implemented by a decoder (e.g., decoder 120 as described herein with respect to FIG. 1), an example computer system 3400 as described herein with respect to FIG. 34, and/or an example computing device 3530 as described herein with respect to FIG. 35. Steps 2510-2590 may represent components within the decoder. The bitstream 2590 may be typically obtained from an encoding method, for example, the encoding method described herein with respect to FIG. 24.

At step 2540, the decoder may determine (e.g., obtain) a decoded prediction mode (e.g., decoded prediction mode 2541). The decoded prediction mode may include, for example, a null, intra or inter prediction mode. The decoder may determine (e.g., obtain) the decoded prediction mode (decoded prediction mode 2541), for example, by entropy decoding, from the bitstream 2590 and based on a context 2531, prediction mode information 2542. The decoder may entropy decode an indication of prediction mode 2541, for example, based on the context 2531. The context 2531 may be obtained, for example, via steps 2510, 2520, and 2530. The steps 2510, 2520, and 2530 may correspond to same steps 2420, 2430, and 2440, respectively, of the encoding method described herein regarding FIG. 24 to ensure synchronization between encoding and decoding methods.

The iterative RAHT transform may be performed in two phases. In a first phase, a bottom-up (or ascend) traversal of the RAHT tree (e.g., octree) may be performed to compute information (e.g., quantity/number of attributes, weights, inter predictor, etc.) of each of the RAHT nodes. In a second phase, the transform and coding may be performed based on a top-down (descend) traversal of the RAHT tree. Encoding and decoding of RAHT coefficients may be performed in the descend phase. Encoding and decoding of RAHT coefficients may be performed in the descend phase, for example, because the inter-depth prediction uses weights computed in/during the ascend phase and AC coefficients associated with already-predicted (coded) neighboring RAHT nodes at the parent node depth of the current node. Inter-depth prediction may be coded down from the root node of the RAHT tree. Encoding and decoding of RAHT coefficients may start from the root RAHT node of the RAHT tree and may go down depth per depth until leaf RAHT nodes (corresponding to voxels) are reached. For each depth, the traversal of RAHT nodes may be in a specific order, for example, following a Morton order or a raster scan order.

The RAHT bitstream resulting from the encoding of RAHT coefficients may be constructed. The RAHT bitstream resulting from the encoding of RAHT coefficients may be constructed, for example, based on the traversal of the RAHT tree. A prediction mode (e.g., null, intra, inter), for each RAHT node, may be selected. A prediction mode (e.g., null, intra, inter), for each RAHT node, may be selected, for example by performing a Rate Distortion Optimization (RDO). A prediction mode (e.g., the prediction mode selected by performing RDO), for each RAHT node, may be encoded in the RAHT bitstream by the RAHT encoding process. AC coefficients may be determined and encoded in the RAHT bitstream, for example, based on the selected prediction mode.

Decoding of RAHT coefficients may follow the same traversal order as the encoding of RAHT coefficients. Prediction modes and AC coefficients may be decoded in the same order as encoded by the encoding of RAHT coefficients.

Much of the bitstream may comprise the entropy coded prediction modes associated with RAHT nodes. It is important to ensure effective entropy coding of the prediction modes to obtain overall good compression performance of the RAHT scheme. Good entropy coding may be obtained by careful construction of contextual information that drives the selection of contexts.

The contextual information determined (e.g., obtained) based on majority voting among the already-predicted neighboring RAHT nodes 2112 of the parent RAHT node 2111 may be improved thus leading to better compression performance of the RAHT scheme. The prediction mode may be the null mode, for example, if neither of intra (e.g., inter-depth) prediction nor inter prediction are available as prediction mode. The null mode may be almost never selected by the encoder's RDO process (e.g., step 1120), for example, if at least one of the intra prediction or inter prediction is available. Consequently, the entropy coding of the binary information signaling the selection between intra (e.g., inter-depth) and inter prediction modes may be a target for significant compression improvement.

Examples of the present disclosure are related to an improved coding of this binary information by determining the contextual information based on a ratio between a quantity (e.g., number) of already-inter-predicted neighboring RAHT nodes of the current RAHT node and a total quantity (e.g., number) of already-intra-predicted or already-inter-predicted neighboring RAHT nodes of the current RAHT node. The total quantity (e.g., number) of already-intra-predicted or already-inter-predicted neighboring RAHT nodes may be a total quantity (e.g., number) of already-predicted neighboring RAHT nodes predicted using any mode from a group comprising: already-intra-predicted or already-inter-predicted. An already-intra-predicted neighboring RAHT node may be an already-coded neighboring RAHT node using an intra prediction mode (e.g., the above inter-depth prediction mode) for coding its AC coefficients. An already-inter-predicted neighboring RAHT node may be an already-coded neighboring RAHT node using an inter prediction mode (e.g., as defined by the inter RAHT scheme) for coding its AC coefficients. The contextual information may be derived as an index to a set of contexts used to entropy code an indication (e.g., one or more symbols) of the prediction mode for coding AC coefficients of a RAHT node. More specifically, the contextual information may indicate probability of values of the binary symbols. The entropy coder may use the contextual information to achieve an improved compression of the binary information (e.g., the AC coefficients).

FIG. 26 shows an example method for encoding an indication of a selected prediction mode. More specifically, FIG. 26 shows an example process 2600 of a method for encoding, in a bitstream 2490, an indication of a selected prediction mode 2411 used for encoding AC coefficients of a current RAHT node.

One or more steps of example process 2600 may be performed and/or implemented by an encoder (e.g., encoder 114 as described herein with respect to FIG. 1), an example computer system 3400 as described herein with respect to FIG. 34, and/or an example computing device 3530 as described herein with respect to FIG. 35. The process of FIG. 26 may include the same operations (shown as having the same labeled steps) as described herein with respect to FIG. 24. Different from the process of FIG. 24, the process 2600 of FIG. 26 may replace steps 2430 of FIG. 24 by steps 2610 and 2620, and replace step 2440 by step 2630. Steps 2610-2630 may represent components within the encoder.

At step 2610, the encoder may obtain a quantity (e.g., number) $N_{intra}$ 2611 of already-intra-predicted neighboring RAHT nodes of the current RAHT node 2405 and a quantity (e.g., number) $N_{inter}$ 2611 of already-inter-predicted neighboring RAHT nodes of the current RAHT node 2405. At step 2620, the encoder may determine an index 2621 for a set of contexts. The encoder may determine an index 2621 for a set of contexts, for example, based on a ratio $\rho$ between the quantity (e.g., number) $N_{inter}$ and a total quantity (e.g., number) $N_{total}$ of already-intra-predicted or already-inter-predicted neighboring RAHT nodes of the current RAHT node 2405. For example, the total quantity (e.g., number) $N_{total}$ may be of already-coded neighboring RAHT nodes with AC coefficients predicted using any mode from a group of modes. The group of modes may include intra prediction mode and inter prediction mode.

The ratio $\rho$ may be associated with a subset of indexes, from which the index is determined to select the context from the set of contexts. The index 2621 may be represented as a combination of symbols. Each index may correspond, for example, to a unique combination of values of the symbols. The index 2621 may be derived as a linear combination of values of the symbols. The ratio $\rho$ may be used, for example, to determine a value of one symbol of the symbols. The one symbol may have a value from a range of values, and the ratio $\rho$ may be used to determine the value.

The ratio $\rho$ may be determined (e.g., derived) as:

$$\rho = \frac{N_{inter}}{N_{total}}$$

with $N_{total} = N_{intra} + N_{inter}$.

The ratio $\rho$ may be converted to one value in a range of values of the symbol. The value of the ratio $\rho$ may be quantized to be a value in the range of values. The ratio $\rho$ may be compared to a set of thresholds, and the symbol value may correspond to the ratio $\rho$ being between (or within) two consecutive thresholds of the set of thresholds.

At step 2630, the encoder may select a context 2631 from a set of contexts. The encoder may select a context 2631 from a set of contexts, for example, based on the index 2621. The index 2621 may point to the context in a list (or table) of contexts including (or referencing) the set of contexts.

FIG. 27A and FIG. 27B show example simulation results showing an occurrence of intra prediction mode or inter prediction mode. More specifically, FIG. 27A and FIG. 27B show example simulation results showing an occurrence of intra prediction mode or inter prediction mode being selected by the encoder for coding AC coefficients of a RAHT node being highly correlated with a ratio of the probability of selection of inter prediction mode.

FIG. 27A shows an example of a histogram plot of occurrence of intra prediction mode. More specifically, FIG. 27A shows an example of a histogram plot of occurrence of intra prediction mode as selected prediction mode 2411 depending on the ratio ρ.

FIG. 27B shows an example of a histogram plot of occurrence of inter prediction mode. More specifically, FIG. 27B shows an example of a histogram plot of occurrence of inter prediction mode as selected prediction mode 2411 depending on the ratio ρ.

Low values of the ratio ρ may be highly correlated with selection of an intra prediction mode, and high values of the ratio ρ may be correlated with selection of an inter prediction mode. The correlation may be confirmed between the prediction modes, used for encoding AC coefficients of already-coded neighboring RAHT nodes of the current RAHT node 2405, and the selected prediction mode 2411 of the current RAHT node 2405.

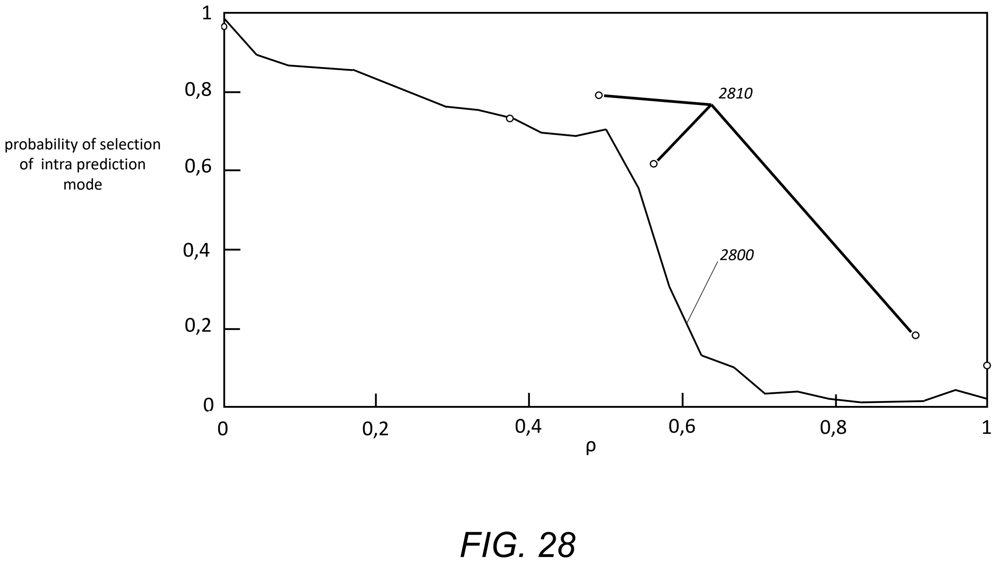

FIG. 28 shows an example of a probability of selection of intra prediction mode. More specifically, FIG. 28 shows an example of a probability of selection of intra prediction mode (as opposed to inter prediction mode) depending on the ratio ρ observed from simulation results. An inverse pattern may be observed for the probability of selection of inter prediction mode based on ratio ρ because the inter prediction mode is selected if the intra prediction mode is not selected.

This probability (depicted by curve 2800 as shown in Fig. 28) may be a continuous and generally decreasing function of the ratio ρ. A sharp transition may be observed around value ρ=0.55. Using a simple majority voting mechanism, which may be optimal (e.g., if the curve 2800 follows a Heaviside function transitioning from 1 to 0 at value ρ=0.5) may not be aligned with what is observed in simulation results. Considering the ratio ρ in selecting the context (e.g., probability/context model) for coding an indication of the prediction model may align the prediction closer to what has been observed in simulation results, which may result in more accurate prediction and increased compression of the indication.

At step 2630, the encoder may select the context 2631 from the set of contexts. The encoder may select the context 2631 from the set of contexts, for example, based on the quantity (e.g., number) $N_{AC}$ of coefficients of the current RAHT node 2405. The encoder may derive the index. The encoder may derive the index, to the set of contexts, based on the ratio ρ and the quantity (e.g., number) $N_{AC}$ of coefficients.

At step 2630, the encoder may select the context 2631 from the set of contexts, for example, based on the prediction mode 2443 used for encoding the AC coefficients of the parent node of the current RAHT node 2405. The encoder may derive the index, to the set of contexts, for example, based on the ratio ρ, the quantity (e.g., number) $N_{AC}$ of coefficients, and the prediction mode 2443.

Combinations of the contextual information (e.g., including the ratio ρ, the quantity (e.g., number) $N_{AC}$ of coefficients, and/or the prediction mode 2443, etc.) may correspond to (e.g., map to) a specific context from the set of contexts. Each unique combination of various contextual information may be used to derive a specific index that maps to a respective context from the set of contexts.

FIG. 29 shows an example method for decoding an indication of a selected prediction mode. More specifically, FIG. 29 shows an example process 2900 of a method for decoding, from a bitstream 2590, an indication of a selected prediction mode 2541 used for decoding AC coefficients of a current RAHT node 2505.

One or more steps of process 2900 may be performed and/or implemented by a decoder (e.g., decoder 120 as described herein with respect to FIG. 1), an example computer system 3400 as described herein with respect to FIG. 34, and/or an example computing device 3530 as described herein with respect to FIG. 35. Process 2900 may include the same operations (e.g., shown as having the same labeled steps) as described herein with respect to FIG. 25. Different from the process of FIG. 25, process 2900 of FIG. 29 may replace steps 2520 of FIG. 25 by steps 2610 and 2620 of FIG. 26, and may replace step 2530 of FIG. 25 by step 2630 of FIG. 26. Steps 2610-2630 may represent components within the decoder. As discussed herein, the process of deriving the index to select a context, from a set of contexts, used to entropy code an indication of the prediction mode 2541 may be the same at the decoder and the encoder. Similar to the process of the encoder as described herein with respect to FIG. 26, the decoder may perform steps 2610, 2620, and 2630 to select the same context selected by the encoder to encode the indication of the prediction mode 2541.

The bitstream 2590 may be obtained from the encoding method described herein with respect to FIG. 26, and may include prediction mode information 2542 such as the indication of prediction mode 2541. As described herein, the indication may be represented by one or more symbols. The one or more symbols may include a first symbol indicating whether a null prediction mode is selected and if not, a second symbol indicating which of intra prediction and inter prediction mode is selected. Step 2540 may refer to entropy coding the second symbol indicating whether intra prediction mode or inter prediction mode is selected for coding AC coefficients of current RAHT node 2505.

FIG. 30 shows an example method for determining at least one symbol representing prediction mode statistics. More specifically, FIG. 30 shows an example process 3000 of a method for determining at least one symbol representing prediction mode statistics over already-intra-predicted and/or already-inter-predicted neighboring RAHT nodes of a current RAHT node. An index 2621 may be derived. The index 2621 may be derived, for example, based on the at least one symbol. A value of index 2621 may be a combination (e.g., a linear combination) of the values of the at least one symbol. One or more steps of the process 3000 may be performed and/or implemented by an encoder (e.g., encoder 114 as described herein with respect to FIG. 1), a decoder (e.g., decoder 120 as described herein with respect to FIG. 1), an example computer system 3400 as described herein with respect to FIG. 34, and/or an example computing device 3530 as described herein with respect to FIG. 35.

The index 2621 may be based on a symbol representing, for example, a quantized value $Q(\rho)$ of the ratio $\rho$ among a set of quantized values. The index 2621 may be based on a symbol representing, for example, a binary value $b(\rho)$ indicating whether the ratio $\rho$ is lower than a threshold. The index 2621 may be based on a symbol determined, for example, based on the ratio $\rho$ if/when the total quantity (e.g., number) $N_{total}$ is lower than a threshold TH1.

Returning to FIG. 28, dots/points 2810 may correspond to probability values of selecting intra prediction mode for different quantity/number values of the ratio $\rho$, for example, if the total quantity (e.g., number) $N_{total}$ is less than or equal to five, $N_{total} \leq 5$. The dots/points 2810 may be significantly far from the curve 2800. The dots/points 2810 may show that different total quantities (e.g., numbers) of already-intra-predicted or already-inter-predicted neighboring RAHT nodes may change the statistics of selection probabilities. An accuracy of the probability of selecting intra vs inter prediction mode may be further improved by considering the total quantity (e.g., number) $N_{total}$ in addition to the ratio $\rho$.

The context selection (step 2630) may be further based on another symbol (e.g., symbol 2622 as shown in Fig. 30). The another symbol 2622 may be determined (step 2620), for example, based on the total quantity (e.g., number) $N_{total}$ of already-intra-predicted or already-inter-predicted neighboring RAHT nodes of the current RAHT node. The symbol 2622 may be a quantized value $Q(N_{total})$, from a set of quantized values, of the total quantity (e.g., number) $N_{total}$. The symbol 2622 may be a binary value $b(N_{total})$ indicating whether the total quantity (e.g., number) $N_{total}$ is lower than a threshold TH2.

From histograms of FIGs. 27A-27B, extreme values (e.g., values close to 0 or close to 1) of the ratio $\rho$ may be observed in simulation results to be overrepresented, implying the presence of many current RAHT nodes having only intra-predicted neighboring RAHT nodes or only inter-predicted neighboring RAHT nodes as already-predicted neighboring RAHT nodes. A better representation of the prediction mode statistics may be determined (e.g., obtained), for example, by having one symbol (e.g., symbol 2623) indicate whether $N_{intra}$ and/or $N_{inter}$ equals zero.

The context (step 2630) may, for example, be further based on the symbol (e.g., symbol 2623) that indicates either whether the quantity (e.g., number) $N_{intra}$ equals zero, or whether the quantity (e.g., number) $N_{inter}$ equals zero, or whether both the $N_{intra}$ and the quantity (e.g., number) $N_{inter}$ equal zero. The context (step 2630) may, for example, be further based on another symbol (e.g., symbol 2624 as shown in FIG. 30) that indicates either the quantity (e.g., number) $N_{intra}$ or the quantity (e.g., number) $N_{inter}$. The context selection (step 2630) may, for example, be further based on first symbol 2627 that indicates the quantity (e.g., number) $N_{intra}$, and second symbol 2628 that indicates the quantity (e.g., number) $N_{inter}$.

The quantities (e.g., numbers) $N_{intra}$ and $N_{inter}$ may be large. The quantities (e.g., numbers) $N_{intra}$ and $N_{inter}$ may be large for example, due to the possibly many already-coded neighboring RAHT node of the current RAHT node. This may lead to too many bits for the symbol (e.g., symbols 2624, 2627, 2628). The context would be selected based on a large set of contexts. The selected context may be based on diluted prediction mode statistics over the already-intra-predicted or already-inter-predicted neighboring RAHT nodes of the current RAHT node, leading to poor convergence of the context probabilities and lowered compression performance.

The context (step 2630) may, for example, be further based on another symbol (e.g., symbol 2626 as shown in FIG. 30) that indicates either a clipped quantity (e.g., number) $N_{intra,cap}$ determined (e.g., obtained) by clipping the quantity (e.g., number) $N_{intra}$ to a first maximum value M1, or a clipped quantity (e.g., number) $N_{inter,cap}$ determined (e.g., obtained) by clipping the quantity (e.g., number) $N_{inter}$ to a second maximum value M2.

$$N_{intra,cap} = \min(N_{intra}, M_1)$$

$$N_{inter,cap} = \min(N_{inter}, M_2)$$

The context selection (step 2630) may, for example, be further based on another symbol (e.g., symbol 2629) that indicates the clipped quantity (e.g., number) $N_{intra,cap}$ and another second symbol (e.g., symbol 2630) that indicates the clipped quantity (e.g., number) $N_{inter,cap}$. Clipping the quantities (e.g., numbers) $N_{intra}$ and $Ni_{inter}$ may lead to symbols with reasonable size that avoids dilution of statistics.

Dilution of statistics may be mitigated by using an OBUF scheme (FIG. 6) that is able to take many symbols as entry to select a context. The dilution of statistics may be mitigated by using an OBUF scheme (FIG. 6) that is able to take many symbols as entry to select a context, for example, if the symbol (.g., symbol 2624) indicates either the quantity (e.g., number) $N_{intra}$ or the quantity (e.g., number) $N_{inter}$, or if the symbol (e.g., symbol 2627) indicates the quantity (e.g., number) $N_{intra}$ and the symbol (e.g., symbol 2628) indicates the quantity (e.g., number) $N_{inter}$. The quantity (e.g., number) of contexts of the set of contexts may be independent of the quantity (e.g., number) $N_{intra}$ and/or the quantity (e.g., number) $N_{inter}$, and the context may be obtained as output of OBUF method if/when the quantity (e.g., number) $N_{intra}$ and/or the quantity (e.g., number) $N_{inter}$ may be an input of the OBUF method.

The context selection (step 2630) may, for example, be based on at least one symbol indicating one of the following five types of context information:

- the quantity (e.g., number) of AC coefficients in the current RAHT node;
- the ratio $\rho$;
- the prediction mode used for coding AC coefficients of the parent node of the current RAHT node;
- the total quantity (e.g., number) $N_{total}$; or
- an information indicating whether the quantity (e.g., number) $N_{intra}$ equals zero and/or the quantity (e.g., number) $N_{inter}$ equals zero.

The context selection (step 2630) may, for example, be based on a plurality of symbols representing a plurality of context information. The plurality of context information may include two or more of the five types of context information shown and described herein. Values of the plurality of symbols may be combined to derive an index that points to the context selected from the set of contexts. A unique combination of the plurality of symbols may be associated with an index indicating a specific context from the set of contexts.

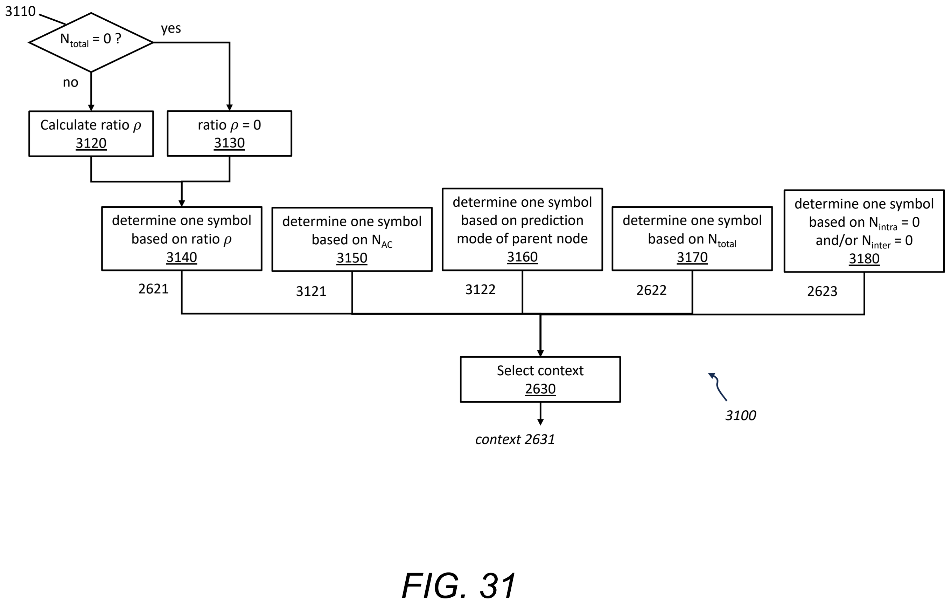

FIG. 31 shows an example method for selecting a context. More specifically, FIG. 31 shows an example of process 3100 of a method for selecting a context. One r more steps of process 3100 may be performed and/or implanted by a coder such as an encoder (e.g., encoder 114 as described herein with respect to FIG. 1), a decoder (e.g., decoder 120 as described herein with respect to FIG. 1), an example computer system 3400 as described herein with respect to FIG. 34, and/or an example computing device 3530 as described herein with respect to FIG. 35. Steps 3110-3180 may represent components within a coder such as the encoder or the decoder. As described herein, the coder may determine an index to a set of contexts based on at least one symbol. The at least one symbol may include a plurality of symbols each representing a type of contextual information.

At step 3110, the coder may determine whether the quantity (e.g., number) $N_{total}$ is equal to zero (0). The coder may calculate the ratio $\rho$ as discussed herein at step 3120, for example, if the quantity (e.g., number) $N_{total}$ is not equal to 0. The coder may set the ratio $\rho$ to 0, for example, if the quantity (e.g., number) $N_{total}$ is equal to 0, at step 3130,.

At step 3140, the coder may determine a symbol (e.g., the at least one symbol to derive index 2621). The coder may determine the symbol, for example, based on the ratio $\rho$ (step 3120 or 3130). The coder may determine the value of the symbol that represents or is associated with the ratio $\rho$.

At step 3150, the coder may determine one symbol 3121 indicating the quantity (e.g., number) $N_{AC}$ of AC coefficients of the current RAHT node. At step 3160, the coder may determine one symbol 3122 indicating the prediction mode used for coding AC coefficients of the parent node of the current RAHT node.

At step 3170, the coder may determine the symbol 2622 related to the total quantity (e.g., number) $N_{total}$. At step 3180, the coder may determine the symbol 2623 indicating whether the quantity (e.g., number) $N_{intra}$ equals zero, or whether the quantity (e.g., number) $N_{inter}$ equals zero, or whether both the $N_{intra}$ and the quantity (e.g., number) $N_{inter}$ are equal zero.

At step 2630 of FIG. 26, the context may be selected. The context may be selected, for example, based on the determined symbols 2621, 2622, 2623, 3121, and 3122. As described herein with respect to FIG. 30, the coder may determine an index, to a set of contexts, based on values of a plurality of symbols. The coder may derive the index, for example, based on a linear combination of the values. The coder may derive the index that maps to the specific values of the plurality of symbols.

The coder may select the context pointed to by the index in a list/table of the set of contexts. The already-coded neighboring RAHT nodes of the current RAHT node may comprise the parent node of the current RAHT node and one or more other children RAHT nodes of the parent node. The already-coded neighboring RAHT nodes of the current RAHT node may comprise the parent node of the current RAHT, nodes at a parent depth spatially close to the parent (e.g., within a quantity/number of depth indexes of a depth index of the parent node), and child nodes of the latter.

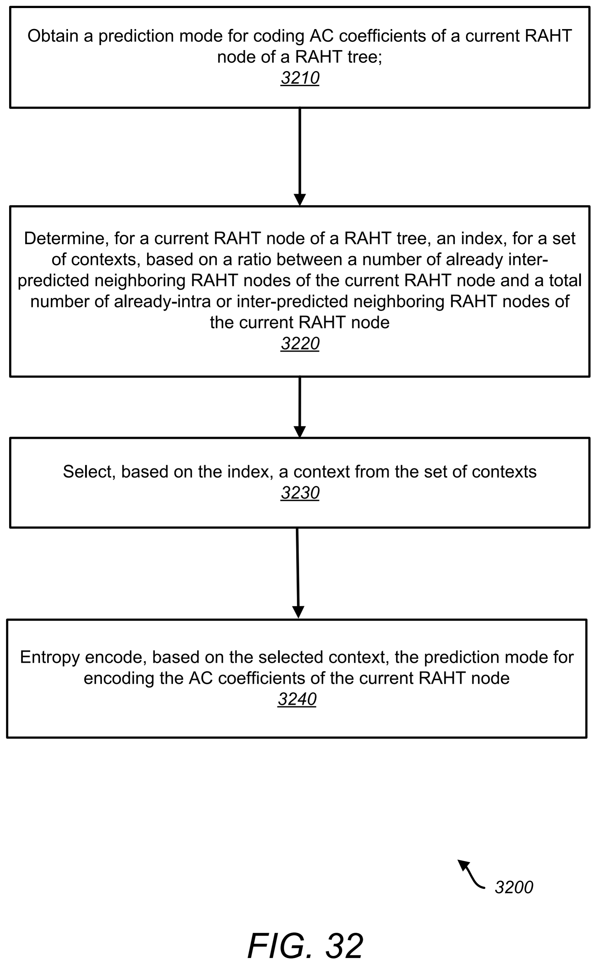

FIG. 32 shows an example method for entropy encoding AC coefficient of a current RAHT node. More specifically, FIG. 32 shows a flowchart 3200 of an example method for entropy encoding AC coefficient of a current RAHT node. The flowchart 3200 of FIG. 32 may be performed and/or implemented by an encoder (e.g., encoder 114 as described herein with respect to FIG. 1), an example computer system 3400 as described herein with respect to FIG. 34, and/or an example computing device 3530 as described herein with respect to FIG. 35.

At step 3210, a prediction mode for coding AC coefficients of a current RAHT node of a RAHT tree may be determined (e.g., obtained). For example, the encoder may determine (e.g., obtain) a prediction mode for coding AC coefficients of a current RAHT node of a RAHT tree. At step 3220, an index, for a set of contexts, may be determined. The encoder may determine an index for a set of contexts, for example, based on the ratio $\rho$ between the quantity (e.g., number)

$N_{inter}$ and the total quantity (e.g., number) $N_{total}$. The ratio $\rho$ may be used to determine a value of a symbol of a plurality of symbols. The encoder may derive the index, for example, based on combining values of the plurality of symbols.

At step 3230, a context may be selected from the set of contexts. The encoder may select the context from the set of contexts, for example, based on the index. At step 3240, an indication of the prediction mode for coding the AC coefficients of the current RAHT node may be entropy encoded. The encoder may entropy encode an indication of the prediction mode for coding the AC coefficients of the current RAHT node, for example, based on the selected context.

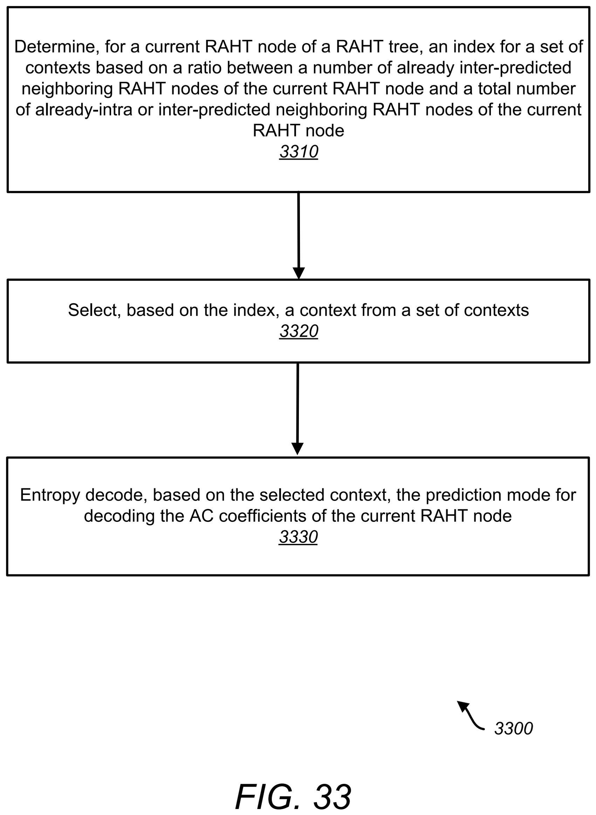

FIG. 33 shows an example method for entropy decoding AC coefficient of a current RAHT node. More specifically, FIG. 33 shows a flowchart 3300 of an example method for entropy decoding AC coefficient of a current RAHT node. The flowchart 3300 of FIG. 33 may be performed and/or implemented by a decoder (e.g., decoder 120 as described herein with respect to FIG. 1), an example computer system 3400 as described herein with respect to FIG. 34, and/or an example computing device 3530 as described herein with respect to FIG. 35.

At step 3310, an index for a set of contexts may be determined, for a current RAHT node of a RAHT tree. The decoder may determine an index for a set of contexts, for example, based on the ratio $\rho$ between the quantity (e.g., number) $N_{inter}$ and the total quantity (e.g., number) $N_{total}$. Each value of the index may point to a respective context of the set of contexts.

The ratio $\rho$ may be used to determine a value of a symbol of a plurality of symbols. The decoder may derive the index based on combining values of the plurality of symbols.

At step 3320, a context may be selected from a set of contexts. The decoder may select a context from a set of contexts, for example, based on the index. At step 3330, an indication of the prediction mode for coding the AC coefficients of the current RAHT node may be entropy decoded. The decoder may entropy decode an indication of the prediction mode for coding the AC coefficients of the current RAHT node, for example, based on the selected context.

FIG. 34 shows an example computer system in which examples of the present disclosure may be implemented. For example, the example computer system 3400 shown in FIG. 34 may implement one or more of the methods described herein. For example, various devices and/or systems described herein (e.g., in FIG. 1) may be implemented in the form of one or more computer systems 3400. Furthermore, each of the steps of the flowcharts depicted in this disclosure may be implemented on one or more computer systems 3400.

The computer system 3400 may comprise one or more processors, such as a processor 3404. The processor 3404 may be a special purpose processor, a general purpose processor, a microprocessor, and/or a digital signal processor. The processor 3404 may be connected to a communication infrastructure 3402 (for example, a bus or network). The computer system 3400 may also comprise a main memory 3406 (e.g., a random access memory (RAM)), and/or a secondary memory 3408.

The secondary memory 3408 may comprise a hard disk drive 3410 and/or a removable storage drive 3412 (e.g., a magnetic tape drive, an optical disk drive, and/or the like). The removable storage drive 3412 may read from and/or write to a removable storage unit 3416. The removable storage unit 3416 may comprise a magnetic tape, optical disk, and/or the like. The removable storage unit 3416 may be read by and/or may be written to the removable storage drive 3412. The removable storage unit 3416 may comprise a computer usable storage medium having stored therein computer software and/or data.

The secondary memory 3408 may comprise other similar means for allowing computer programs or other instructions to be loaded into the computer system 3400. Such means may include a removable storage unit 3418 and/or an interface 3414. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 3418 and interfaces 3414 which may allow software and/or data to be transferred from the removable storage unit 3418 to the computer system 3400.

The computer system 3400 may also comprise a communications interface 3420. The communications interface 3420 may allow software and data to be transferred between the computer system 3400 and external devices. Examples of the communications interface 3420 may include a modem, a network interface (e.g., an Ethernet card), a communications port, etc. Software and/or data transferred via the communications interface 3420 may be in the form of signals which may be electronic, electromagnetic, optical, and/or other signals capable of being received by the communications interface 3420. The signals may be provided to the communications interface 3420 via a communications path 3422. The communications path 3422 may carry signals and may be implemented using wire or cable, fiber optics, a phone line, a cellular phone link, an RF link, and/or any other communications channel(s).

The computer system 3400 may also comprise one or more sensor(s) 3424. The sensor(s) 3424 may measure or detect one or more physical quantities and convert the measured or detected physical quantities into an electrical signal in digital and/or analog form. For example, the sensor(s) 3424 may include an eye tracking sensor to track the eye movement of a user. A display of a point cloud may be updated, for example, based on the eye movement of a user. The sensor(s) 3424 may include a head tracking sensor to track the head movement of a user. A display of a point cloud may be updated, for example, based on the head movement of a user. The sensor(s) 3424 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 3416 and 3418 or a hard disk installed in the hard disk drive 3410. The computer program products may be means for providing software to the computer system 3400. The computer programs (which may also be called computer control logic) may be stored in the main memory 3406 and/or the secondary memory 3408. The computer programs may be received via the communications interface 3420. Such computer programs, when executed, may enable the computer system 3400 to implement the present disclosure as discussed herein. In particular, the computer programs, when executed, may enable the processor 3404 to implement the processes of the present disclosure, such as any of the methods described herein. Accordingly, such computer programs may represent controllers of the computer system 3400.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 35 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 3530 may include one or more processors 3531, which may execute instructions stored in the random-access memory (RAM) 3533, the removable media 3534 (such as a Universal Serial Bus (USB) drive, compact disk (CD) or digital versatile disk (DVD), or floppy disk drive), or any other desired storage medium. Instructions may also be stored in an attached (or internal) hard drive 3535. The computing device 3530 may also include a security processor (not shown), which may execute instructions of one or more computer programs to monitor the processes executing on the processor 3531 and any process that requests access to any hardware and/or software components of the computing device 3530 (e.g., ROM 3532, RAM 3533, the removable media 3534, the hard drive 3535, the device controller 3537, a network interface 3539, a GPS 3541, a Bluetooth interface 3542, a WiFi interface 3543, etc.). The computing device 3530 may include one or more output devices, such as the display 3536 (e.g., a screen, a display device, a monitor, a television, etc.), and may include one or more output device controllers 3537, such as a video processor. There may also be one or more user input devices 3538, such as a remote control, keyboard, mouse, touch screen, microphone, etc. The computing device 3530 may also include one or more network interfaces, such as a network interface 3539, which may be a wired interface, a wireless interface, or a combination of the two. The network interface 3539 may provide an interface for the computing device 3530 to communicate with a network 3540 (e.g., a RAN, or any other network). The network interface 3539 may include a modem (e.g., a cable modem), and the external network 3540 may include communication links, an external network, an in-home network, a provider's wireless, coaxial, fiber, or hybrid fiber/coaxial distribution system (e.g., a DOCSIS network), or any other desired network. Additionally, the computing device 3530 may include a location-detecting device, such as a global positioning system (GPS) microprocessor 3541, which may be configured to receive and process global positioning signals and determine, with possible assistance from an external server and antenna, a geographic position of the computing device 3530.

The example in FIG. 35 may be a hardware configuration, although the components shown may be implemented as software as well. Modifications may be made to add, remove, combine, divide, etc. components of the computing device 3530 as desired. Additionally, the components may be implemented using basic computing devices and components, and the same components (e.g., processor 3531, ROM storage 3532, display 3536, etc.) may be used to implement any of the other computing devices and components described herein. For example, the various components described herein may be implemented using computing devices having components such as a processor executing computer-executable instructions stored on a computer-readable medium, as shown in FIG. 35. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: determining, by a computing device and for a current region adaptive hierarchical transform (RAHT) node, an index for a set of contexts based on a ratio between: a quantity of already-inter-predicted neighboring RAHT nodes of the current RAHT node, wherein each of the already-inter-predicted neighboring RAHT nodes is an already-coded neighboring RAHT node using an inter prediction mode for coding alternating current (AC) coefficients of the already-inter-predicted neighboring RAHT node; and a total quantity of already-intra-predicted neighboring RAHT nodes of the current RAHT node or the already-inter-predicted neighboring RAHT nodes, wherein each of the already-intra-predicted neighboring RAHT nodes is an already-coded neighboring RAHT node using an intra prediction mode for coding AC coefficients of the already-intra-predicted neighboring RAHT node.

Clause 1B. The method of clause 1A, further comprising: selecting, based on the index, a context from the set of contexts.

Clause 1C. The method of clause 1B, further comprising: decoding, based on the selected context, an indication of a prediction mode for decoding AC coefficients of the current RAHT node. Reference to clause 1 herein may refer to one or each of clause 1A, clause 1B and clause 1C.

Clause 2. The method of clause 1, wherein the index is further determined based on combining a plurality of symbols comprising: a symbol indicating the quantity of AC coefficients in the current RAHT node; a symbol indicating the ratio; a symbol indicating a prediction mode used for coding AC coefficients of a parent RAHT node of the current RAHT node; a symbol indicating the total quantity of the already-intra-predicted neighboring RAHT nodes or the already-inter-predicted neighboring RAHT nodes; or a symbol indicating whether: the quantity of the already-intra-predicted neighboring RAHT nodes equals zero; the quantity of the already-inter-predicted neighboring RAHT nodes equals zero; or the quantity of the already-intra-predicted neighboring RAHT nodes or the quantity of the already-inter-predicted neighboring RAHT nodes equal zero.

Clause 3. The method of any one of clauses 1-2, wherein the determining the index comprises: determining at least one symbol based on the ratio.

Clause 4. The method of clause 3, wherein the at least one symbol comprises at least one of: a quantized value of the ratio among a set of quantized values; or a binary value indicating whether the ratio is lower than a threshold.

Clause 5. The method of clause 3, wherein the determining the at least one symbol is further based on the total quantity of the already-intra-predicted neighboring RAHT nodes or the already-inter-predicted neighboring RAHT nodes being lower than a threshold.

Clause 6. The method of any one of clauses 1-5, wherein the selecting the context is further based on at least one symbol, associated with the determined index, indicating at least one of: whether the quantity of the already-intra-predicted neighboring RAHT nodes equals zero; whether the quantity of the already-inter-predicted neighboring RAHT nodes equals zero; or whether both the quantity of the already-intra-predicted neighboring RAHT nodes and the quantity of the already-inter-predicted neighboring RAHT nodes equal zero.

Clause 7. The method of any one of clauses 1-6, further comprising: obtaining the selected context as an output of an Optimal Binary Coders with Update on the Fly (OBUF) method, wherein an input of the OBUF method comprises at least one of: the quantity of the already-intra-predicted neighboring RAHT nodes of the current RAHT node; or the quantity of the already-inter-predicted neighboring RAHT nodes of the current RAHT node.

Clause 8. The method of any one of clauses 1-7, wherein the selecting the context is further based on: a first symbol indicating the quantity of the already-intra-predicted neighboring RAHT nodes of the current RAHT node; and a second symbol indicating the quantity of the already-inter-predicted neighboring RAHT nodes of the current RAHT node.

Clause 9. The method of any one of clauses 1-8, wherein the selected context is further based on at least one symbol that is determined based on the total quantity of already-intra-predicted or already-inter-predicted neighboring RAHT nodes of the current RAHT node.

Clause 10. The method of clause 9, wherein said at least one symbol is a quantized value, from a set of quantized values, of the total quantity of already-intra or inter-predicted neighboring RAHT nodes of the current RAHT node.

Clause 11. The method of any one of clauses 1-10, wherein said another symbol is a binary value indicating whether the total quantity of already-intra or inter-predicted neighboring RAHT nodes of the current RAHT node is lower than a threshold.

Clause 12. A computing device comprising one or more processors and memory storing instructions that, when executed by the one or more processors, cause the computing device to perform the method of any one of clauses 1-11.

Clause 13. A system comprising: a computing device configured to perform the method of any one of clauses 1-11, and a second computing device configured to encode the indication of the prediction mode.

Clause 14. A computer-readable medium storing instructions that, when executed, cause performance of the method of any one of clauses 1-11.

Clause 15A. A method comprising: determining, for a current Region Adaptive Hierarchical Transform (RAHT) node, an index for a set of contexts based on a ratio between: a quantity of already-inter-predicted neighboring RAHT nodes of the current RAHT node; and a total quantity of already-intra-predicted or already-inter-predicted neighboring RAHT nodes of the current RAHT node, wherein: an already-intra-predicted neighboring RAHT node is an already-coded neighboring RAHT node using an intra prediction mode for coding alternating current (AC) coefficients of the already-intra-predicted neighboring RAHT node; an already-inter-predicted neighboring RAHT node is an already-coded neighboring RAHT node using an inter prediction mode for coding AC coefficients of the already-inter-predicted neighboring RAHT node; and the index is further determined based on combining a plurality of symbols.

Clause 15B. The method of clause 15A, further comprising: decoding, based on the determined index, an indication of a prediction mode for decoding AC coefficients of the current RAHT node. Reference to clause 15 herein may refer to one or each of clause 15A and clause 15B.

Clause 16. The method of clause 15, wherein the plurality of symbols comprises at least one of: a symbol indicating the quantity of AC coefficients in the current RAHT node; a symbol indicating the ratio; a symbol indicating the prediction mode used for coding AC coefficients of a parent node of the current RAHT node; a symbol indicating the total quantity of already-intra-predicted neighboring RAHT nodes of the current RAHT node; a symbol indicating the total quantity of already-inter-predicted neighboring RAHT nodes of the current RAHT node; a symbol indicating whether the quantity of already-intra-predicted neighboring RAHT nodes of the current RAHT node equals zero; or a symbol indicating whether the quantity of already-inter-predicted neighboring RAHT nodes of the current RAHT node equals zero.

Clause 17. The method of any one of clauses 15-16, further comprising: selecting, based on the index, a context from the set of contexts, wherein the selecting the context is further based on at least one symbol, associated with the determined index, indicating at least one of: the quantity of the already-intra-predicted neighboring RAHT nodes of the current RAHT node; or the quantity of the already-inter-predicted neighboring RAHT nodes of the current RAHT node.

Clause 18. The method of clause 17, wherein the selecting the context is further based on a symbol indicating at least one of: a clipped quantity of the already-intra-predicted neighboring RAHT nodes of the current RAHT node to a first maximum value; or a clipped quantity of the already-inter-predicted neighboring RAHT nodes of the current RAHT node to a second maximal value.

Clause 19. The method of any one of clauses 15-18, wherein the already-coded neighboring RAHT nodes of the current RAHT node comprises: a parent node of the current RAHT node; and one or more other children RAHT nodes of the parent node.

Clause 20. The method of any one of clauses 15-19, wherein the already-coded neighboring RAHT nodes of the current RAHT node comprises the parent node of the current RAHT, nodes at parent depth spatially close to the parent, and child nodes of the latter.

Clause 21. A computing device comprising one or more processors and memory storing instructions that, when executed by the one or more processors, cause the computing device to perform the method of any one of clauses 15-20.

Clause 22. A system comprising: a computing device configured to perform the method of any one of clauses 15-20, and a second computing device configured to encode the indication of the prediction mode.

Clause 23. A computer-readable medium storing instructions that, when executed, cause performance of the method of any one of clauses 15-20.

Clause 24A. A method comprising: obtaining a prediction mode for coding alternating current (AC) coefficients of a current Region Adaptive Hierarchical Transform (RAHT) node.

Clause 24B. The method of clause 24A, further comprising: determining an index, for a set of contexts, based on a ratio between: a quantity of already-inter-predicted neighboring RAHT nodes of the current RAHT node; and a total quantity of already-predicted neighboring RAHT nodes of the current RAHT node, wherein: an already-intra-predicted neighboring RAHT node is an already-coded neighboring RAHT node that uses an intra prediction mode for coding its AC coefficients; and an already-inter-predicted neighboring RAHT node is an already-coded neighboring RAHT node that uses an inter prediction mode for coding its AC coefficients.

Clause 24C. The method of clause 24B, further comprising: selecting, based on the index, a context from the set of contexts.

Clause 24D. The method of clause 24C, further comprising: encoding, based on the selected context, an indication of the prediction mode for coding the AC coefficients of the current RAHT node. Reference to clause 24 herein may refer to one or each of clause 24A, clause 24B, clause 24C and clause 24D.

Clause 25. The method of clause 24, wherein a quantity of contexts of the set of contexts is determined independent of: the quantity of the already-intra-predicted neighboring RAHT nodes of the current RAHT node; or the quantity of the already-inter-predicted neighboring RAHT nodes of the current RAHT node.

Clause 26. The method of any one of clauses 24-25, wherein the selecting the context is further based on: a first symbol indicating a clipped quantity of the already-intra-predicted neighboring RAHT nodes of the current RAHT node to a first maximum value; and a second symbol indicating a clipped quantity of the already-inter-predicted neighboring RAHT nodes of the current RAHT node.

Clause 27. The method of any one of clauses 24-26, wherein the selected context is further based on at least one symbol that is determined based on the total quantity of already-intra-predicted or already-inter-predicted neighboring RAHT nodes of the current RAHT node.

Clause 28. The method of clause 27, wherein said at least one symbol is a binary value indicating whether the total quantity of already-intra or inter-predicted neighboring RAHT nodes of the current RAHT node is lower than a threshold.

Clause 29. A computing device comprising one or more processors and memory storing instructions that, when executed by the one or more processors, cause the computing device to perform the method of any one of clauses 24-28.

Clause 30. A system comprising: a computing device configured to decode the indication of the prediction mode, and a second computing device configured to perform the method of any one of clauses 24-28.

Clause 31. A computer-readable medium storing instructions that, when executed, cause performance of the method of any one of clauses 24-28.

A computing device may perform a method comprising multiple operations. The computing device may comprise a decoder. The computing device may determine, for a current region adaptive hierarchical transform (RAHT) node, an index for a set of contexts based on a ratio between: a quantity of already-inter-predicted neighboring RAHT nodes of the current RAHT node, wherein each of the already-inter-predicted neighboring RAHT nodes may be an already-coded neighboring RAHT node using an inter prediction mode for coding alternating current (AC) coefficients of the already-inter-predicted neighboring RAHT node; and a total quantity of already-intra-predicted neighboring RAHT nodes of the current RAHT node or the already-inter-predicted neighboring RAHT nodes, wherein each of the already-intra-predicted neighboring RAHT nodes may be an already-coded neighboring RAHT node using an intra prediction mode for coding AC coefficients of the already-intra-predicted neighboring RAHT node. The computing device may select, based on the index, a context from the set of contexts. The computing device may decode, based on the selected context, an indication of a prediction mode for decoding AC coefficients of the current RAHT node, wherein the index may further be determined based on combining a plurality of symbols comprising: a symbol indicating the quantity of AC coefficients in the current RAHT node; a symbol indicating the ratio; a symbol indicating a prediction mode used for coding AC coefficients of a parent RAHT node of the current RAHT node; a symbol indicating the total quantity of the already-intra-predicted neighboring RAHT nodes or the already-inter-predicted neighboring RAHT nodes; or a symbol indicating whether: the quantity of the already-intra-predicted neighboring RAHT nodes equals zero; the quantity of the already-inter-predicted neighboring RAHT nodes equals zero; or the quantity of the already-intra-predicted neighboring RAHT nodes or the quantity of the already-inter-predicted neighboring RAHT nodes equal zero; wherein the determining the index may comprise: determining at least one symbol based on the ratio; wherein the at least one symbol may comprise at least one of: a quantized value of the ratio among a set of quantized values; or a binary value indicating whether the ratio is lower than a threshold; wherein the determining the at least one symbol may further be based on the total quantity of the already-intra-predicted neighboring RAHT nodes or the already-inter-predicted neighboring RAHT nodes being lower than a threshold; wherein the selecting the context may further be based on at least one symbol, associated with the determined index, indicating at least one of: whether the quantity of the already-intra-predicted neighboring RAHT nodes equals zero; whether the quantity of the already-inter-predicted neighboring RAHT nodes equals zero; or whether both the quantity of the already-intra-predicted neighboring RAHT nodes and the quantity of the already-inter-predicted neighboring RAHT nodes equal zero. The computing device may obtain the selected context as an output of an Optimal Binary Coders with Update on the Fly (OBUF) method, wherein an input of the OBUF method may comprise at least one of: the quantity of the already-intra-predicted neighboring RAHT nodes of the current RAHT node; or the quantity of the already-inter-predicted neighboring RAHT nodes of the current RAHT node, wherein the selecting the context may further be based on: a first symbol indicating the quantity of the already-intra-predicted neighboring RAHT nodes of the current RAHT node; and a second symbol indicating the quantity of the already-inter-predicted neighboring RAHT nodes of the current RAHT node; wherein the selected context may further be based on at least one symbol that is determined based on the total quantity of already-intra-predicted or already-inter-predicted neighboring RAHT nodes of the current RAHT node; wherein said at least one symbol may be a quantized value, from a set of quantized values, of the total quantity of already-intra or inter-predicted neighboring RAHT nodes of the current RAHT node; wherein said another symbol may be a binary value indicating whether the total quantity of already-intra or inter-predicted neighboring RAHT nodes of the current RAHT node is lower than a threshold. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise a decoder. The computing device may determine, for a current Region Adaptive Hierarchical Transform (RAHT) node, an index for a set of contexts based on a ratio between: a quantity of already-inter-predicted neighboring RAHT nodes of the current RAHT node; and a total quantity of already-intra-predicted or already-inter-predicted neighboring RAHT nodes of the current RAHT node, wherein: an already-intra-predicted neighboring RAHT node may be an already-coded neighboring RAHT node using an intra prediction mode for coding alternating current (AC) coefficients of the already-intra-predicted neighboring RAHT node; an already-inter-predicted neighboring RAHT node may be an already-coded neighboring RAHT node using an inter prediction mode for coding AC coefficients of the already-inter-predicted neighboring RAHT node; and the index may further be determined based on combining a plurality of symbols. The computing device may decode, based on the determined index, an indication of a prediction mode for decoding AC coefficients of the current RAHT node, wherein the plurality of symbols may comprise at least one of: a symbol indicating the quantity of AC coefficients in the current RAHT node; a symbol indicating the ratio; a symbol indicating the prediction mode used for coding AC coefficients of a parent node of the current RAHT node; a symbol indicating the total quantity of already-intra-predicted neighboring RAHT nodes of the current RAHT node; a symbol indicating the total quantity of already-inter-predicted neighboring RAHT nodes of the current RAHT node; a symbol indicating whether the quantity of already-intra-predicted neighboring RAHT nodes of the current RAHT node equals zero; or a symbol indicating whether the quantity of already-inter-predicted neighboring RAHT nodes of the current RAHT node equals zero. The computing device may select, based on the index, a context from the set of contexts, wherein the selecting the context may further be based on at least one symbol, associated with the determined index, indicating at least one of: the quantity of the already-intra-predicted neighboring RAHT nodes of the current RAHT node; or the quantity of the already-inter-predicted neighboring RAHT nodes of the current RAHT node; wherein the selecting the context may further be based on a symbol indicating at least one of: a clipped quantity of the already-intra-predicted neighboring RAHT nodes of the current RAHT node to a first maximum value; or a clipped quantity of the already-inter-predicted neighboring RAHT nodes of the current RAHT node to a second maximal value; wherein the already-coded neighboring RAHT nodes of the current RAHT node may comprise: a parent node of the current RAHT node; and one or more other children RAHT nodes of the parent node; wherein the already-coded neighboring RAHT nodes of the current RAHT node may comprise the parent node of the current RAHT, nodes at parent depth spatially close to the parent, and child nodes of the latter. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise an encoder. The computing device may obtain a prediction mode for coding alternating current (AC) coefficients of a current Region Adaptive Hierarchical Transform (RAHT) node. The computing device may determine an index, for a set of contexts, based on a ratio between: a quantity of already-inter-predicted neighboring RAHT nodes of the current RAHT node; and a total quantity of already-predicted neighboring RAHT nodes of the current RAHT node, wherein: an already-intra-predicted neighboring RAHT node may be an already-coded neighboring RAHT node that uses an intra prediction mode for coding its AC coefficients; and an already-inter-predicted neighboring RAHT node may be an already-coded neighboring RAHT node that uses an inter prediction mode for coding its AC coefficients. The computing device may select, based on the index, a context from the set of contexts. The computing device may encode, based on the selected context, an indication of the prediction mode for coding the AC coefficients of the current RAHT node, wherein a quantity of contexts of the set of contexts may be determined independent of: the quantity of the already-intra-predicted neighboring RAHT nodes of the current RAHT node; or the quantity of the already-inter-predicted neighboring RAHT nodes of the current RAHT node; wherein the selecting the context may further be based on: a first symbol indicating a clipped quantity of the already-intra-predicted neighboring RAHT nodes of the current RAHT node to a first maximum value; and a second symbol indicating a clipped quantity of the already-inter-predicted neighboring RAHT nodes of the current RAHT node; wherein the selected context may further be based on at least one symbol that is determined based on the total quantity of already-intra-predicted or already-inter-predicted neighboring RAHT nodes of the current RAHT node; wherein said at least one symbol may be a binary value indicating whether the total quantity of already-intra or inter-predicted neighboring RAHT nodes of the current RAHT node is lower than a threshold. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise an encoder. The computing device may obtain a prediction mode for coding AC coefficients of a current RAHT node of a RAHT tree. The computing device may determine an index, for a set of contexts, based on a ratio between: a number of already-inter-predicted neighboring RAHT nodes of the current RAHT node; and a total number of already-predicted neighboring RAHT nodes of the current RAHT node, wherein an already-intra-predicted neighboring RAHT node is an already-coded neighboring RAHT node that uses an intra prediction mode for coding its AC coefficients, and an already-inter-predicted neighboring RAHT node is an already-coded neighboring RAHT node that uses an inter prediction mode for coding its AC coefficients. The computing device may select, based on the index, a context from the set of contexts. The computing device may entropy encode, based on the selected context, an indication of the prediction mode for coding the AC coefficients of the current RAHT node, wherein the determining the index may comprise determining at least one symbol based on the ratio; wherein the symbol may be a quantized value of the ratio among a set of quantized values; wherein the symbol may be a binary value indicating whether the ratio is lower than a threshold; wherein the symbol may be determined based on the ratio when the total number of already-intra or inter-predicted neighboring RAHT nodes of the current RAHT node is lower than a threshold; wherein the context selection may further be based on another symbol, of the at least one symbol, that is determined based on the total number of already-intra or inter-predicted neighboring RAHT nodes of the current RAHT node; wherein said another symbol may be a quantized value, from a set of quantized values, of the total number of already-intra or inter-predicted neighboring RAHT nodes of the current RAHT node; wherein said another symbol may be a binary value indicating whether the total number of already-intra or inter-predicted neighboring RAHT nodes of the current RAHT node is lower than a threshold; wherein the context may further be based on another first symbol that indicates either whether a number of already-intra-predicted neighboring RAHT nodes of the current RAHT node equals zero or whether the number of already-inter-predicted neighboring RAHT nodes of the current RAHT node equals zero or whether both the number of already-intra-predicted neighboring RAHT nodes of the current RAHT node and the number of already-inter-predicted neighboring RAHT nodes of the current RAHT node equal zero; wherein the context may further be based on another symbol that indicates either a number of already-intra-predicted neighboring RAHT nodes of the current RAHT node, or the number of already-inter-predicted neighboring RAHT nodes of the current RAHT node; wherein the context may further be based on first another symbol that indicates the number of already-intra-predicted neighboring RAHT nodes of the current RAHT node, and another second symbol that indicates the number of already-inter-predicted neighboring RAHT nodes of the current RAHT node; wherein the context may further be based on another symbol that indicates either a clipped number of already-intra-predicted neighboring RAHT nodes of the current RAHT node to a first maximum value or a clipped number of already-inter-predicted neighboring RAHT nodes of the current RAHT node to a second maximal value; wherein the context may further be based on first another symbol that indicates a clipped number of already-intra-predicted neighboring RAHT nodes of the current RAHT node to a first maximum value, and another second symbol that indicates a clipped number of already-inter-predicted neighboring RAHT nodes of the current RAHT node; wherein the number of contexts of the set of contexts may be independent of the number of already-intra-predicted neighboring RAHT nodes of the current RAHT node and/or the number of already-inter-predicted neighboring RAHT nodes of the current RAHT node; wherein the context may be obtained as output of OBUF method when the number of already-intra-predicted neighboring RAHT nodes of the current RAHT node and/or the number of already-inter-predicted neighboring RAHT nodes of the current RAHT node is an input of the OBUF method; wherein the index may be determined based on combining a plurality of symbols comprising: a symbol indicating the number of AC coefficients in the current RAHT node; a symbol indicating the ratio; a symbol indicating the prediction mode used for coding AC coefficients of the parent node of the current RAHT node; a symbol indicating the total number of already-intra or inter-predicted neighboring RAHT nodes of the current RAHT node; and a symbol indicating whether the number of already-intra-predicted neighboring RAHT nodes of the current RAHT node equals zero and/or a number of already-inter-predicted neighboring RAHT nodes of the current RAHT node equals zero; wherein the already-coded neighboring RAHT nodes of the current RAHT node may comprise the parent node of the current RAHT node and one or more other children RAHT nodes of the parent node; wherein the already-coded neighboring RAHT nodes of the current RAHT node may comprise the parent node of the current RAHT, nodes at parent depth spatially close to the parent, and child nodes of the latter. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise an encoder. The computing device may determine, for a current RAHT node of a RAHT tree, an index for a set of contexts based on a ratio between: a number of already-inter-predicted neighboring RAHT nodes of the current RAHT node; and a total number of already-intra or inter-predicted neighboring RAHT nodes of the current RAHT node, wherein an already-intra-predicted neighboring RAHT node is an already-coded neighboring RAHT node that uses an intra prediction mode for coding its AC coefficients, and an already-inter-predicted neighboring RAHT node is an already-coded neighboring RAHT node that uses an inter prediction mode for coding its AC coefficients. The computing device may select, based on the index, a context from the set of contexts. The computing device may entropy decode, based on the selected context, an indication of a prediction mode for decoding AC coefficients of the current RAHT node, wherein the determining the index may comprise determining at least one symbol based on the ratio; wherein the symbol may be a quantized value of the ratio among a set of quantized values; wherein the symbol may be a binary value indicating whether the ratio is lower than a threshold; wherein the symbol may be determined based on the ratio when the total number of already-intra or inter-predicted neighboring RAHT nodes of the current RAHT node is lower than a threshold; wherein the context selection may further be based on another symbol, of the at least one symbol, that is determined based on the total number of already-intra or inter-predicted neighboring RAHT nodes of the current RAHT node; wherein said another symbol may be a quantized value, from a set of quantized values, of the total number of already-intra or inter-predicted neighboring RAHT nodes of the current RAHT node; wherein said another symbol may be a binary value indicating whether the total number of already-intra or inter-predicted neighboring RAHT nodes of the current RAHT node is lower than a threshold; wherein the context may further be based on another first symbol that indicates either whether a number of already-intra-predicted neighboring RAHT nodes of the current RAHT node equals zero or whether the number of already-inter-predicted neighboring RAHT nodes of the current RAHT node equals zero or whether both the number of already-intra-predicted neighboring RAHT nodes of the current RAHT node and the number of already-inter-predicted neighboring RAHT nodes of the current RAHT node equal zero; wherein the context may further be based on another symbol that indicates either a number of already-intra-predicted neighboring RAHT nodes of the current RAHT node, or the number of already-inter-predicted neighboring RAHT nodes of the current RAHT node; wherein the context may further be based on first another symbol that indicates the number of already-intra-predicted neighboring RAHT nodes of the current RAHT node, and another second symbol that indicates the number of already-inter-predicted neighboring RAHT nodes of the current RAHT node; wherein the context may further be based on another symbol that indicates either a clipped number of already-intra-predicted neighboring RAHT nodes of the current RAHT node to a first maximum value or a clipped number of already-inter-predicted neighboring RAHT nodes of the current RAHT node to a second maximal value; wherein the context may further be based on first another symbol that indicates a clipped number of already-intra-predicted neighboring RAHT nodes of the current RAHT node to a first maximum value, and another second symbol that indicates a clipped number of already-inter-predicted neighboring RAHT nodes of the current RAHT node; wherein the number of contexts of the set of contexts may be independent of the number of already-intra-predicted neighboring RAHT nodes of the current RAHT node and/or the number of already-inter-predicted neighboring RAHT nodes of the current RAHT node; wherein the context may be obtained as output of OBUF method when the number of already-intra-predicted neighboring RAHT nodes of the current RAHT node and/or the number of already-inter-predicted neighboring RAHT nodes of the current RAHT node is an input of the OBUF method; wherein the index may be determined based on combining a plurality of symbols comprising: a symbol indicating the number of AC coefficients in the current RAHT node; a symbol indicating the ratio; a symbol indicating the prediction mode used for coding AC coefficients of the parent node of the current RAHT node; a symbol indicating the total number of already-intra or inter-predicted neighboring RAHT nodes of the current RAHT node; and a symbol indicating whether the number of already-intra-predicted neighboring RAHT nodes of the current RAHT node equals zero and/or a number of already-inter-predicted neighboring RAHT nodes of the current RAHT node equals zero; wherein the already-coded neighboring RAHT nodes of the current RAHT node may comprise the parent node of the current RAHT node and one or more other children RAHT nodes of the parent node; wherein the already-coded neighboring RAHT nodes of the current RAHT node may comprise the parent node of the current RAHT, nodes at parent depth spatially close to the parent, and child nodes of the latter. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise an encoder. The computing device may determine, for a current RAHT node of a RAHT tree, an index for a set of contexts based on a quantized value of a ratio between: a number of already-inter-predicted neighboring RAHT nodes of the current RAHT node; and a total number of already-intra or inter-predicted neighboring RAHT nodes of the current RAHT node, wherein an already-intra-predicted neighboring RAHT node being an already-coded neighboring RAHT node using an intra prediction mode for coding its AC coefficients, and an already-inter-predicted neighboring RAHT node being an already-coded neighboring RAHT node using an inter prediction mode for coding its AC coefficients. The computing device may select, based on the index, a context from the set of contexts. The computing device may entropy decode, based on the selected context, the prediction mode for decoding AC coefficients of the current RAHT node. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise an encoder. The computing device may determine, for a current RAHT node of a RAHT tree, an index for a set of contexts based on a total number of already-intra or inter-predicted neighboring RAHT nodes of the current RAHT node, wherein an already-intra-predicted neighboring RAHT node being an already-coded neighboring RAHT node using an intra prediction mode for coding its AC coefficients, and an already-inter-predicted neighboring RAHT node being an already-coded neighboring RAHT node using an inter prediction mode for coding its AC coefficients. The computing device may select, based on the index, a context from the set of contexts. The computing device may entropy decoding, based on the selected context, the prediction mode for decoding AC coefficients of the current RAHT node. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise an encoder. The computing device may determine, for a current RAHT node of a RAHT tree, an index for a set of contexts based on an information that indicates either whether a number of already-intra-predicted neighboring RAHT nodes of the current RAHT node equals zero or whether a number of already-inter-predicted neighboring RAHT nodes of the current RAHT node equals zero or whether both the number of already-intra-predicted neighboring RAHT nodes of the current RAHT node and the number of already-inter-predicted neighboring RAHT nodes of the current RAHT node equal zero, wherein an already-intra-predicted neighboring RAHT nodes being an already-coded neighboring RAHT node using an intra prediction mode for coding its AC coefficients, and an already-inter-predicted neighboring RAHT nodes being an already-coded neighboring RAHT node using an inter prediction mode for coding its AC coefficients. The computing device may select, based on the index, a context from a set of contexts. The computing device may entropy decode, based on the selected context, the prediction mode for decoding AC coefficients of the current RAHT node. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated if/when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. If/when implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types if/when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.  A method comprising:

    determining, by a computing device and for a current region adaptive hierarchical transform (RAHT) node, an index for a set of contexts based on a ratio between:

    a quantity of already-inter-predicted neighboring RAHT nodes of the current RAHT node, wherein each of the already-inter-predicted neighboring RAHT nodes is an already-coded neighboring RAHT node using an inter prediction mode for coding alternating current (AC) coefficients of the already-inter-predicted neighboring RAHT node; and
    a total quantity of already-intra-predicted neighboring RAHT nodes of the current RAHT node or the already-inter-predicted neighboring RAHT nodes, wherein each of the already-intra-predicted neighboring RAHT nodes is an already-coded neighboring RAHT node using an intra prediction mode for coding AC coefficients of the already-intra-predicted neighboring RAHT node;

    selecting, based on the index, a context from the set of contexts; and
    decoding, based on the selected context, an indication of a prediction mode for decoding AC coefficients of the current RAHT node.

2.  The method of claim 1, wherein the index is further determined based on combining a plurality of symbols comprising:

    a symbol indicating the quantity of AC coefficients in the current RAHT node;
    a symbol indicating the ratio;
    a symbol indicating a prediction mode used for coding AC coefficients of a parent RAHT node of the current RAHT node;
    a symbol indicating the total quantity of the already-intra-predicted neighboring RAHT nodes or the already-inter-predicted neighboring RAHT nodes; or
    a symbol indicating whether:

        the quantity of the already-intra-predicted neighboring RAHT nodes equals zero;
        the quantity of the already-inter-predicted neighboring RAHT nodes equals zero; or
        the quantity of the already-intra-predicted neighboring RAHT nodes or the quantity of the already-inter-predicted neighboring RAHT nodes equal zero.

3.  The method of any one of claims 1-2, wherein the determining the index comprises:
    determining at least one symbol based on the ratio.

4.  The method of claim 3, wherein the at least one symbol comprises at least one of:

    a quantized value of the ratio among a set of quantized values; or
    a binary value indicating whether the ratio is lower than a threshold.

5.  The method of claim 3, wherein the determining the at least one symbol is further based on the total quantity of the already-intra-predicted neighboring RAHT nodes or the already-inter-predicted neighboring RAHT nodes being lower than a threshold.

6.  The method of any one of claims 1-5, wherein the selecting the context is further based on at least one symbol, associated with the determined index, indicating at least one of:

    whether the quantity of the already-intra-predicted neighboring RAHT nodes equals zero;
    whether the quantity of the already-inter-predicted neighboring RAHT nodes equals zero; or
    whether both the quantity of the already-intra-predicted neighboring RAHT nodes and the quantity of the already-inter-predicted neighboring RAHT nodes equal zero.

7.  The method of any one of claims 1-6, further comprising:
    obtaining the selected context as an output of an Optimal Binary Coders with Update on the Fly (OBUF) method, wherein an input of the OBUF method comprises at least one of:

    the quantity of the already-intra-predicted neighboring RAHT nodes of the current RAHT node; or
    the quantity of the already-inter-predicted neighboring RAHT nodes of the current RAHT node.

8.  The method of any one of claims 1-7, wherein the selecting the context is further based on:

    a first symbol indicating the quantity of the already-intra-predicted neighboring RAHT nodes of the current RAHT node; and
    a second symbol indicating the quantity of the already-inter-predicted neighboring RAHT nodes of the current RAHT node.

9.  The method of any one of claims 1-8, wherein the selected context is further based on at least one symbol that is determined based on the total quantity of already-intra-predicted or already-inter-predicted neighboring RAHT nodes of the current RAHT node.

10. A method comprising:

    determining, for a current Region Adaptive Hierarchical Transform (RAHT) node, an index for a set of contexts

based on a ratio between:

> a quantity of already-inter-predicted neighboring RAHT nodes of the current RAHT node; and
> a total quantity of already-intra-predicted or already-inter-predicted neighboring RAHT nodes of the current RAHT node, wherein:
>
>> an already-intra-predicted neighboring RAHT node is an already-coded neighboring RAHT node using an intra prediction mode for coding alternating current (AC) coefficients of the already-intra-predicted neighboring RAHT node;
>> an already-inter-predicted neighboring RAHT node is an already-coded neighboring RAHT node using an inter prediction mode for coding AC coefficients of the already-inter-predicted neighboring RAHT node; and
>> the index is further determined based on combining a plurality of symbols; and

decoding, based on the determined index, an indication of a prediction mode for decoding AC coefficients of the current RAHT node.

11. The method of claim 10, wherein the plurality of symbols comprises at least one of:

> a symbol indicating the quantity of AC coefficients in the current RAHT node;
> a symbol indicating the ratio;
> a symbol indicating the prediction mode used for coding AC coefficients of a parent node of the current RAHT node;
> a symbol indicating the total quantity of already-intra-predicted neighboring RAHT nodes of the current RAHT node;
> a symbol indicating the total quantity of already-inter-predicted neighboring RAHT nodes of the current RAHT node;
> a symbol indicating whether the quantity of already-intra-predicted neighboring RAHT nodes of the current RAHT node equals zero; or
> a symbol indicating whether the quantity of already-inter-predicted neighboring RAHT nodes of the current RAHT node equals zero.

12. The method of any one of claims 10-11, wherein the selecting the context is further based on at least one symbol, associated with the determined index, indicating at least one of:

> the quantity of the already-intra-predicted neighboring RAHT nodes of the current RAHT node; or
> the quantity of the already-inter-predicted neighboring RAHT nodes of the current RAHT node.

13. A computing device comprising: one or more processors; and memory storing instructions that, when executed by the one or more processors, cause the computing device to perform:

> the method of any one of claims 1-9; or
> the method of any one of claims 10-12.

14. A system comprising:

> a computing device configured to perform:
>
>> the method of any one of claims 1-9; or
>> the method of any one of claims 10-12; and
>
> a second computing device configured to encode the indication of the prediction mode.

15. A computer-readable medium storing instructions that, when executed, cause performance of:

> the method of any one of claims 1-9; or
> the method of any one of claims 10-12.

FIG. 1

EP 4 730 265 A1

48

FIG. 3

*FIG. 4*

FIG. 5

Determine occupancy configuration β
*602*

Dynamically reduce using $DR^n$
*604*

Lookup context index in LUT
*606*

Select context
*608*

Entropy code occupancy of current child cuboid
*610*

## FIG. 6

FIG. 7

*FIG. 8B*

*FIG. 8A*

FIG. 8C

EP 4 730 265 A1

*FIG. 9A*

$u+v+w = 1$
$0 \leq u, v, w$

$P = uA + vB + wC$

*FIG. 9B*

EP 4 730 265 A1

FIG. 10

*portion of geometry 1022*

Select attribute coding mode
1110

*mode information 1042*

*selected attribute coding mode 1112*

**inter mode**          **intra mode**

*MV 1121*

*reference point cloud 1122*

*portion of geometry 1022*

*already-coded portions 1123*

Predict attribute for portion geometry
1120

*attribute predictors 1124*

*portion of geometry 1022*

*mapped attributes 1031*

Encode attribute based on attribute predictors
1130

*attribute information 1032*

bitstream
1190

1030

1100

FIG. 11

```
┌─────────────────────────────┐                                      ┌──────────┐
│      decode geometry        │ ◄ - - geometry information 1211 - - - │          │
│           1210              │                                      │          │
└─────────────────────────────┘                                      │          │
              │                                                       │          │
   decoded geometry 1212                                              │          │
              ▼                                                       │          │
┌─────────────────────────────┐                                      │          │
│ Determine at least one      │                                      │          │
│ portion of the decoded      │ ◄ - - portion information 1221 - - -  │bitstream │
│ geometry                    │                                      │   1290   │
│           1220              │                                      │          │
└─────────────────────────────┘                                      │          │
              │                                                       │          │
   portion of geometry 1222                                          │          │
              ▼                                                       │          │
┌─────────────────────────────┐                                      │          │
│ Decode attributes for       │ ◄ - - attribute information 1232 - -  │          │
│ current portion             │                                      │          │
│           1230              │                                      │          │
└─────────────────────────────┘                                      └──────────┘
              │
              ▼
   decoded attributes 1233

                                                        1200
```

## FIG. 12

FIG. 13A

Reference point cloud *1316*  Reference point *1315*  MV field *1312* MV  Decoded geometry *1313*  Reference point *1314*  Point *1317*  r1  r1'  p  Motion compensated geometry *1319*  Search *1318*

## FIG. 13B

Reference point cloud *1316*  Search *1325*  Point *1326*  MV field *1327* -MV  Decoded geometry *1313*  Point *1317*  r2  p'  p  Point *1329*  Motion compensated geometry *1328*

## FIG. 13C

inter mode

intra mode

reference point cloud 1411 →

MV 1412 →

Perform motion compensation
1410

*motion compensated geometry 1413*

*portion of geometry 1421* →

Perform attributes projection onto the portion geometry
1420

*projected attributes 1422*

Extrapolate attributes of already-coded portions
1430

← *already-coded portions 1432*

*1120, 1320*

*attribute predictors 1431*

*1400*

*FIG. 14*

EP 4 730 265 A1

FIG. 15

FIG. 16

EP 4 730 265 A1

attribute information 1232

1330

entropy decode
1710

quantized coefficients 1711

Inverse quantize
1720

residual coefficients 1721

portion of
geometry 1222

Inverse transform
1730

residual attributes 1731

+

attribute predictors 1324    +

decoded attributes 1233

1700

*FIG. 17*

*FIG. 18*

EP 4 730 265 A1

FIG. 19

EP 4 730 265 A1

transform along
three directions

DC coefficients at
depth d

DC coefficients at
depth d-1

AC coefficients at
depth d

FIG. 20

EP 4 730 265 A1

2112

2111

$c_{Ai,d}$    $\oslash$    $a_{i,d}$    $a_{i,c,up}$

$\sqrt{w_i}$

2110

$\sqrt{w_i}$   $\otimes$

$c_{Ai,c,pred}$

AC coefficients   $\oplus$   predicted AC coefficients

residual AC coefficients

2100

FIG. 21

residual AC coefficients $\longrightarrow \oplus \longleftarrow$ predicted AC coefficients $\longleftarrow$ $c_{Ai,c,pred}$

decoded AC coefficients

2200

## FIG. 22

2300

2111

2112

2110

$a_{i,c,up}$

$d_k$

$a_{i,d}$

*FIG. 23*

EP 4 730 265 A1

current RAHT node 2405

obtain prediction modes of
neighboring RAHT nodes
2420

*neighboring prediction modes 2421*

majority voting
2430

*most used prediction mode 2431*

determine best
prediction mode for
current node (RDO)
2410

select context
2440

number of AC coefficients of the current RAHT node 2442

parent's prediction mode 2443

*context 2441*

entropy encoder
2450

prediction mode information 2451

bitstream
2490

*selected prediction mode 2411*

2400

*FIG. 24*

*current RAHT node 2505*

obtain prediction modes of
neighboring RAHT nodes
2510

*neighboring modes 2511*

majority voting
2520

*most used mode 2521*

select context
2530

← *number of AC coefficients of the current RAHT node 2532*

← *parent's prediction mode 2533*

*context 2531*

entropy decoder
2540

*prediction mode information 2542* ← bitstream 2590

*decoded prediction mode 2541*

*FIG. 25*

*2500*

current RAHT node 2405

obtain prediction modes of
neighboring RAHT nodes
2420

*neighboring prediction modes 2421*

obtain $N_{intra}$ and $N_{inter}$
2610

$N_{intra}$, $N_{inter}$ *2611*

determine an index based on
ratio $\rho$
2620

*index 2621*

select context
2630

number of AC coefficients of the current RAHT node 2442

parent's prediction mode 2443

*context 2631*

determine best
prediction mode for
current node (RDO)
2410

entropy encoder
2450

*prediction mode information 2451*

bitstream
2490

*selected prediction mode 2411*

2600

*FIG. 26*

EP 4 730 265 A1

*FIG. 27A*

*FIG. 27B*

FIG. 28

EP 4 730 265 A1

*current RAHT node 2505*

↓

obtain prediction modes of
neighboring RAHT nodes
2510

↓ *neighboring prediction modes 2511*

obtain $N_{intra}$ and $N_{inter}$
2610

↓ $N_{intra}, N_{inter}$ *2611*

determine an index
based on ratio $\rho$
2620

↓ *index 2621*

select context
2630 ← *number of AC coefficients of the current RAHT node 2532*

← *parent's prediction mode 2533*

↓ *context 2631*

entropy decoder
2540 ⇠ *prediction mode information 2542* — bitstream 2590

↓

*decoded prediction mode 2541*

*2900*

*FIG. 29*

EP 4 730 265 A1

$N_{intra}, N_{inter}$

2620

$N_{total} \leq$ TH1 ?

yes

| determine one symbol based on ratio $\rho$ | determine one symbol based on $N_{total}$ | determine one symbol based on $N_{intra}=0$ and/or $N_{intra}=0$ |
|---|---|---|

$Q(\rho)$  b(ρ)

2621

$Q(N_{total})$  b($N_{total}$)

2622

2623

2627  2628

2624

2629  2630

2626

3000

**FIG. 30**

EP 4 730 265 A1

FIG. 31

Obtain a prediction mode for coding AC coefficients of a current RAHT node of a RAHT tree;
*3210*

Determine, for a current RAHT node of a RAHT tree, an index, for a set of contexts, based on a ratio between a number of already inter-predicted neighboring RAHT nodes of the current RAHT node and a total number of already-intra or inter-predicted neighboring RAHT nodes of the current RAHT node
*3220*

Select, based on the index, a context from the set of contexts
*3230*

Entropy encode, based on the selected context, the prediction mode for encoding the AC coefficients of the current RAHT node
*3240*

*3200*

# FIG. 32

Determine, for a current RAHT node of a RAHT tree, an index for a set of contexts based on a ratio between a number of already inter-predicted neighboring RAHT nodes of the current RAHT node and a total number of already-intra or inter-predicted neighboring RAHT nodes of the current RAHT node
*3310*

Select, based on the index, a context from a set of contexts
*3320*

Entropy decode, based on the selected context, the prediction mode for decoding the AC coefficients of the current RAHT node
*3330*

*3300*

# FIG. 33

**FIG. 34**

FIG. 35

Europäisches
Patentamt
European
Patent Office
Office européen
des brevets

# EUROPEAN SEARCH REPORT

**Application Number**

EP 25 21 0006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "G-PCC 2nd edition codec description", 143. MPEG MEETING; 20230717 - 20230721; GENEVA; (MOTION PICTURE EXPERT GROUP OR ISO/IEC JTC1/SC29/WG11), , no. n23041 4 October 2023 (2023-10-04), XP030311995, Retrieved from the Internet: URL:https://dms.mpeg.expert/doc_end_user/d ocuments/143_Geneva/wg11/MDS23041_WG07_N00 648.zip MDS23041_WG07_N00648_v1.docx [retrieved on 2023-10-04] | 1,3-10, 12-15 | INV. G06T9/00 G06T9/40 H04N19/597 |
| A | * page 109, paragraph 10.12.4 * | 2,11 | |
| X,P | LASSERRE (OFINNO) S ET AL: "[GPCC][EE13.70] On completely local and improved entropy coding in RAHT", 148. MPEG MEETING; 20241104 - 20241108; KEMER; (MOTION PICTURE EXPERT GROUP OR ISO/IEC JTC1/SC29/WG11), , no. m69574 26 October 2024 (2024-10-26), XP030327814, Retrieved from the Internet: URL:Invehttps://dms.mpeg.expert/doc_end_us er/documents/148_Kemer/wg11/m69574-v1-m695 74%5BGPCC%5D%5BEE13.70%5DOncompletelylocal andimprovedentropycodinginRAHT.docx.zip m69574 [GPCC][EE13.70] On completely local and improved entropy coding in RAHT.pptx [retrieved on 2024-10-26] * page 7 * | 1-15 | |
| | | | **TECHNICAL FIELDS SEARCHED (IPC)** |
| | | | G06T H04N |

The present search report has been drawn up for all claims

| Place of search | Date of completion of the search | Examiner |
|---|---|---|
| Munich | 9 March 2026 | Di Cagno, Gianluca |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63709659